# EUROPÄISCHE PATENTSCHRIFT

(11) **EP 0 775 776 B1**
(45) Veröffentlichungstag und Bekanntmachung des Hinweises auf die Patenterteilung: **02.01.2003**
(21) Anmeldenummer: 96810797.9
(22) Anmeldetag: 14.11.1996
(51) Int. Cl.: D06P 1/38, D06P 3/10, C09B 62/06, C09B 62/467, C09B 62/505, C09B 62/004, C09B 62/44, C09B 67/00, D06P 1/382

(54) **Verfahren zum Di- oder Trichromie-Färben oder -Bedrucken**
Process for di- or trichromic dyeing or printing
Procédé de teinture ou d'impression en di- ou trichromie

(30) Priorität: 23.11.1995 CH 331595
(43) Veröffentlichungstag der Anmeldung: 28.05.1997
(60) Teilanmeldung: 02013596.8
(73) Patentinhaber: Ciba Specialty Chemicals Holding Inc., 4057 Basel (CH)
(72) Erfinder: Lehmann, Urs, 4052 Basel (CH); Frick, Marcel, 4153 Reinach (CH); Hannemann, Klaus, 79540 Lörrach (DE)

(56) Entgegenhaltungen:
- EP-A- 0 501 252
- EP-A- 0 708 150
- EP-B- 0 070 807
- JP-A- 50 157 442
- US-A- 4 754 023
- US-A- 4 876 334
- US-A- 5 256 774

## Beschreibung

Die vorliegende Erfindung betrifft ein Verfahren zum Di- oder Trichromie-Färben oder -Bedrucken.

EP-A-0 501 252 beschreibt Anthrachinonfarbstoffe, die in Abmischung mit anderen Farbstoffen für eine Trichromiefärbung von z.B. Polyamidfasem verwendet werden können. Das Dokument beschreibt auch mehrere sulfogruppenhaltige, faserreaktive, gelb-, orangeoder rotfärbende Azo-Farbstoffe.

Die der vorliegenden Erfindung zugrundeliegende Aufgabe war es, ein Verfahren zum Färben oder Bedrucken von natürlichen und synthetischen Polyamidfasermaterialien mit zur Kombination nach dem Dichromie-Prinzip, insbesondere nach dem Trichromie-Prinzip geeigneten Farbstoffen zu finden.

Es wurde nun gefunden, dass man diese Aufgabe erfindungsgemäss durch das nachfolgend beschriebene Verfahren lösen kann. Die so erhaltenen Färbungen genügen den gestellten Aufgaben. Insbesondere zeichnen sich die erhaltenen Färbungen durch einen gleichmässigen Farbaufbau bei gleichzeitiger Nuancenkonstanz in verschiedenen Konzentrationen und eine gute Kombinierbarkeit aus, und weisen eine gute Faseregalität und keinen Dichroismus auf.

Gegenstand der vorliegenden Erfindung ist ein Verfahren zum Di- oder Trichromie-Färben oder -Bedrucken von natürlichem oder synthetischem Polyamidfasermaterial, welches dadurch gekennzeichnet ist, dass man mindestens einen blaufärbenden, faserreaktiven Anthrachinonfarbstoff der Formel 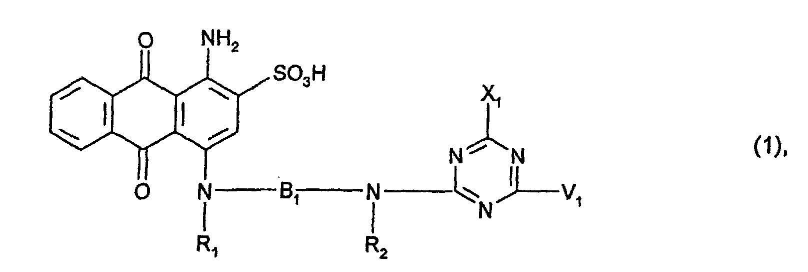 worin
R₁ und R₂ unabhängig voneinander Wasserstoff oder gegebenenfalls substituiertes C₁-C₁₂-Alkyl bedeuten,
X₁ Halogen,
B₁ ein organisches Brückenglied und
V₁ ein Rest der Formel 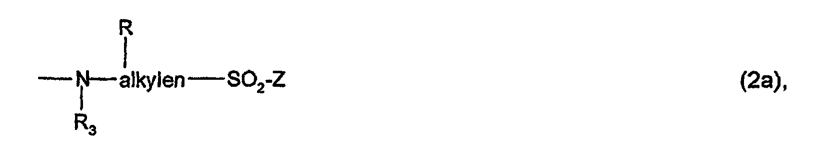 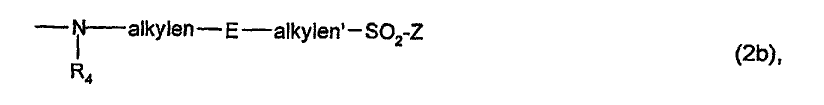 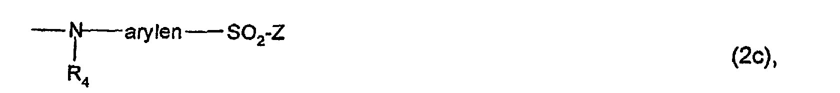 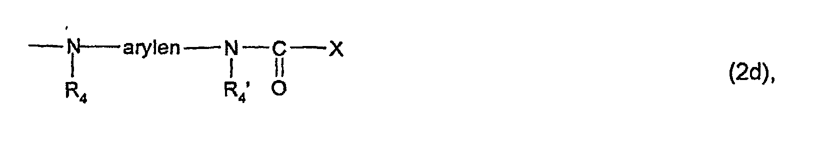 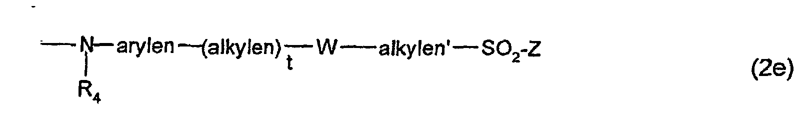 oder 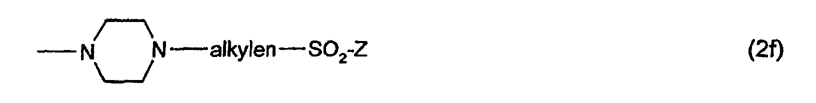 ist, worin
W eine Gruppe der Formel -SO₂-NR₃-, -CONR₃- oder -NR₃CO- ist,
R₃ Wasserstoff, unsubstituiertes oder durch Hydroxy, Sulfo, Sulfato, Carboxy oder Cyano substituiertes C₁-C₄-Alkyl oder ein Rest der Formel 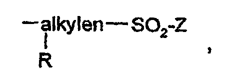 R Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Z ist,
Z der Rest -CH=CH₂ oder -CH₂-CH₂-Y und Y eine Abgangsgruppe ist,
X der Rest 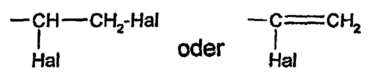 und Hal Halogen ist,
E der Rest -O- oder -NR₅- und R₅ Wasserstoff oder C₁-C₄-Alkyl ist,
alkylen und alkylen' unabhängig voneinander C₁-C₆-Alkylen bedeuten,
arylen einen unsubstituierten oder durch Sulfo, Carboxy, C₁-C₄-Alkyl, C₁-C₄-Alkoxy oder Halogen substituierten Phenylen- oder Naphthylenrest bedeutet,
R₄ und R₄' unabhängig voneinander Wasserstoff oder unsubstituiertes oder durch Carboxy, Cyano, Hydroxy, Sulfo oder Sulfato substituiertes C₁-C₄-Alkyl sind und
t die Zahl 0 oder 1 ist,
zusammen mit mindestens einem sulfogruppenhaltigem, faserreaktivem, gelb- oder orangefärbenden Farbstoff der Formeln 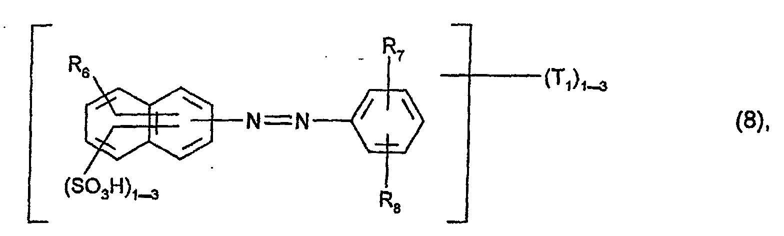 worin
R₆ Wasserstoff, C₁-C₄-Alkyl, C₁-C₄-Alkoxy, C₂-C₄-Alkanoylamino, Amino, N-Mono- oder N,N-Di-C₁-C₄-Alkylamino, Ureido, Halogen, Hydroxy oder Carboxy ist,
R₇ und R₈ unabhängig voneinander Wasserstoff, C₁-C₄-Alkyl, C₁-C₄-Alkoxy,
C₂-C₄-Alkanoylamino, Ureido, Sulfamoyl, Halogen, Sulfo oder Carboxy sind und
(T₁)₁₋₃ für 1 bis 3 gleiche oder voneinander verschiedene faserreaktive Gruppen steht, 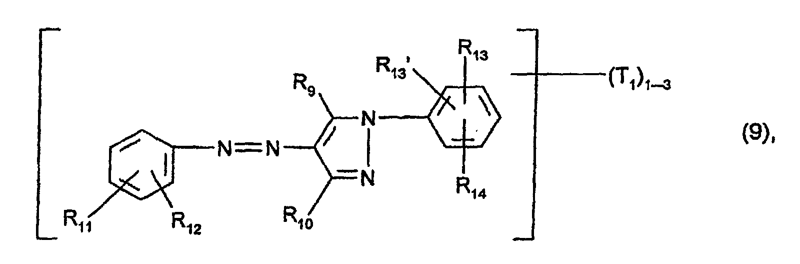 worin R₉ Hydroxy oder Amino, R₁₀ Methyl oder Carboxy ist,
R₁₁, R₁₂, R₁₃, R₁₃' und R₁₄ die oben für R₇ und R₈ angegebenen Bedeutungen haben und R₁₃' zusätzlich β-Hydroxyäthylsulfonyl oder einen Rest der Formel -SO₂Z bedeuten kann und
wobei Z der Rest -CH=CH₂ oder -CH₂-CH₂-Y und Y eine Abgangsgruppe ist,
(T₁)₁₋₃ für 1 bis 3 gleiche oder voneinander verschiedene faserreaktive Gruppen steht und
wobei der Farbstoff der Formel (9) mindestens eine Sulfogruppe enthält, 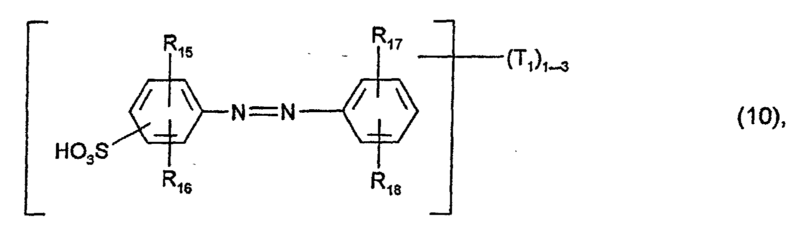 worin R₁₅, R₁₆, R₁₇ und R₁₈ die oben für R₇ und R₈ angegebenen Bedeutungen haben und
(T₁)₁₋₃ für 1 bis 3 gleiche oder voneinander verschiedene faserreaktive Gruppen steht, und 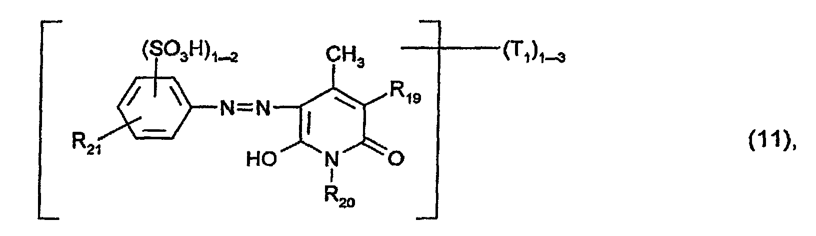 worin R₁₉ Sulfomethyl, Carbamoyl oder Cyano, R₂₀ C₁-C₄-Alkyl ist,
R₂₁ die oben für R₇ und R₈ angegebenen Bedeutungen hat und
(T₁)₁₋₃ für 1 bis 3 gleiche oder voneinander verschiedene faserreaktive Gruppen steht, verwendet, oder
zusammen mit mindestens einem sulfogruppenhaltigem, faserreaktivem, rotfärbenden Farbstoff der Formeln 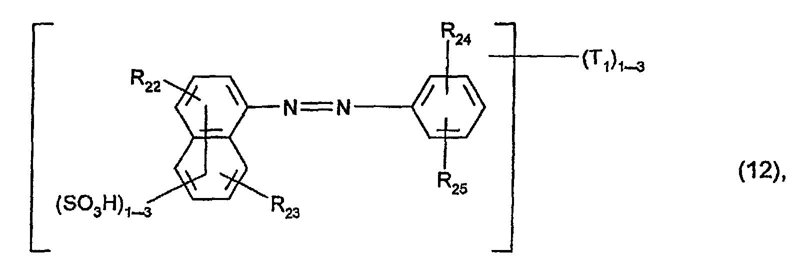 worin R₂₂ Wasserstoff, Amino oder N-Mono- oder N,N-Di-C₁-C₄-Alkylamino,
R₂₃ Wasserstoff oder Hydroxy ist,
R₂₄ und R₂₅ unabhängig voneinander die oben für R₇ und R₈ angegebenen Bedeutungen haben oder gegebenenfalls durch C₁-C₄-Alkyl, C₁-C₄-Alkoxy, C₂-C₄-Alkanoylamino, Ureido, Halogen, Carboxy oder Sulfo substituiertes Phenylsulfonyl sind, und
(T₁)₁₋₃ für 1 bis 3 gleiche oder voneinander verschiedene faserreaktive Gruppen steht, und 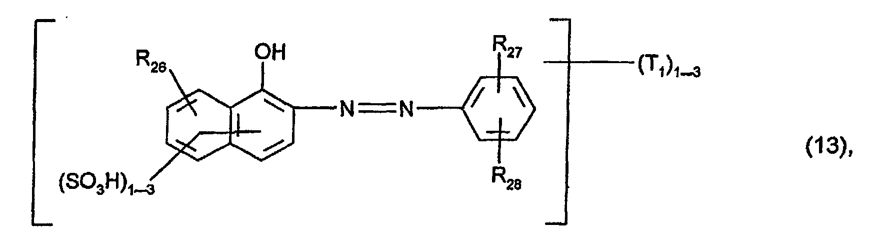 worin R₂₆ Wasserstoff, C₁-C₄Alkyl, C₁-C₄-Alkoxy, C₂-C₄-Alkanoylamino, Amino, N-Mono- oder N,N-Di-C₁-C₄-Alkylamino, Ureido, Halogen, Carboxy oder Phenylcarbonylamino ist, welches gegebenenfalls im Phenylring durch C₁-C₄-Alkyl, C₁-C₄-Alkoxy, C₂-C₄-Alkanoylamino, Ureido, Halogen, Carboxy oder Sulfo weitersubstituiert ist,
R₂₇ und R₂₈ die oben für R₇ und R₈ angegebenen Bedeutungen haben und
(T₁)₁₋₃ für 1 bis 3 gleiche oder voneinander verschiedene faserreaktive Gruppen steht, verwendet.

Bevorzugt sind entsprechende Verfahren zum Trichromie-Färben oder Bedrucken von natürlichem oder synthetischem Polyamidfasermaterial, worin man
mindestens einen blaufärbenden, faserreaktiven Anthrachinonfarbstoff der Formel (1) zusammen mit mindestens einem sulfogruppenhaltigem, faserreaktivem, gelb- oder orangefärbenden Farbstoff der Formeln (8), (9), (10) und (11) und
zusammen mit mindestens einem sulfogruppenhaltigem, faserreaktivem, rotfärbenden Farbstoff der Formeln (12) und (13) verwendet.

Als C₁-C₁₂-Alkylreste kommen für R₁ und R₂ vorzugsweise C₁-C₈-Alkylreste, insbesondere C₁-C₄-Alkylreste, wie z.B. Methyl, Aethyl, Propyl, Isopropyl, Butyl, sek.-Butyl, tert.-Butyl oder Isobutyl in Betracht. Die genannten Alkylreste können unsubstituiert oder z.B. durch Hydroxy, Sulfo oder Sulfato substituiert sein. Bevorzugt sind hierbei die unsubstituierten Reste.

Bevorzugt sind R₁ und R₂ unabhängig voneinander Wasserstoff oder gegebenenfalls durch Hydroxy, Sulfo oder Sulfato substituiertes C₁-C₄-Alkyl, insbesondere Wasserstoff oder C₁-C₄-Alkyl, und vorzugsweise Wasserstoff.

X₁ ist bevorzugt Fluor oder insbesondere Chlor.

Als organisches Brückenglied kommt für B₁ z.B. ein C₂-C₁₂-Alkylenrest, welcher durch 1, 2 oder 3 Glieder aus der Gruppe -NH-, -N(CH₃)- oder -O- unterbrochen sein kann und unsubstituiert oder durch Hydroxy, Sulfo, Sulfato, Cyano oder Carboxy substituiert ist, oder ein C₅-C₉-Cycloalkylenrest, C₁-C₄-Alkylen-C₅-C₉-cycloalkylenrest oder C₁-C₄-Alkylen-C₅-C₉-cycloalkylen-C₁-C₄-alkylenrest, welche gegebenenfalls durch C₁-C₄-Alkyl, C₁-C₄-Alkoxy, Sulfo, Halogen oder Carboxy substituiert sind, oder
ein Phenylenrest, C₁-C₄-Alkylen-phenylenrest oder C₁-C₄-Alkylen-phenylen-C₁-C₄-alkylenrest, welche gegebenenfalls durch C₁-C₄-Alkyl, C₁-C₄-Alkoxy, C₂-C₄-Alkanoylamino, Sulfo, Halogen oder Carboxy substituiert sind, in Betracht. Ferner kann der Rest der Formel -N(R₁)-B₁-N(R₂)-einen Rest der Formel 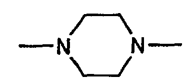 darstellen.

Als Alkylenrest ist B₁ vorzugsweise ein C₂-C₆-Alkylenrest, welcher durch 1, 2 oder 3 Glieder -O- unterbrochen sein kann und unsubstituiert oder durch Hydroxy oder Sulfato substituiert ist. Bevorzugt sind die unsubstituierten Reste, insbesondere der Rest der Formel 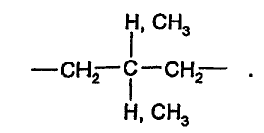 Von besonderem Interesse sind die Reste der Formeln -(CH₂)₃- und -CH₂-C(CH₃)₂-CH₂-.

Als cycloalkylenhaltige Reste sind für B₁ die entsprechenden cyclohexylenhaltigen Reste bevorzugt, welche insbesondere unsubstituiert oder durch C₁-C₄-Alkyl substituiert sind. Besonders bevorzugt ist hierbei ein gegebenenfalls durch C₁-C₄-Alkyl substituierter Cyclohexylenrest oder Methylen-cyclohexylenrest, insbesondere ein gegebenenfalls durch C₁-C₄-Alkyl substituierter Methylen-cyclohexylenrest.

Als phenylenhaltige Reste sind für B₁ die entsprechenden gegebenenfalls durch C₁-C₄-Alkyl, C₁-C₄-Alkoxy, Halogen oder Sulfo substituierten Reste bevorzugt. Besonders bevorzugt sind gegebenenfalls durch C₁-C₄-Alkyl, C₁-C₄-Alkoxy, Halogen oder Sulfo substituiertes Phenylen oder Methylen-phenylen-methylen. Ganz besonders bevorzugt sind Reste der Formel

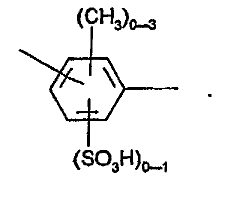

Bevorzugt ist B₁ ein C₂-C₆-Alkylenrest, welcher durch 1, 2 oder 3 Glieder -O- unterbrochen sein kann und unsubstituiert oder durch Hydroxy oder Sufato substituiert ist, oder ein gegebenenfalls durch C₁-C₄-Alkyl substituierter Cyclohexylenrest oder Methylen-cyclohexylenrest, oder
ein gegebenenfalls durch C₁-C₄-Alkyl, C₁-C₄-Alkoxy, Halogen oder Sulfo substituierter Phenylen oder Methylen-phenylen-methylenrest.

Besonders bevorzugt ist B₁ ein C₂-C₆-Alkylenrest, ein gegebenenfalls durch C₁-C₄-Alkyl substituierter Methylen-cyclohexylenrest oder ein gegebenenfalls durch C₁-C₄-Alkyl, C₁-C₄-Alkoxy, Halogen oder Sulfo substituierter Phenylen oder
Methylen-phenylen-methylenrest.

Ganz besonders bevorzugt ist B₁

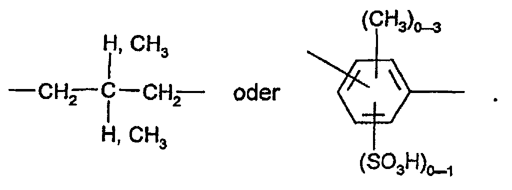

Bei alkylen und alkylen' handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alkylen und alkylen' für einen C₁-C₄-Alkylenrest, vorzugsweise einen Rest der Formel -(CH₂)₂₋₃- und insbesondere bevorzugt für einen Äthylenrest.

R bedeutet bevorzugt Wasserstoff oder die Gruppe -SO₂-Z, wobei für Z die zuvor angegebenen Bedeutungen und Bevorzugungen gelten. Besonders bevorzugt steht R für Wasserstoff.

R₃ ist vorzugsweise Wasserstoff, C₁-C₄-Alkyl oder eine Gruppe -alkylen-SO₂-Z, worin alkylen und Z jeweils die zuvor angegebenen Bedeutungen haben. Besonders bevorzugt ist R₃ Wasserstoff oder C₁-C₄-Alkyl, insbesondere Wasserstoff.

R₄ und R₄' sind vorzugsweise Wasserstoff oder ein C₁-C₄-Alkylrest und insbesondere bevorzugt Wasserstoff.

R₅ ist bevorzugt Wasserstoff.

Arylen ist vorzugsweise ein Phenylenrest, welcher unsubstituiert oder z.B. durch Sulfo, C₁-C₄-Alkyl, C₁-C₄-Alkoxy oder Halogen, insbesondere durch Sulfo, substituiert ist. Bevorzugt ist arylen ein 1,3- oder 1,4-Phenylenrest, der unsubstituiert oder z.B. durch Sulfo, Methyl oder Methoxy, insbesondere durch Sulfo, substituiert ist.

E steht vorzugsweise für -NH- und insbesondere bevorzugt für -O-.

W bedeutet bevorzugt eine Gruppe der Formel -NHCO- oder insbesondere -CONH-.

Hal steht bevorzugt für Chlor oder insbesondere Brom.

Bei der Abgangsgruppe Y handelt es sich z.B. um -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂. Bevorzugt ist Y eine Gruppe der Formel -Cl, -OSO₃H, -SSO₃H, -OCO-CH₃, -OCO-C₆H₅ oder -OPO₃H₂, insbesondere -Cl, -OSO₃H oder -OCO-CH₃ und besonders bevorzugt -Cl oder -OSO₃H. Ganz besonders bevorzugt ist Y eine Gruppe der Formel -OSO₃H.

t ist bevorzugt die Zahl 0.

Als Reste V₁ sind solche bevorzugt, worin
W eine Gruppe der Formel -CONH- ist,
R, R₃, R₄ und R₄' Wasserstoff bedeuten,
Y -Cl, -OSO₃H oder -OCO-CH₃, insbesondere -Cl oder -OSO₃H, ist,
Hal Chlor oder insbesondere Brom,
E der Rest -O-,
arylen ein unsubstituierter oder durch Sulfo, Carboxy, C₁-C₄-Alkyl, C₁-C₄-Alkoxy oder Halogen, vorzugsweise durch Sulfo, substituierter Phenylenrest, und
t die Zahl 0 ist.

Als Rest V₁ der Formel (2a) sind solche der Formel

-NH-(CH₂)₂₋₃-SO₂Z (3a),

als Rest V₁ der Formel (2b) solche der Formel

-NH-(CH₂)₂₋₃-O-(CH₂)₂₋₃-SO₂Z (3b),

als Rest V₁ der Formel (2c) solche der Formel 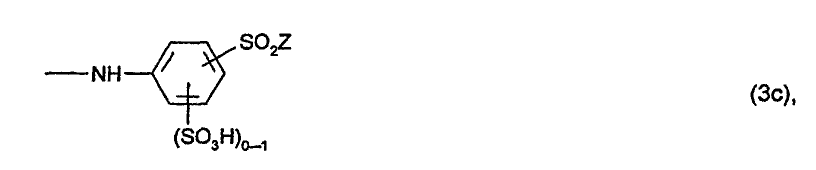 als Rest V₁ der Formel (2d) solche der Formel 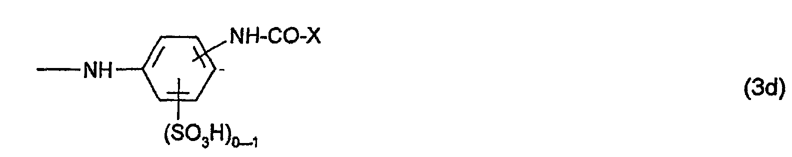 und als Rest V₁ der Formel (2e) solche der Formel 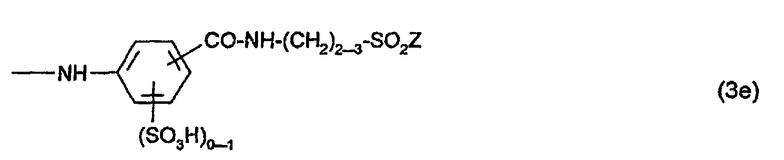 bevorzugt, wobei für die Reste X und Z die oben angegebenen Bedeutungen und Bevorzugungen gelten.

Besonders bevorzugt ist V₁ ein Rest der Formeln (2a) bis (2e), insbesondere ein Rest der Formeln (3a) bis (3e).

Ganz besonders bevorzugt ist V₁ ein Rest der Formeln (2a), (2b), (2d) oder (2e), insbesondere ein Rest der Formeln (3a), (3b), (3d) oder (3e).

Besonders wichtig sind als Reste V₁ solche der Formeln (2b) und (2d), insbesondere solche der Formeln (3b) und (3d).

Ganz besonders wichtig sind als Reste V₁ solche der Formel (2d), insbesondere solche der Formel (3d).

Bevorzugt verwendet man als blaufärbenden, faserreaktiven Anthrachinonfarbstoff der Formel (1) einen Anthrachinonfarbstoff der Formel 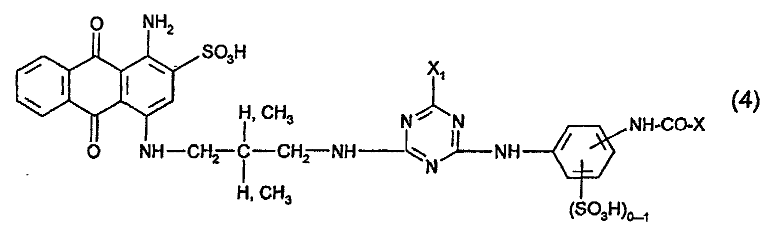 oder 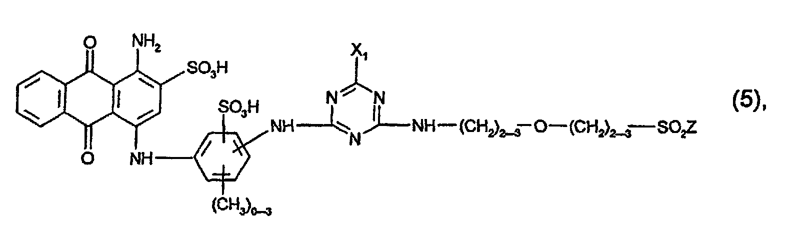 wobei für X₁, X und Z die oben angegebenen Bedeutungen und Bevorzugungen gelten. Vorzugsweise ist X₁ Fluor oder insbesondere Chlor,
X der Rest 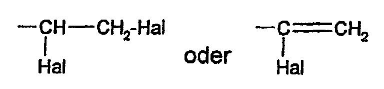 und Hal Chlor oder insbesondere Brom, und
Z der Rest -CH=CH₂ oder -CH₂-CH₂-Y und Y Y-OCO-CH₃ oder insbesondere -Cl oder -OSO₃H. Besonders bevorzugt sind hierbei Anthrachinonfarbstoffe der Formel (4).

T₁ ist bevorzugt eine faserreaktive Gruppe der Formel

-SO₂Z (6a),

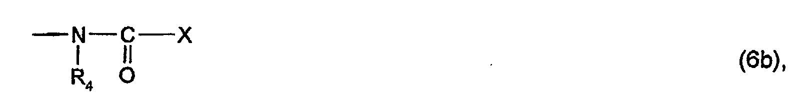

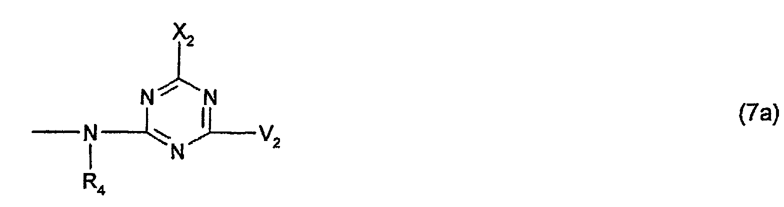

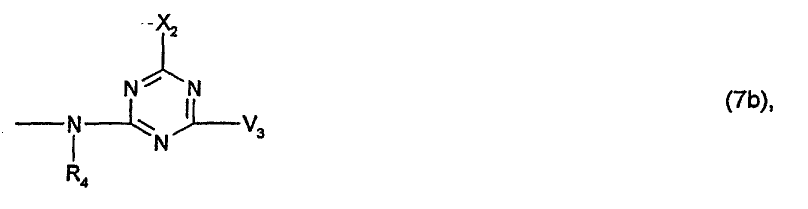

wobei für R₄ und Z die oben angegebenen Bedeutungen und Bevorzugungen gelten, für V₂ die oben für V₁ angegebenen Bedeutungen und Bevorzugungen gelten, X₂ Fluor oder insbesondere Chlor ist und V₃ ein nicht-reaktiver Substituent ist.

V₂ ist bevorzugt ein Rest der Formel (2b), (2c), (2d) oder (2e), insbesondere ein Rest der Formel (2c), (2d) oder (2e) und vorzugsweise ein Rest der Formel (2c) oder (2d). Ganz besonders bevorzugt ist V₂ ein Rest der Formel (2d).

V₃ ist z.B. ein Hydroxy-, C₁-C₄-Alkoxy-, C₁-C₄-Alkylthio-, Amino-, N-C₁-C₄-Alkylamino- oder N,N-Di-C₁-C₄-Alkylamino-, wobei das Alkyl gegebenenfalls z.B. durch Sulfo, Sulfato, Hydroxy, Carboxy oder Phenyl substituiert ist, Cyclohexylamino-, Morpholino-, oder N-C₁-C₄-Alkyl-N-phenylamino- oder Phenylamino- oder Naphthylaminorest, wobei das Phenyl oder Naphthyl gegebenenfalls z.B. durch C₁-C₄-Alkyl, C₁-C₄-Alkoxy, Carboxy, Sulfo oder Halogen substituiert ist.

V₃ hat vorzugsweise die Bedeutung Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Methyl oder Methoxy substituiert ist. Besonders bevorzugt sind die Bedeutungen als Phenylamino oder insbesondere N-C₁-C₄-Alkyl-N-phenylamino, worin das Phenyl jeweils unsubstituiert oder durch Sulfo, Carboxy, Methyl oder Methoxy substituiert ist.

Besonders bevorzugte faserreaktive Gruppen sind solche der Formeln (6a), (6b) und (7a), insbesondere solche der Formeln (6b) und (7a) und vorzugsweise solche der Formel (7a). Hierbei gelten für die genannten faserreaktiven Gruppen die oben angegebenen Bedeutungen und Bevorzugungen.

Vorzugsweise enthalten die Farbstoffe der Formeln (8) bis (13) jeweils einen oder zwei Reste T₁, insbesondere nur einen Rest T₁.

Als Farbstoffe der Formel (8) kommen insbesondere solche in Betracht, welche im Naphthylrest nur eine oder zwei, vorzugsweise zwei, Sulfogruppen enthalten. R₆ ist bevorzugt Wasserstoff, C₁-C₄-Alkyl, C₁-C₄-Alkoxy oder Halogen, insbesondere Wasserstoff. R₇ ist bevorzugt Wasserstoff, C₁-C₄-Alkyl, C₁-C₄-Alkoxy, C₂-C₄-Alkanoylamino, Ureido, Halogen oder Sulfo, insbesondere Wasserstoff, C₁-C₄-Alkyl, C₁-C₄-Alkoxy, C₂-C₄-Alkanoylamino, Ureido oder Halogen. R₈ ist bevorzugt Wasserstoff. Vorzugsweise enthalten die Farbstoffe der Formel (8) insgesamt nur zwei Sulfogruppen.

Besonders bevorzugt als Farbstoffe der Formel (8) sind solche der Formel 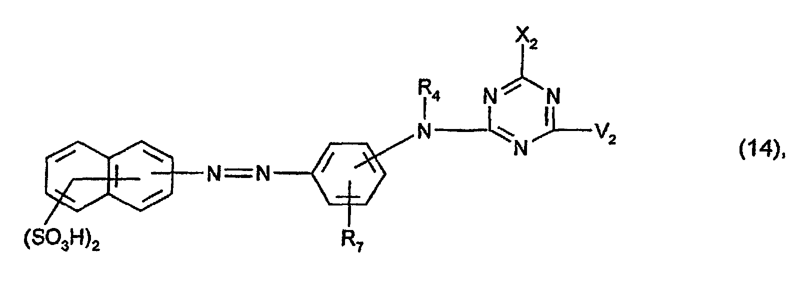 worin für R₇, R₄, X₂ und V₂ die oben angegebenen Bedeutungen und Bevorzugungen gelten.

Ganz besonders bevorzugt als Farbstoffe der Formel (8) sind solche der Formeln 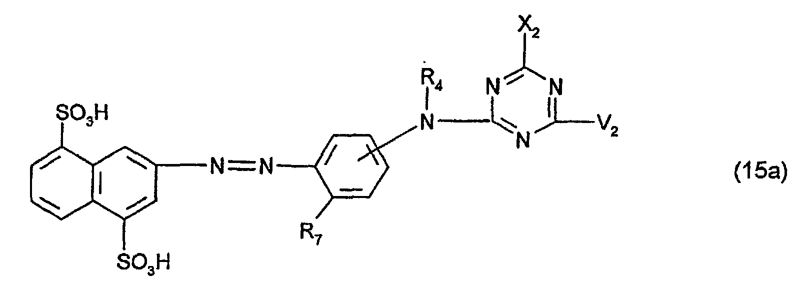 und 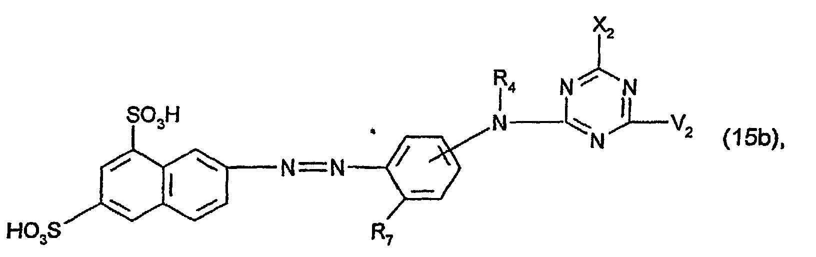 worin für R₇, R₄, X₂ und V₂ die oben angegebenen Bedeutungen und Bevorzugungen gelten.

Von Interesse als Farbstoffe der Formel (8) sind ferner solche der Formel 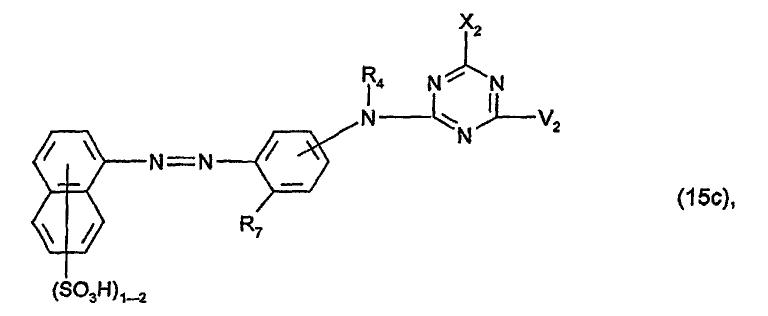 worin für R₇, R₄, X₂ und V₂ die oben angegebenen Bedeutungen und Bevorzugungen gelten. Vorzugsweise enthält der Farbstoff der Formel (15c) im eingezeichneten Naphthylring nur eine Sulfogruppe.

Als Farbstoffe der Formel (9) kommen insbesondere solche in Betracht, worin R₁₀ Methyl ist. R₁₁ ist bevorzugt Sulfo. R₁₃' ist vorzugsweise Wasserstoff, Halogen oder Sulfo, insbesondere Wasserstoff. Vorzugsweise enthalten die Farbstoffe der Formel (9) insgesamt nur eine oder zwei Sulfogruppen.

Besonders bevorzugt als Farbstoffe der Formel (9) sind solche der Formel 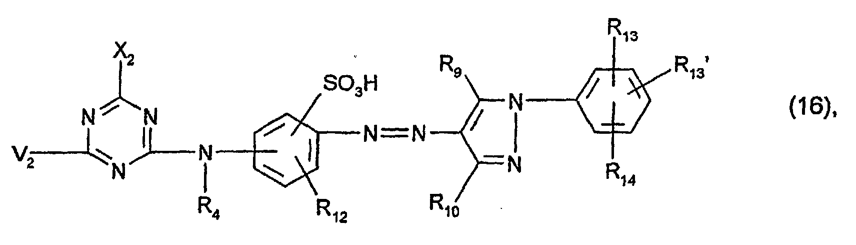 worin für R₄, R₉, R₁₀, R₁₂, R₁₃, R₁₃', R₁₄, X₂ und V₂ die oben angegebenen Bedeutungen und Bevorzugungen gelten. Vorzugsweise ist R₁₃' Wasserstoff, C₁-C₄-Alkyl, C₁-C₄-Alkoxy, C₂-C₄-Alkanoylamino, Ureido, Sulfamoyl, Halogen, Sulfo oder Carboxy. R₁₂, R₁₃, R₁₃' und R₁₄ sind insbesondere Wasserstoff, Halogen oder Sulfo, insbesondere Wasserstoff.

Ganz besonders bevorzugt als Farbstoffe der Formel (9) sind solche der Formel 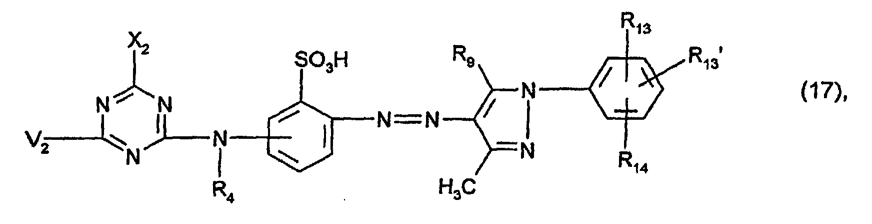 worin für R₄, R₉, R₁₃, R₁₃', R₁₄, X₂ und V₂ die oben angegebenen Bedeutungen und Bevorzugungen gelten.

Interessante Farbstoffe der Formel (9) sind ferner solche der Formel 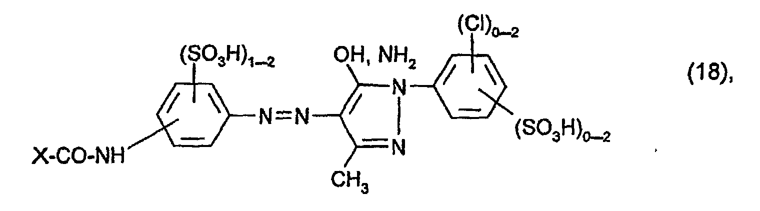 worin für X die oben angegebenen Bedeutungen und Bevorzugungen gelten.

Als Farbstoffe der Formel (10) kommen insbesondere solche in Betracht, worin R₁₅, R₁₆, R₁₇ und R₁₈ unabhängig voneinander Wasserstoff, C₁-C₄-Alkyl, C₁-C₄-Alkoxy, C₂-C₄-Alkanoylamino, Halogen oder Ureido sind. Bevorzugt sind R₁₅, R₁₆ und R₁₇ Wasserstoff. R₁₈ ist bevorzugt C₂-C₄-Alkanoylamino. Vorzugsweise enthalten die Farbstoffe der Formel (10) insgesamt nur eine oder zwei Sulfogruppen.

Als Farbstoffe der Formel (11) kommen insbesondere solche in Betracht, worin R₁₉ Carbamoyl ist. R₂₀ ist bevorzugt Aethyl. Vorzugsweise enthalten die Farbstoffe der Formel (11) insgesamt nur zwei Sulfogruppen.

Als Farbstoffe der Formel (12) kommen insbesondere solche in Betracht, worin R₂₂ Amino oder N-Mono- oder N,N-Di-C₁-C₄-Alkylamino ist. R₂₃ ist vorzugsweise Hydroxy. Für R₂₄ und R₂₅ gelten die oben für R₇ genannten Bevorzugungen. Besonders bevorzugt sind R₂₄ und R₂₅ Wasserstoff oder Sulfo. Vorzugsweise enthalten die Farbstoffe der Formel (12) insgesamt nur eine oder zwei Sulfogruppen.

Interessante Farbstoffe der Formel (12) sind ferner solche, worin R₂₂ Amino ist, R₂₃ und R₂₄ Wasserstoff sind und R₂₅ gegebenenfalls durch C₁-C₄-Alkyl, C₁-C₄-Alkoxy, Halogen oder Sulfo substituiertes Phenylsulfonyl ist. In diesem Fall enthält der Farbstoff nur einen Rest T₁, welcher ein Rest der Formel (6b) ist, und der Farbstoff enthält nur zwei Sulfogruppen.

Besonders bevorzugt als Farbstoffe der Formel (12) sind solche der Formel 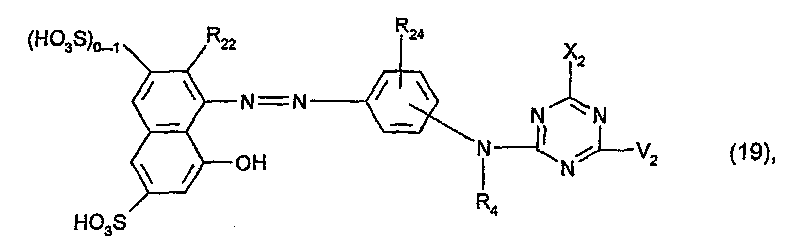 worin für R₄, R₂₂, R₂₄, X₂ und V₂ die oben angegebenen Bedeutungen und Bevorzugungen gelten. R₂₂ ist vorzugsweise Amino oder N-Mono- oder N,N-Di-C₁-C₄-Alkylamino.

Ganz besonders bevorzugt als Farbstoffe der Formel (12) sind solche der Formel 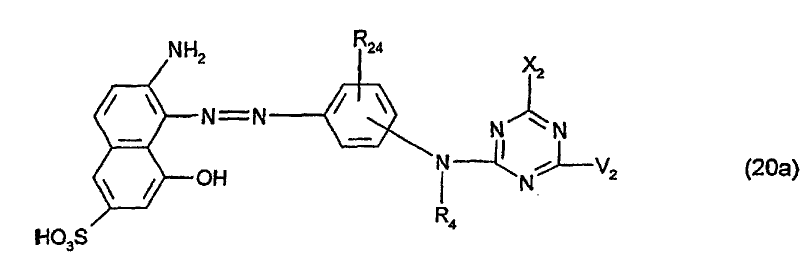 und 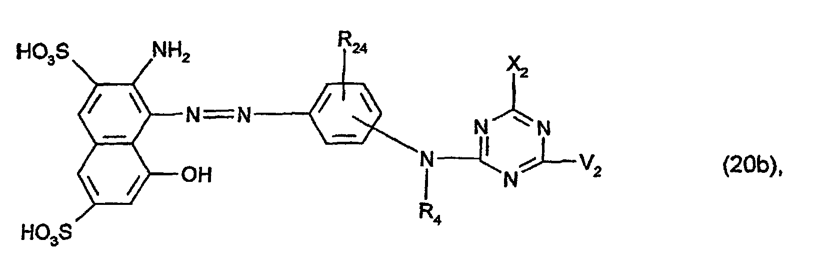 worin R₂₄ Wasserstoff oder Sulfo ist und für R₄, X₂ und V₂ die oben angegebenen Bedeutungen und Bevorzugungen gelten. Im Farbstoff der Formel (20b) bedeutet R₂₄ bevorzugt Wasserstoff. Von besonderem Interesse ist hierbei der Farbstoff der Formel (20a).

Interessante Farbstoffe der Formel (12) sind ferner solche der Formel 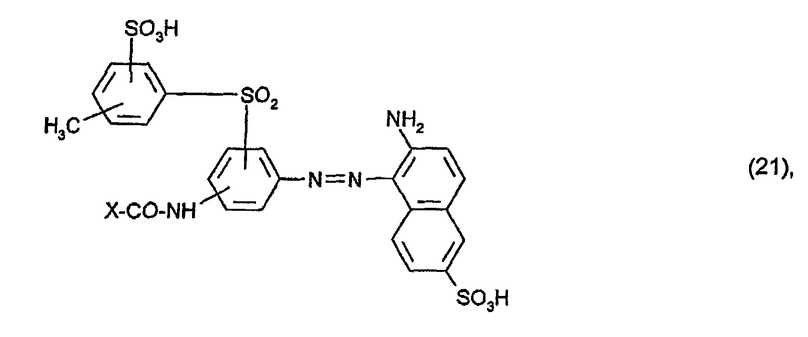 worin für X die oben angegebenen Bedeutungen und Bevorzugungen gelten.

Als Farbstoffe der Formel (13) kommen insbesondere solche in Betracht, worin R₂₆ Wasserstoff, C₂-C₄-Alkanoylamino, Amino, N-Mono- oder N,N-Di-C₁-C₄-Alkylamino, Ureido, Halogen oder Phenylcarbonylamino ist, welches gegebenenfalls im Phenylring durch C₁-C₄-Alkyl, C₁-C₄-Alkoxy, C₂-C₄-Alkanoylamino, Halogen oder Sulfo weitersubstituiert ist. R₂₇ ist bevorzugt Wasserstoff und R₂₈ ist bevorzugt Wasserstoff oder Sulfo.

In dem erfindungsgemässen Verfahren verwendet man bevorzugt mindestens einen gelboder orangefärbenden Farbstoff der Formeln (8) bis (11) zusammen mit mindestens einem rotfärbendem Farbstoff der Formeln (12) und (13). Besonders bevorzugt verwendet man mindestens einen Farbstoff der Formeln (8) und (9) zusammen mit mindestens einem Farbstoff der Formel (12). Hierbei gelten für die Farbstoffe der Formeln (8) bis (13) die oben angegebenen Bedeutungen und Bevorzugungen.

Ganz besonders bevorzugt verwendet man mindestens einen gelb- oder orangefärbenden Farbstoff der Formeln (14) und (16), insbesondere der Formeln (15a), (15b) und (17), zusammen mit mindestens einem rotfärbenden Farbstoff der Formel (19), insbesondere der Formeln (20a) und (20b).

Gemäss einer interessanten Ausführungsform verwendet man mindestens einen gelb- oder orangefärbenden Farbstoff der Formel (18) zusammen mit mindestens einem rotfärbenden Farbstoff der Formel (21).

Für die zusammen mit den gelb- oder orange- und rotfärbenden Farbstoffen zu verwendenden Anthrachinonfarbstoffe der Formel (1) gelten hierbei die oben angegebenen Bedeutungen und Bevorzugungen, wobei Anthrachinonfarbstoffe der Formel (5) und insbesondere der Formel (4) von besonderer Bedeutung sind.

Die in dem erfindungsgemässen Verfahren zum Di- oder Trichromie-Färben oder -Bedrucken verwendeten Anthrachinonfarbstoffe der Formel (1) sind bekannt und können in Analogie zu bekannten Farbstoffen hergestellt werden, z.B. indem man Verbindungen der Formeln 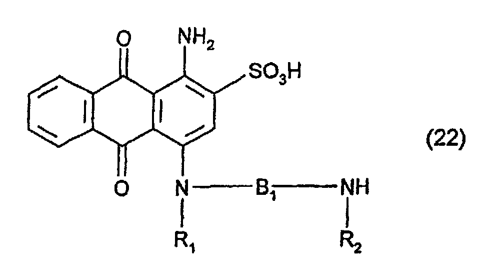 und

H-V₁ (23)

mit Cyanurhalogenid umsetzt, wobei für R₁, R₂, B₁ und V₁ die oben angegebenen Bedeutungen gelten.

Da die einzelnen oben angegebenen Verfahrensschritte in unterschiedlicher Reihenfolge, gegebenenfalls auch gleichzeitig, ausgeführt werden können, sind verschiedene Verfahrensvarianten möglich. Im allgemeinen führt man die Umsetzung schrittweise durch, wobei sich die Reihenfolge der einfachen Reaktionen zwischen den einzelnen Reaktionskomponenten vorteilhafterweise nach den besonderen Bedingungen richtet. So wird z.B. eine Verbindung der Formel (22) mit Cyanurhalogenid umgesetzt und das erhaltene Produkt anschliessend mit einer Verbindung der Formel (23) kondensiert. Ferner kann eine Verbindung der Formel (23) mit Cyanurhalogenid umgesetzt und das erhaltene Produkt anschliessend mit einer Verbindung der Formel (22) kondensiert werden.

Die einzelnen Kondensationsreaktionen erfolgen z.B. gemäss an sich bekannter Verfahren, in der Regel in wässriger Lösung, bei einer Temperatur von z.B. 0 bis 50°C, insbesondere 0 bis 10°C, und einem pH-Wert von z.B. 3 bis 10, insbesondere 3 bis 8.

Ausserdem können im Anschluss an die Synthese Umwandlungsreaktionen ausgeführt werden. Beispielsweise kann man Anthrachinonfarbstoffe der Formel (1), welche Sulfatoäthylsulfonylreste oder α,β-Dihalogenpropionylaminoreste enthalten, mit einer Base, wie z.B. Natriumhydroxid, behandeln, wobei die Sulfatoäthylsulfonylreste in Vinylsulfonylreste und die α,β-Dihalogenpropionylaminoreste in α-Halogenacryloylaminoreste übergehen.

Die Farbstoffe der Formeln (8) bis (13) sind bekannt oder können in Analogie zu bekannten Farbstoffen hergestellt werden. So können die Farbstoffe der Formeln (8) bis (13) z.B. durch Diazotierung der folgenden Amine und Kupplung auf die folgenden Kupplungskomponenten hergestellt werden:

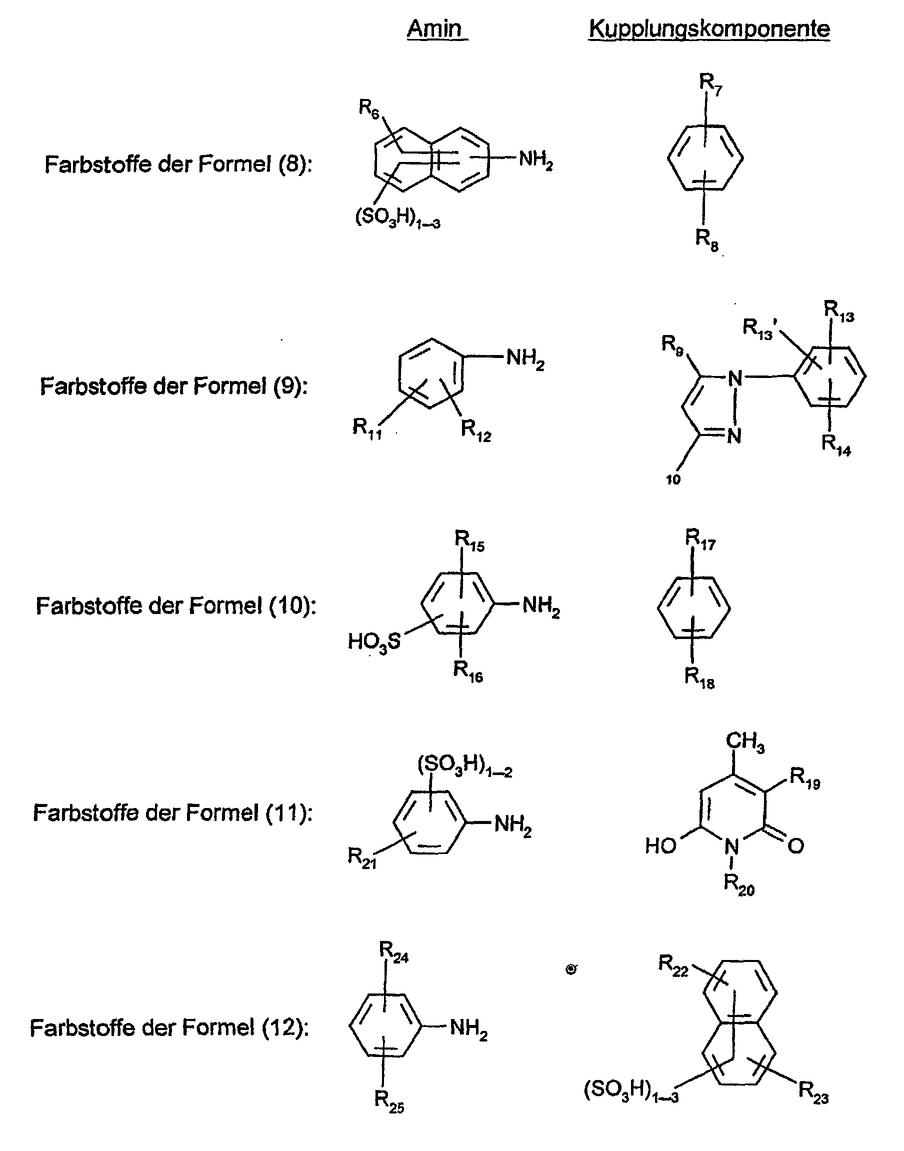

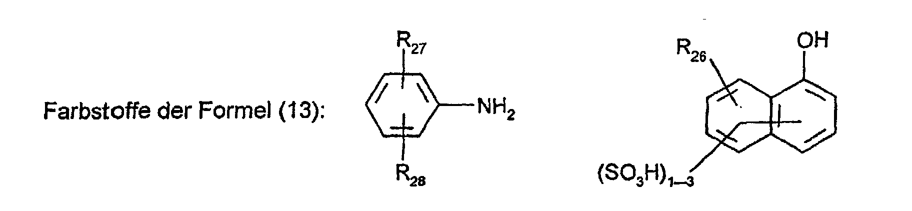

Die oben für die einzelnen Farbstoffe der Formeln (8) bis (13) angegebenen Amine und Kupplungskomponenten enthalten zusammen zusätzlich 1 bis 3 Reste T₁.

Die Diazotierung der Amine erfolgt in der Regel durch Einwirken salpetriger Säure in wässrig-mineralsaurer Lösung bei tiefer Temperatur, wie z.B. 0 bis 15°C, die Kupplung auf die jeweilige Kupplungskomponente bei sauren, neutralen bis schwach alkalischen pH-Werten, insbesondere bei einem pH-Wert von 2 bis 8.

Ferner können Farbstoffe der Formeln (8) bis (13), worin T₁ ein Rest der obigen Formel (7a) oder (7b) ist, durch Kondensation eines aminogruppenhaltigen Farbstoffes mit Cyanurhalogenid und einem Rest der Formel H-V₂ oder H-V₃ erhalten werden. Die einzelnen Kondensationen können hierbei gemäss den oben für die Herstellung der Anthrachinonfarbstoffe angegebenen Bedingungen erfolgen.

Die in dem ertndungsgemässen Verfahren zum Di- oder Trichromie-Färben oder -Bedrucken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die in dem erfindungsgemässen Verfahren verwendeten Farbstoffe können weitere Zusätze wie z.B. Kochsalz oder Dextrin enthalten.

Das erfindungsgemässe Verfahren zum Di- oder Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die Mengen, in denen die einzelnen Farbstoffe in den Färbebädern oder Druckpasten verwendet werden, können je nach der gewünschten Farbtiefe in weiten Grenzen schwanken, im allgemeinen haben sich Mengen von 0,01 bis 15 Gew.-%, insbesondere 0,1 bis 10 Gew.-%, bezogen auf das Färbegut bzw. die Druckpaste, als vorteilhaft erwiesen.

Bevorzugt ist das Färben, welches insbesondere nach dem Ausziehverfahren erfolgt.

Vorzugsweise färbt man bei einem pH-Wert von 3 bis 7, insbesondere 4 bis 6. Das Flottenverhältnis kann innerhalb eines weiten Bereichs gewählt werden, z.B. von 1:5 bis 1:50, vorzugsweise 1:5 bis 1:30. Vorzugsweise färbt man bei einer Temperatur von 70 bis 110°C, insbesondere 80 bis 105°C.

Zur Erhöhung der Nassechtheiten kann, zur Entfernung von allfällig nicht fixierten Farbstoffs, eine Nachbehandlung bei einem pH-Wert von z.B. 8 bis 9 und einer Temperatur von z.B. 75 bis 85°C durchgeführt werden.

Die in dem endungsgemässen Verfahren verwendeten Farbstoffe zeichnen sich beim Dioder Trichromie-Färben oder -Bedrucken durch gleichmässigen Farbaufbau, gutes Aufziehund Fixierverhalten, gute Nuancenkonstanz auch in verschiedenen Konzentrationen, gute Echtheiten sowie insbesondere durch sehr gute Kombinierbarkeit aus.

Das erfindungsgemässe Verfahren zum Di- oder Trichromie-Färben oder -Bedrucken eignet sich zum Färben oder Bedrucken sowohl von natürlichen Polyamidfasermaterialien wie z.B. Wolle, wie auch von synthetischen Polyamidfasermaterialien, wie z.B. Polyamid 6 oder Polyamid 6.6, und sind geeignet zum Färben oder Bedrucken von Woll- und synthetischem Polyamid-Mischgeweben oder -Garnen. Bevorzugt ist das Färben oder Bedrucken von natürlichen Polyamidfasermaterialien, insbesondere von Wolle und vorzugsweise von waschmaschinenfest-ausgerüsteter Wolle.

Das genannte Textilmaterial kann dabei in den verschiedensten Verarbeitungsformen vorliegen, wie z.B. als Faser, Garn, Gewebe oder Gewirke und insbesondere in Form von Teppichen.

Es werden egale Färbungen mit guten Allgemeinechtheiten, insbesondere guter Reib-, Nass, Nassreib- und Lichtechtheit erhalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Beispiel 1: Es werden 0,57 Teile des gelbfärbenden Farbstoffs der Formel

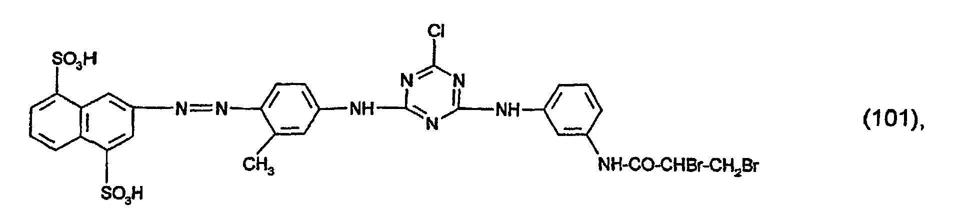

0,53 Teile des rotfärbenden Farbstoffs der Formel 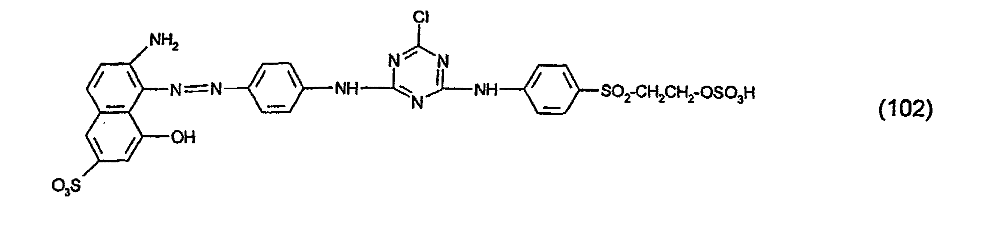 und 0,65 Teile des blaufärbenden Farbstoffs der Formel 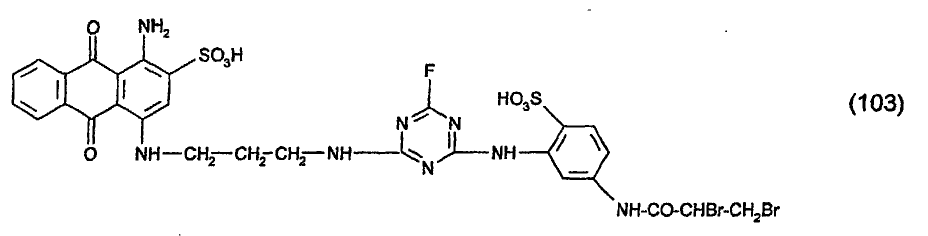 in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschliessend geschleudert und getrocknet. Man erhält eine braune Färbung, die gute Licht- und Nassechtheiten sowie eine gute Faseregalität aufweist.

Beispiele 2 bis 97: Verfährt man wie in Beispiel 1 angegeben, verwendet jedoch anstelle von 0,57 Teilen des gelbfärbenden Farbstoffs der Formel (101), 0,53 Teilen des rotfärbenden Farbstoffs der Formel (102) und 0,65 Teilen des blaufärbenden Farbstoffs der Formel (103) die in der folgenden Tabelle 1 in Spalte 2 angegebenen Farbstoffe in den dort angegebenen Mengen, so werden ebenfalls braune Färbungen erhalten.

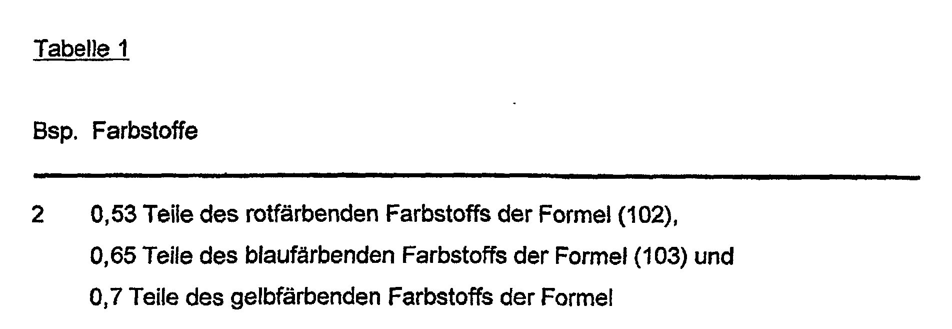

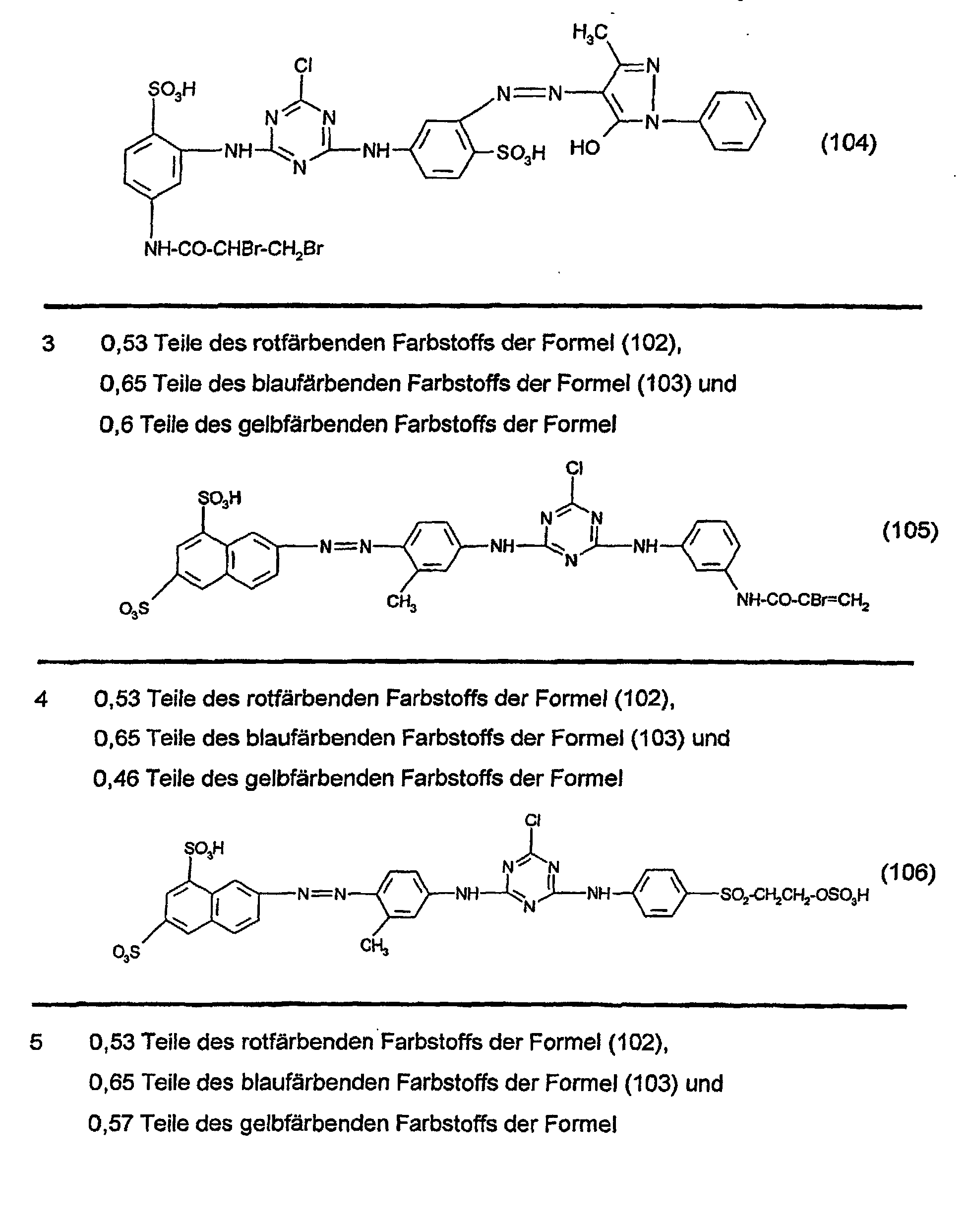

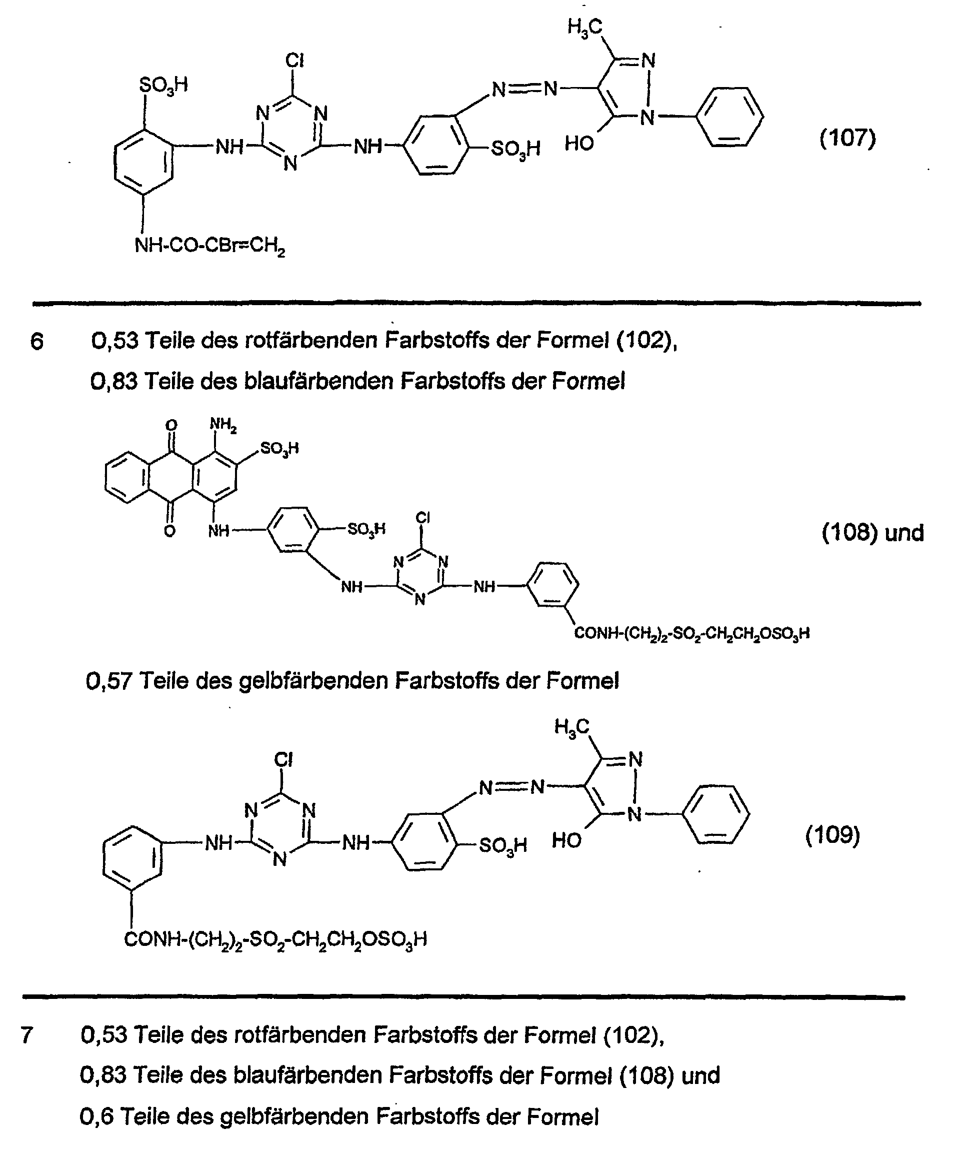

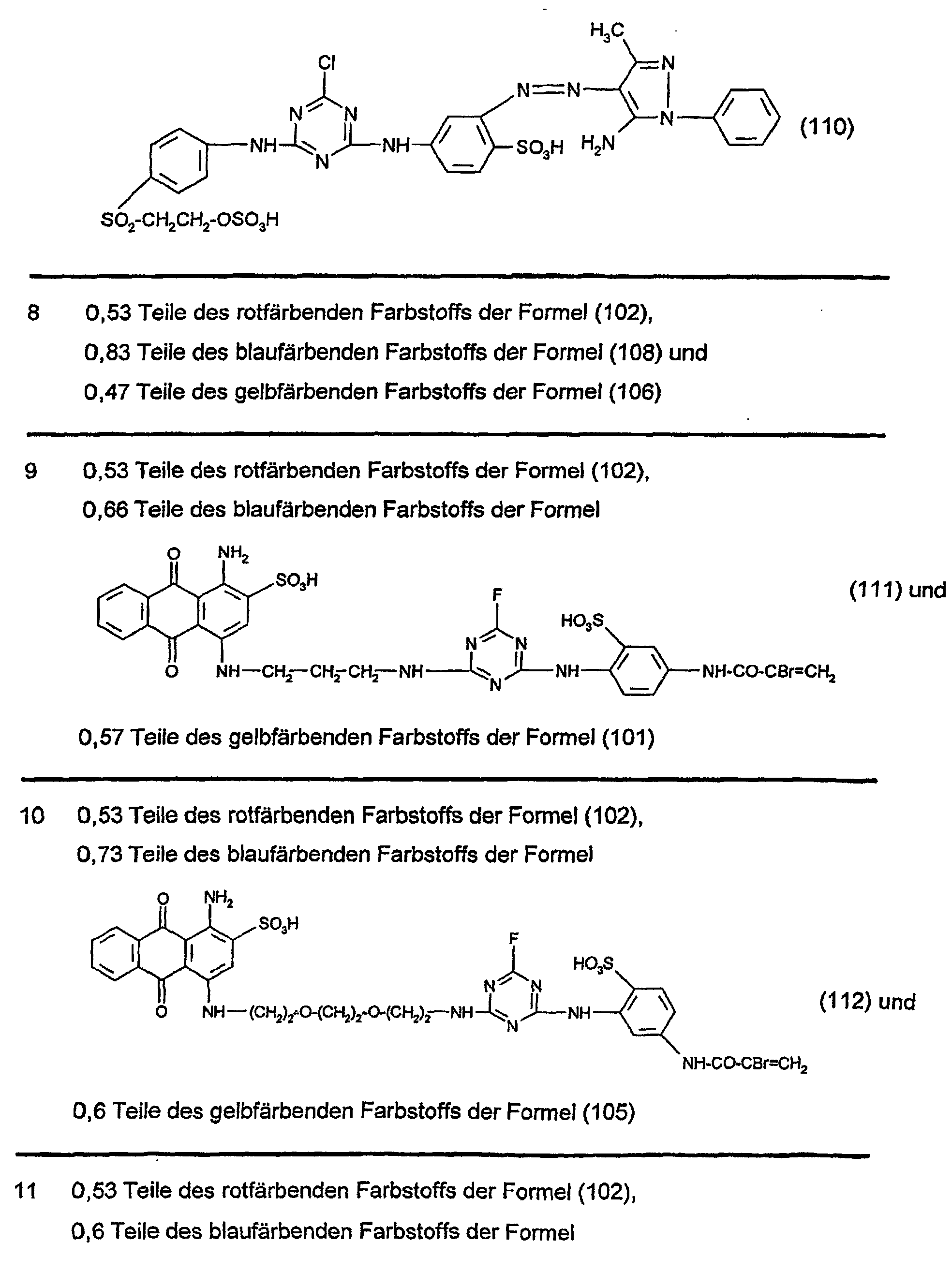

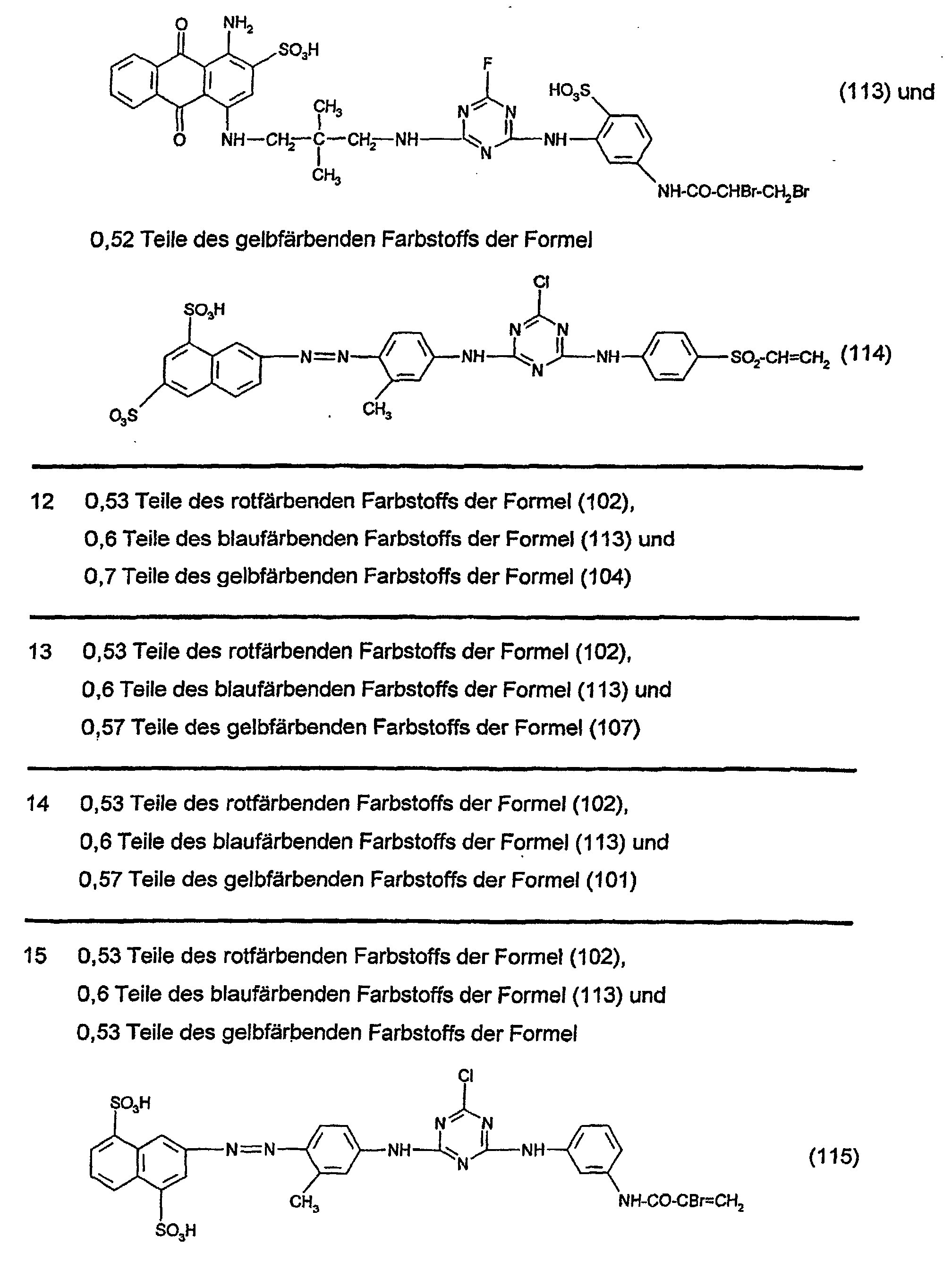

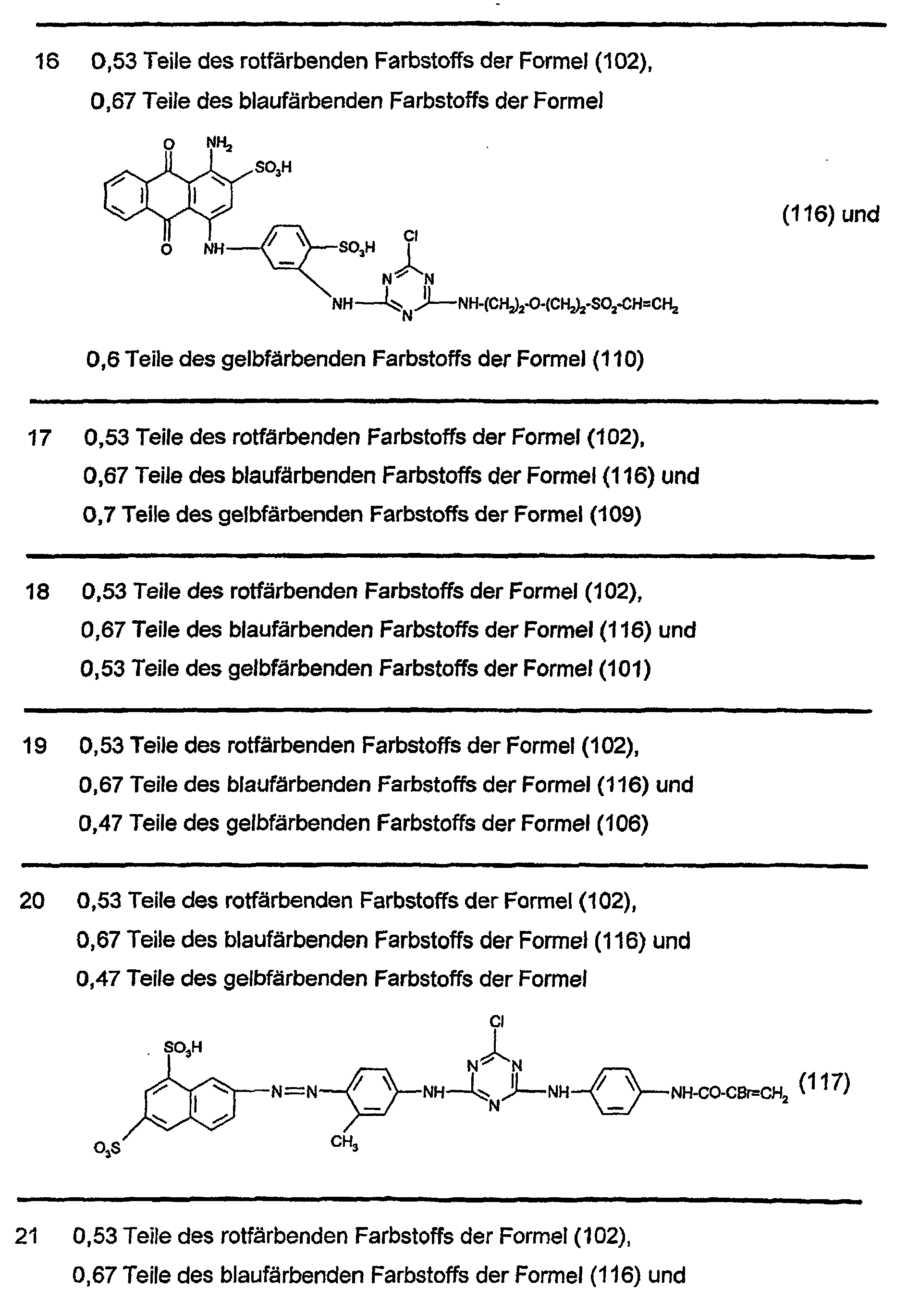

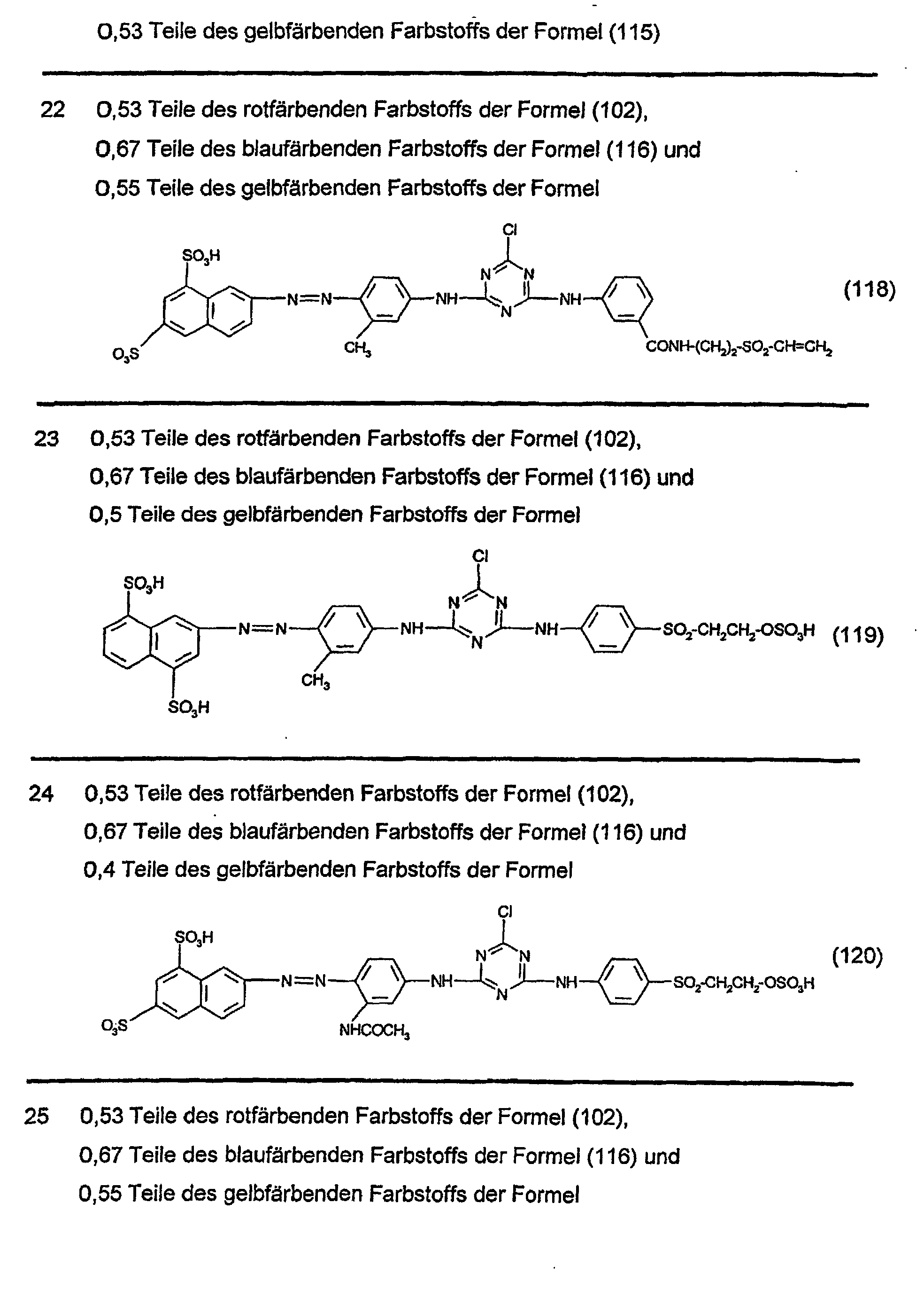

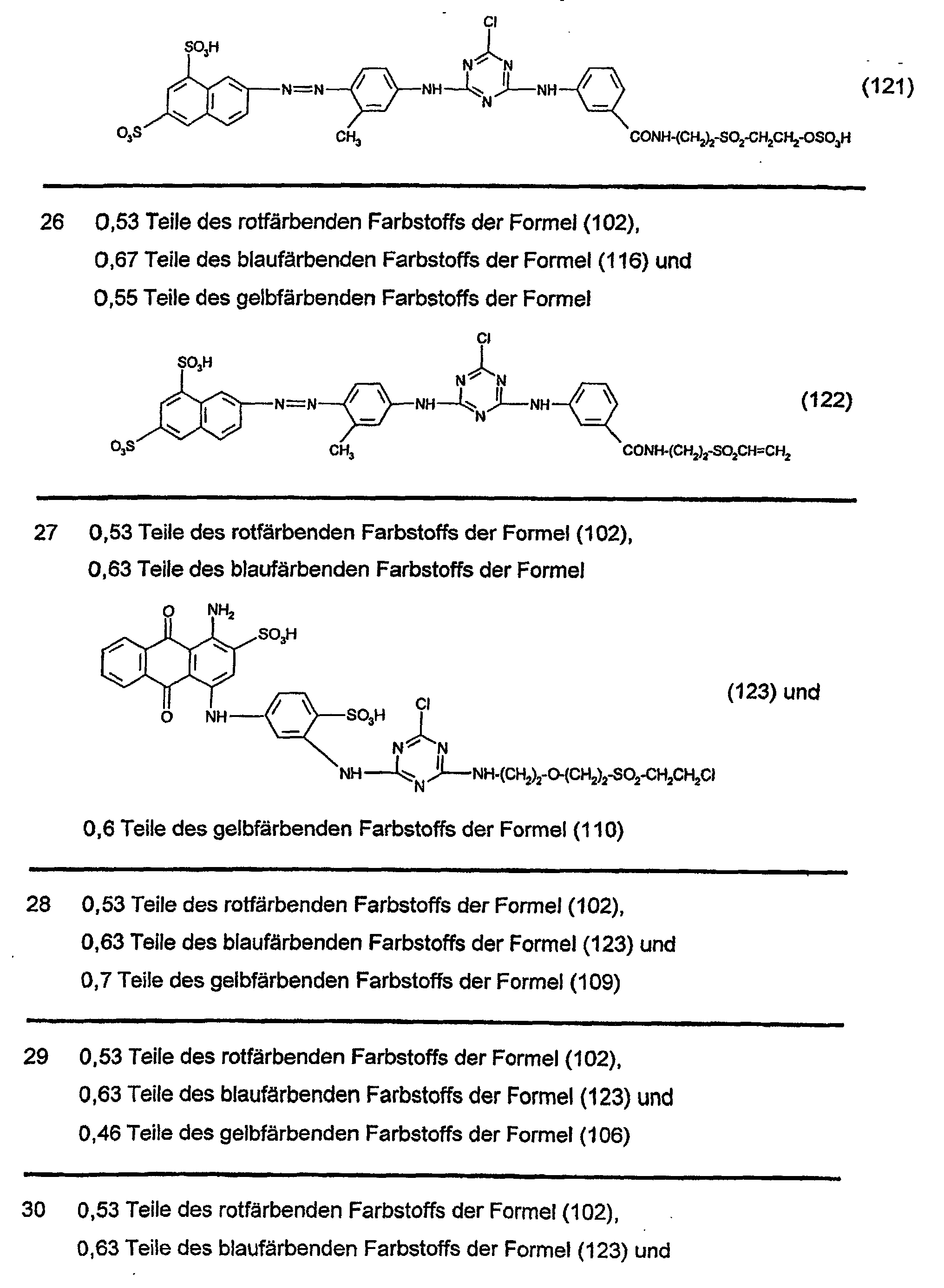

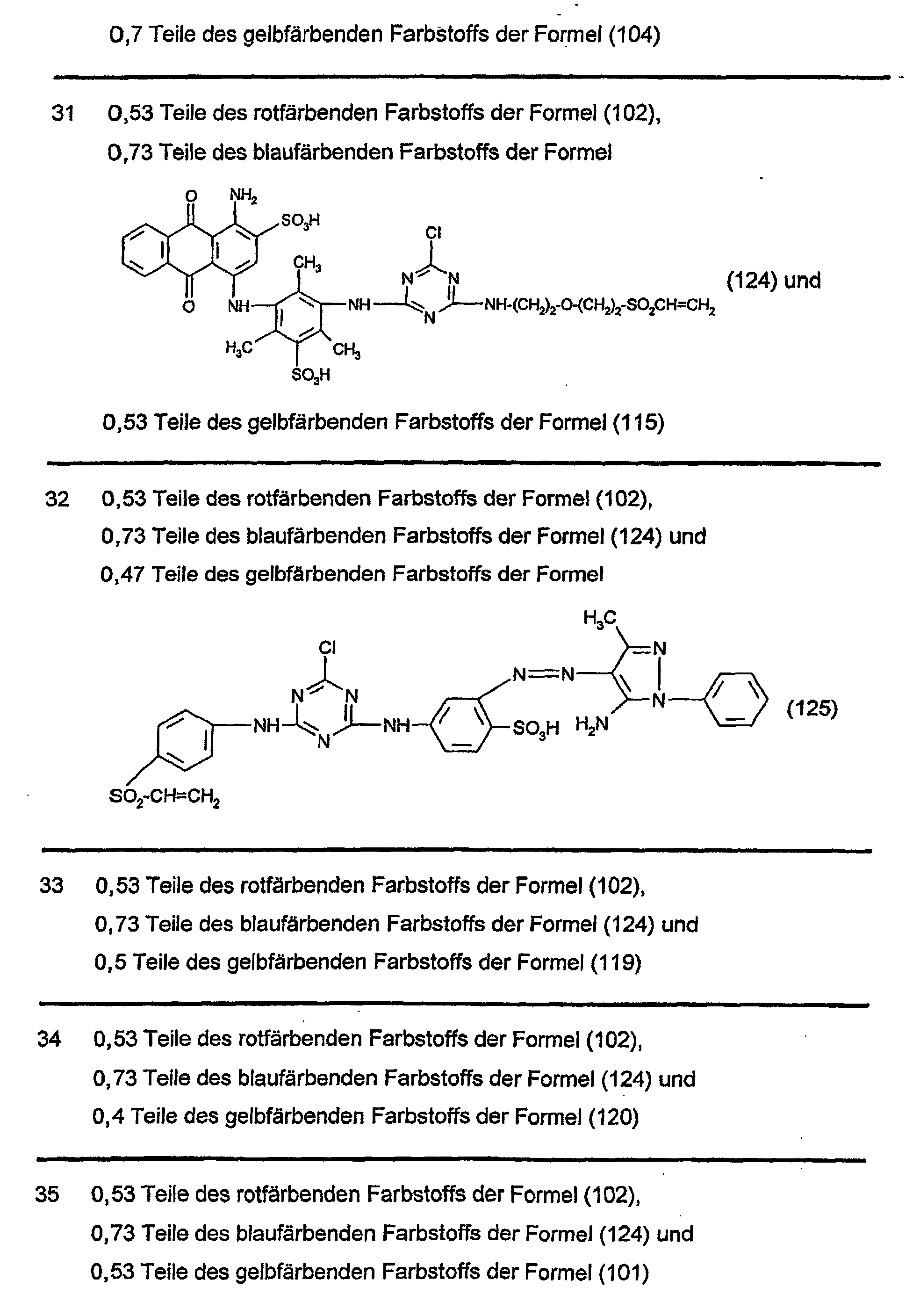

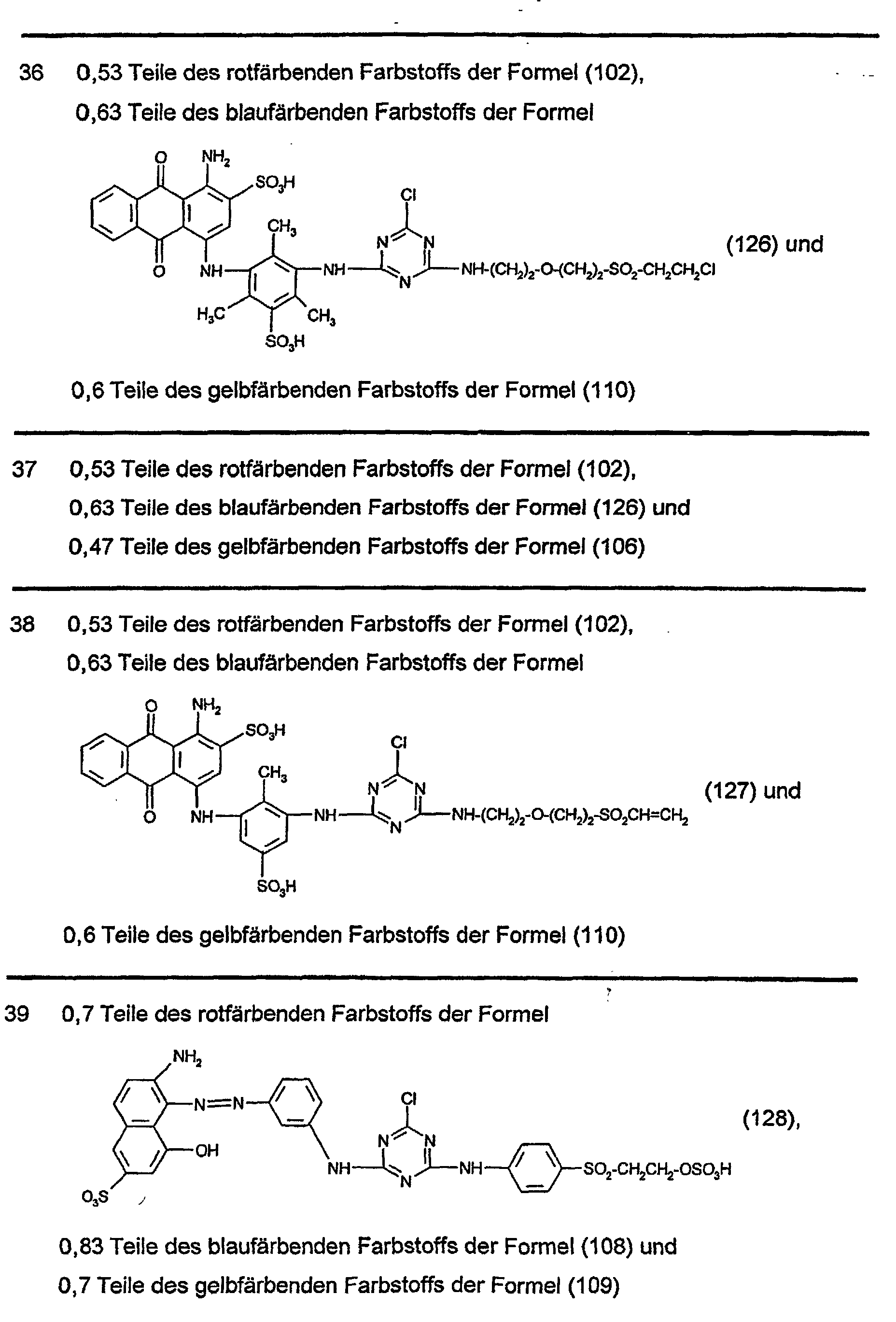

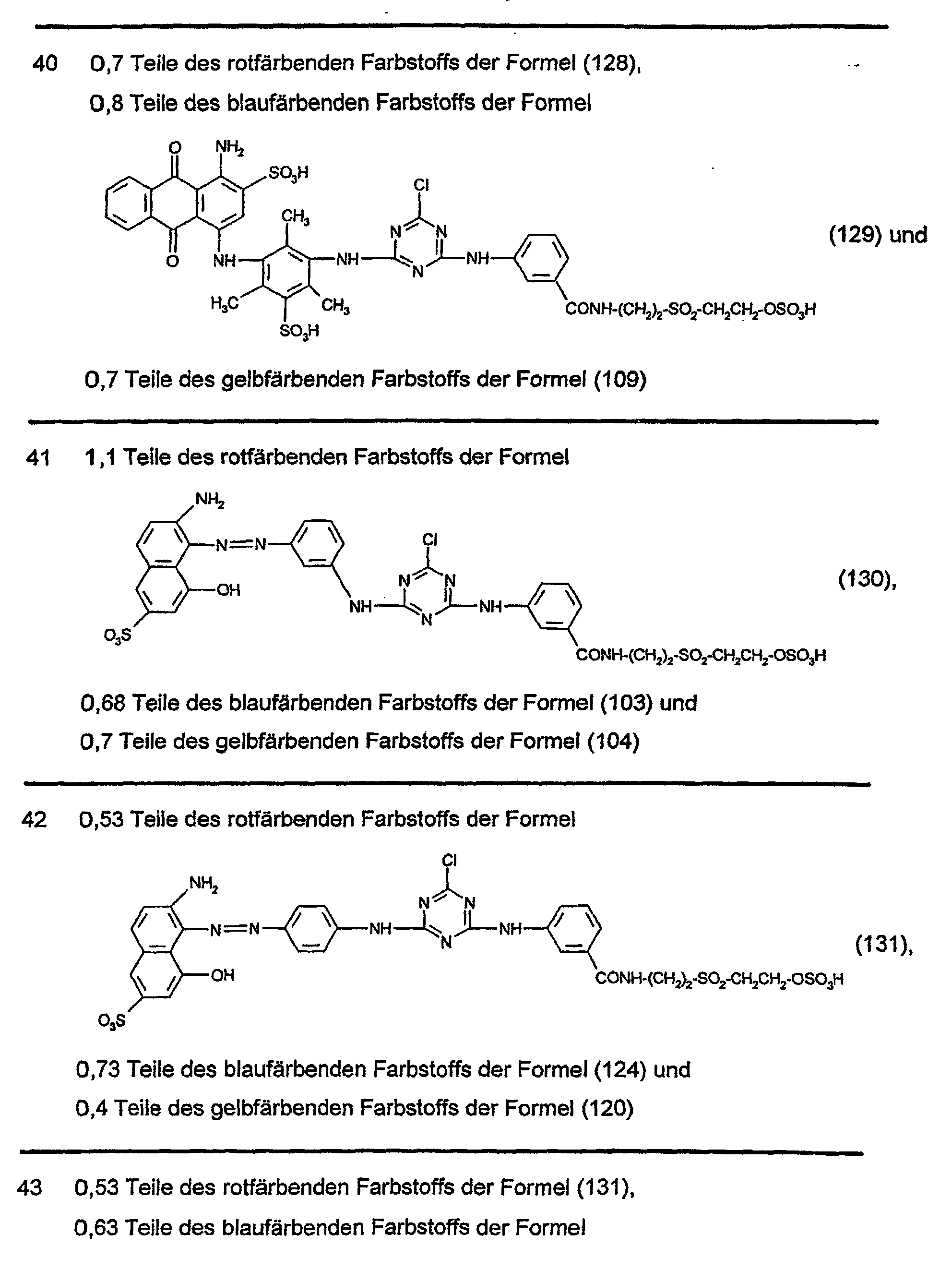

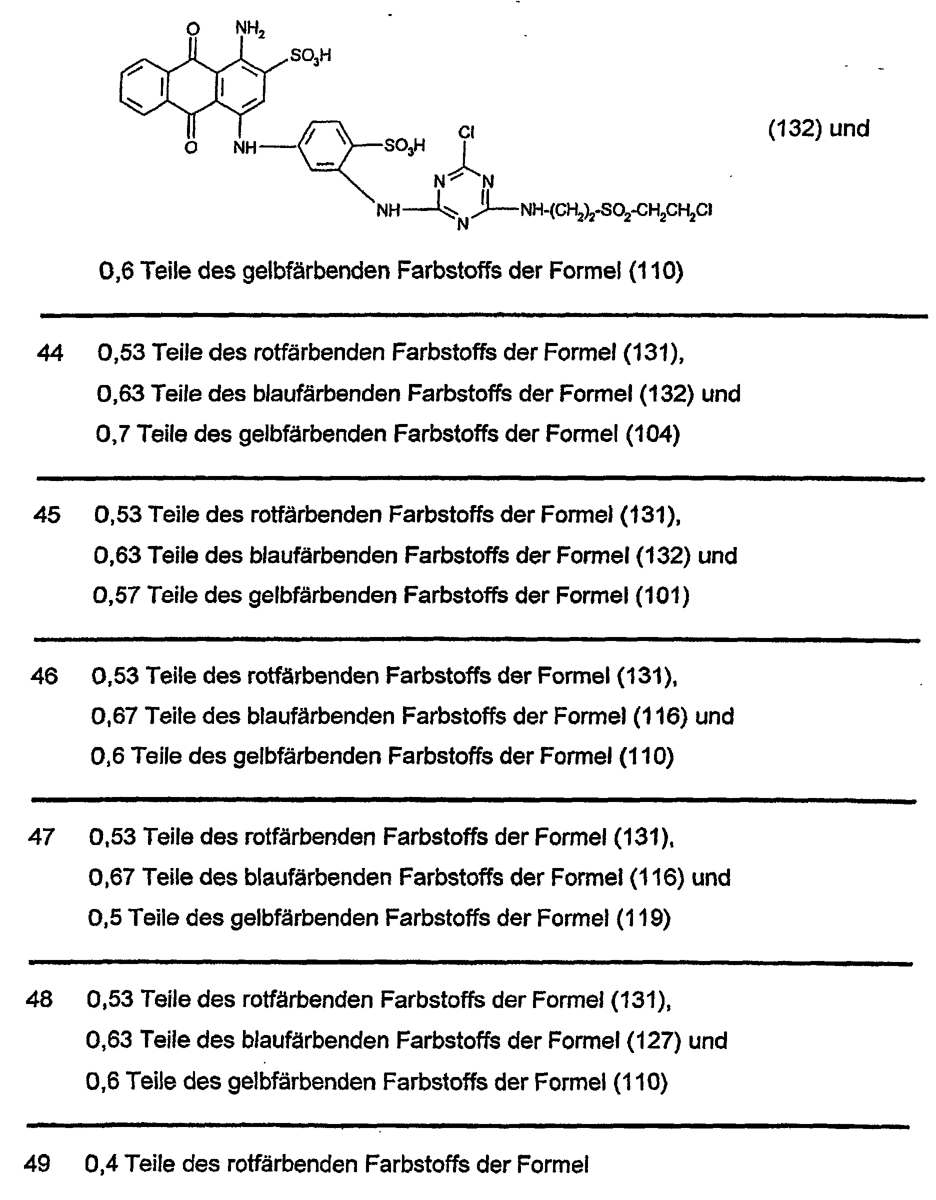

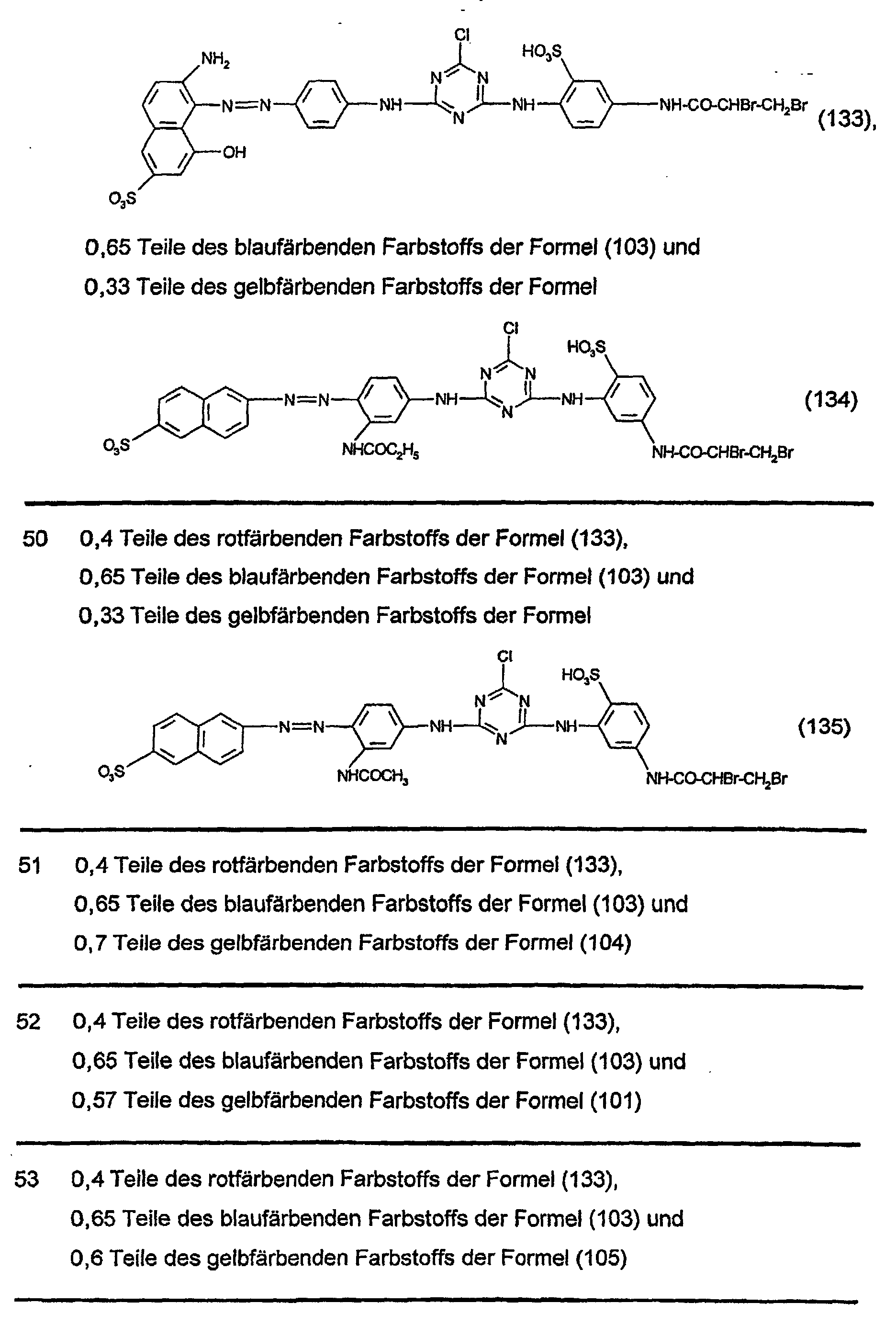

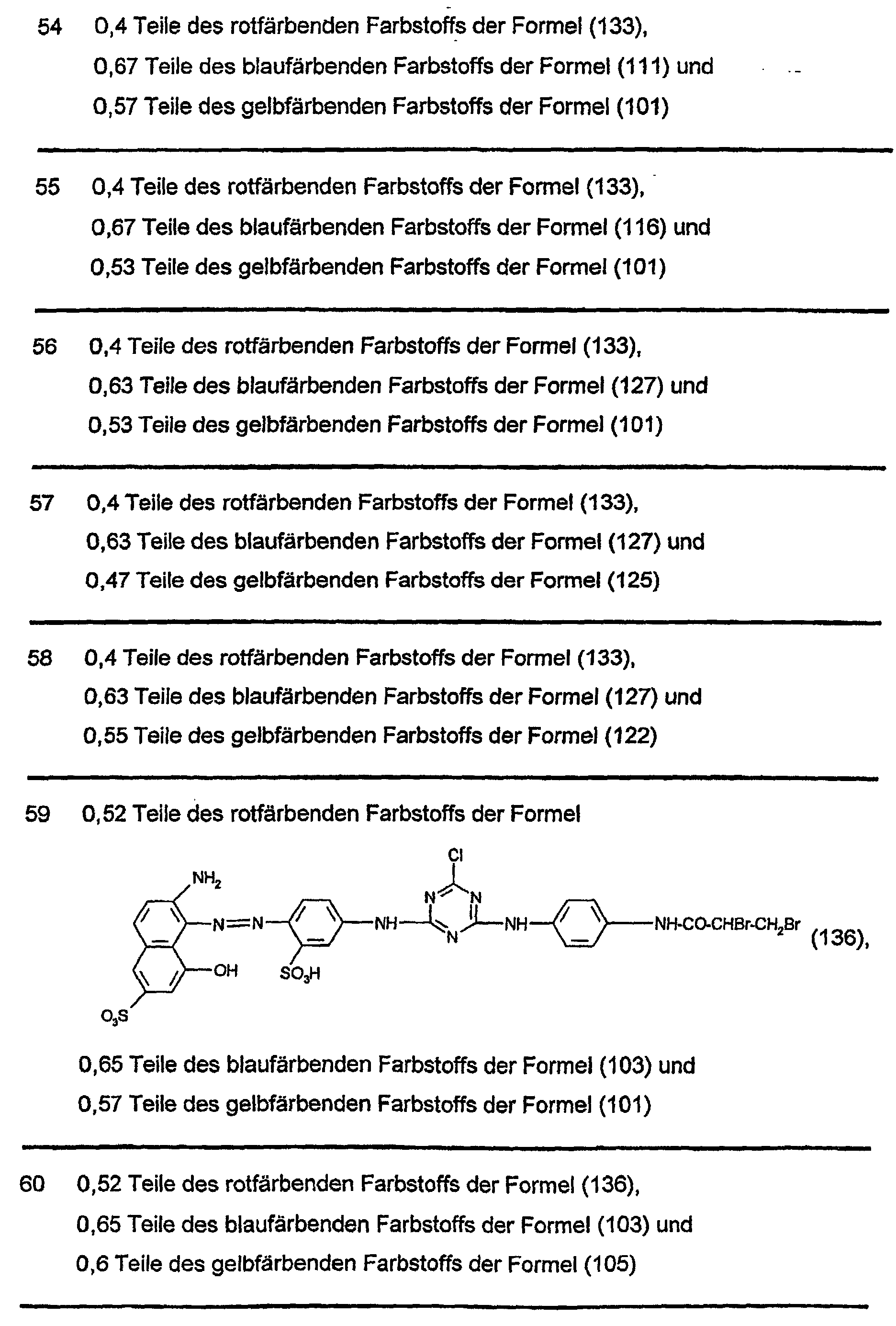

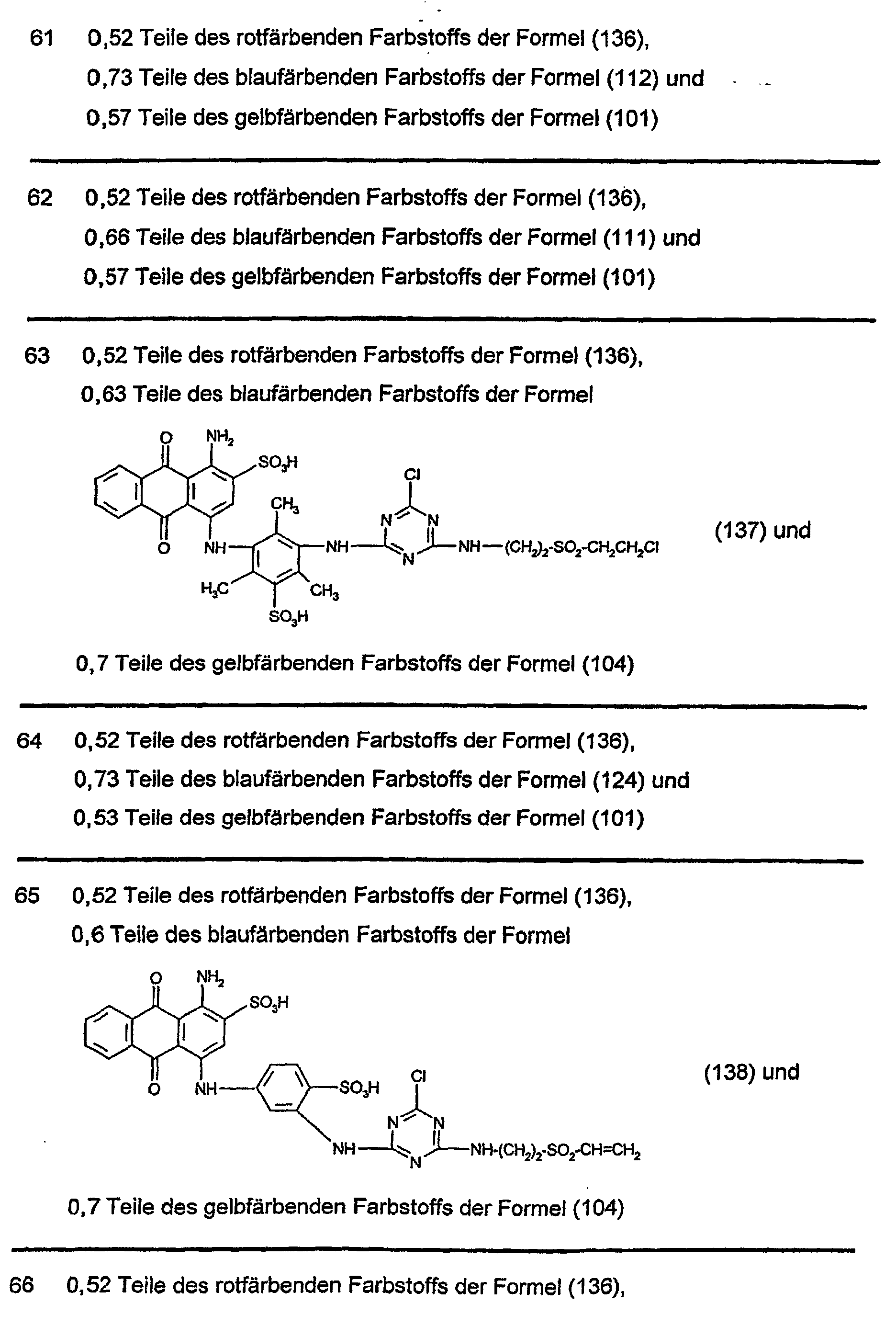

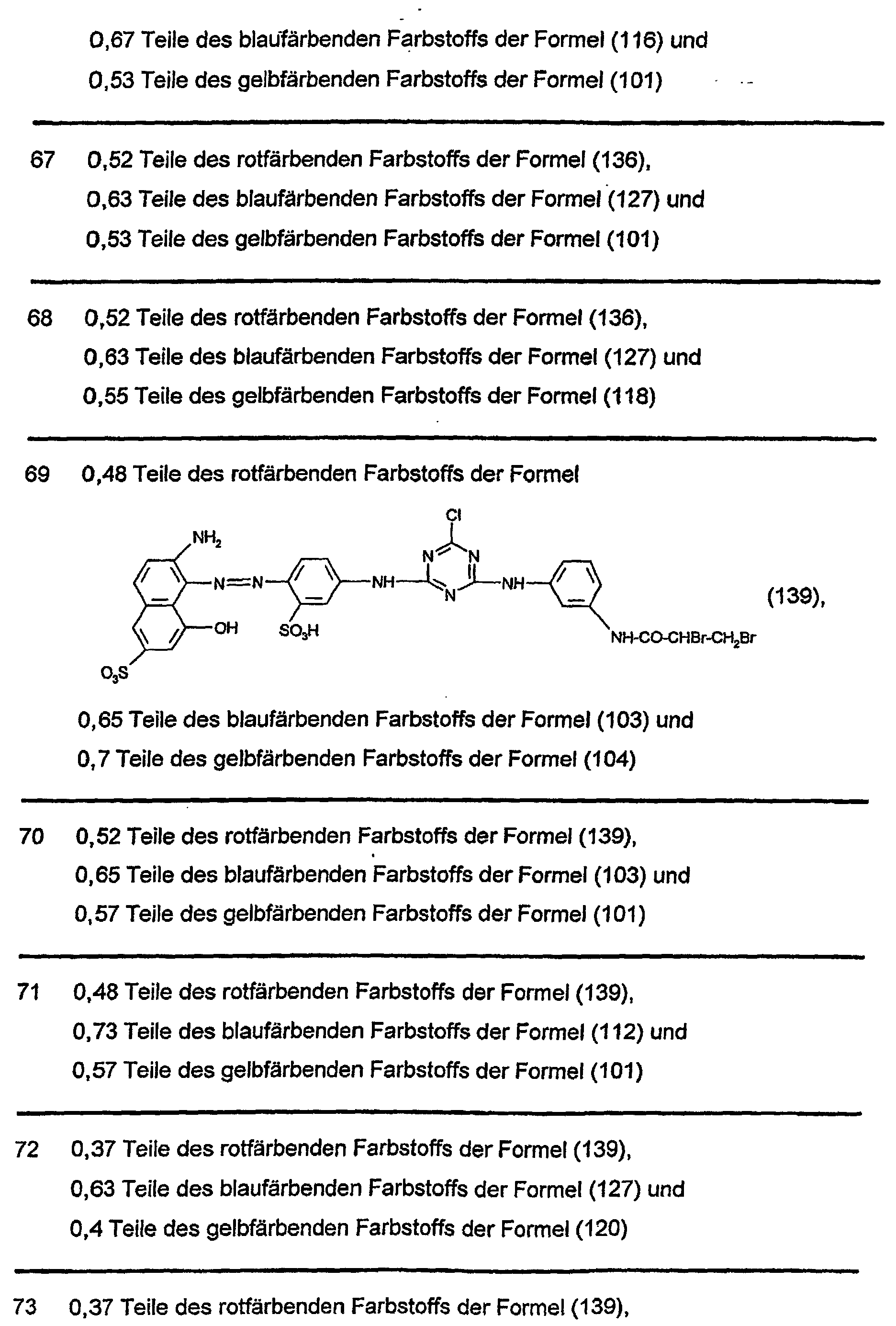

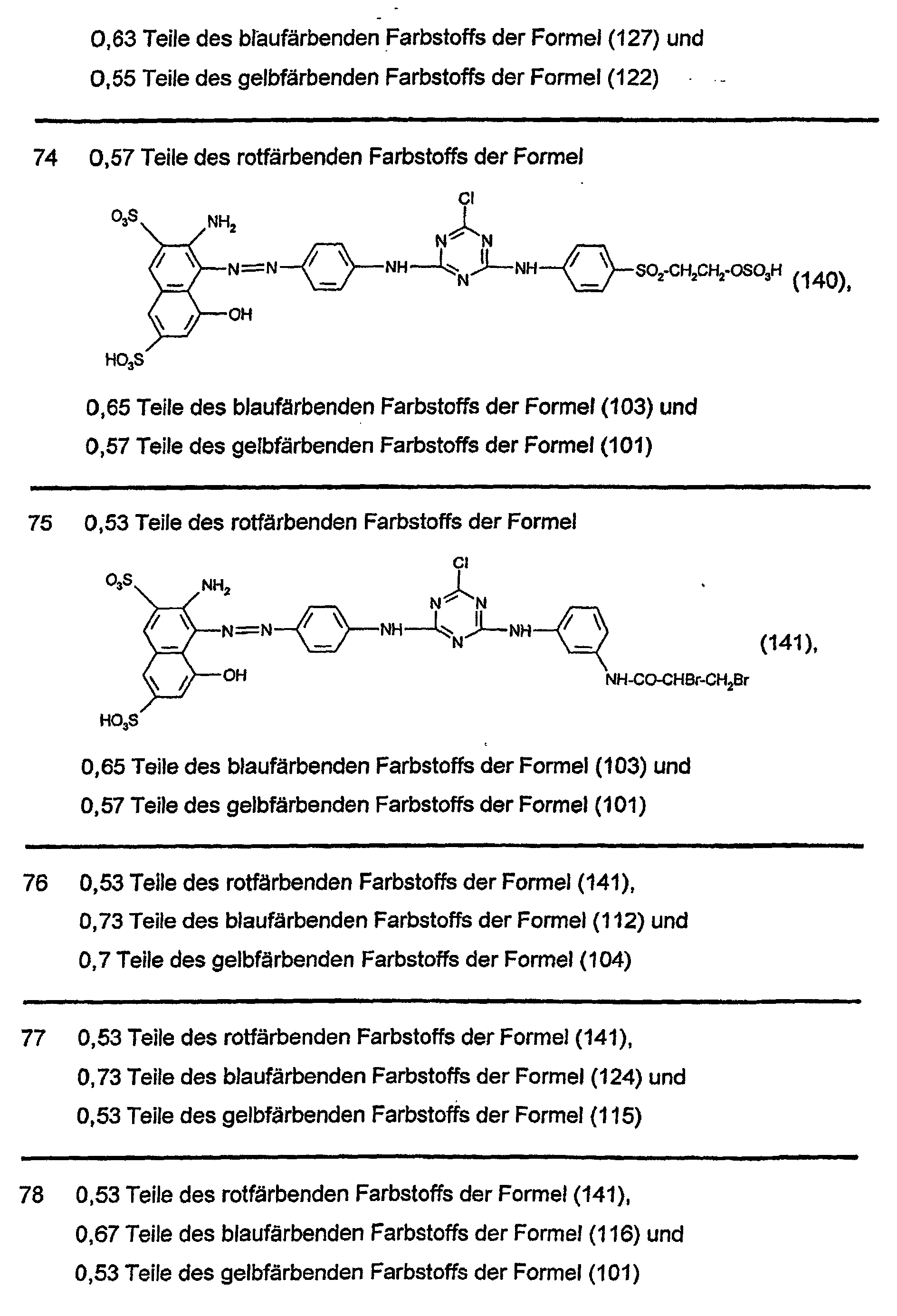

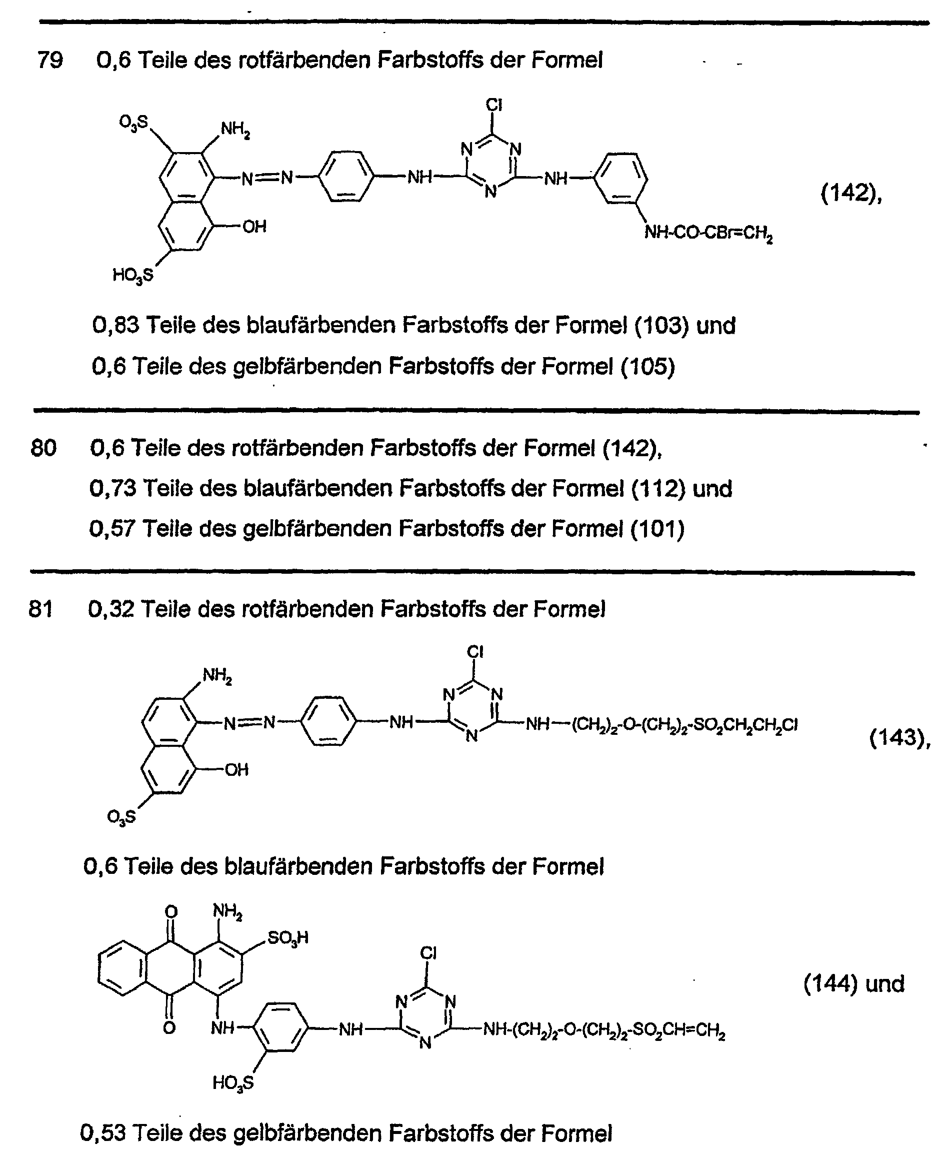

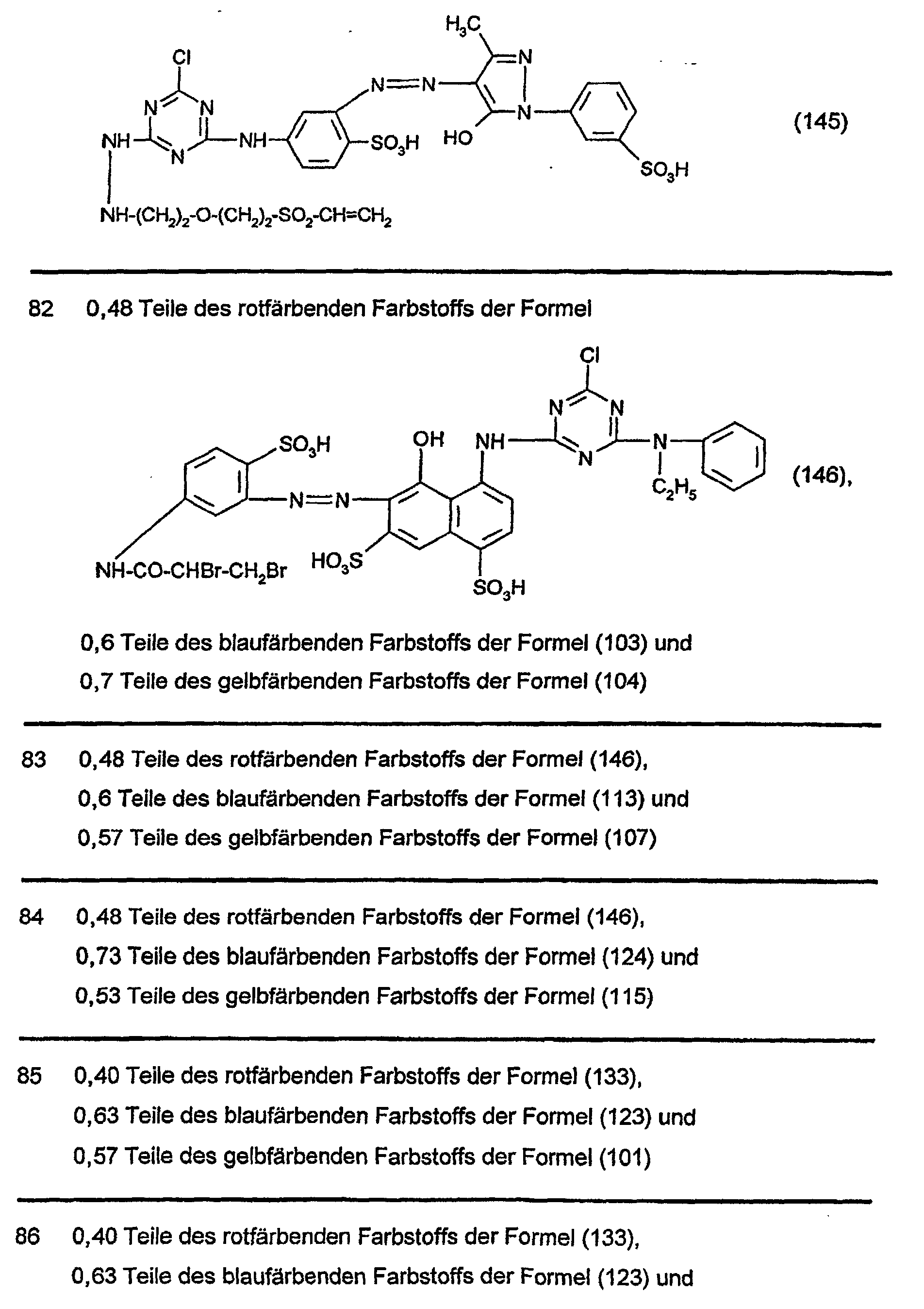

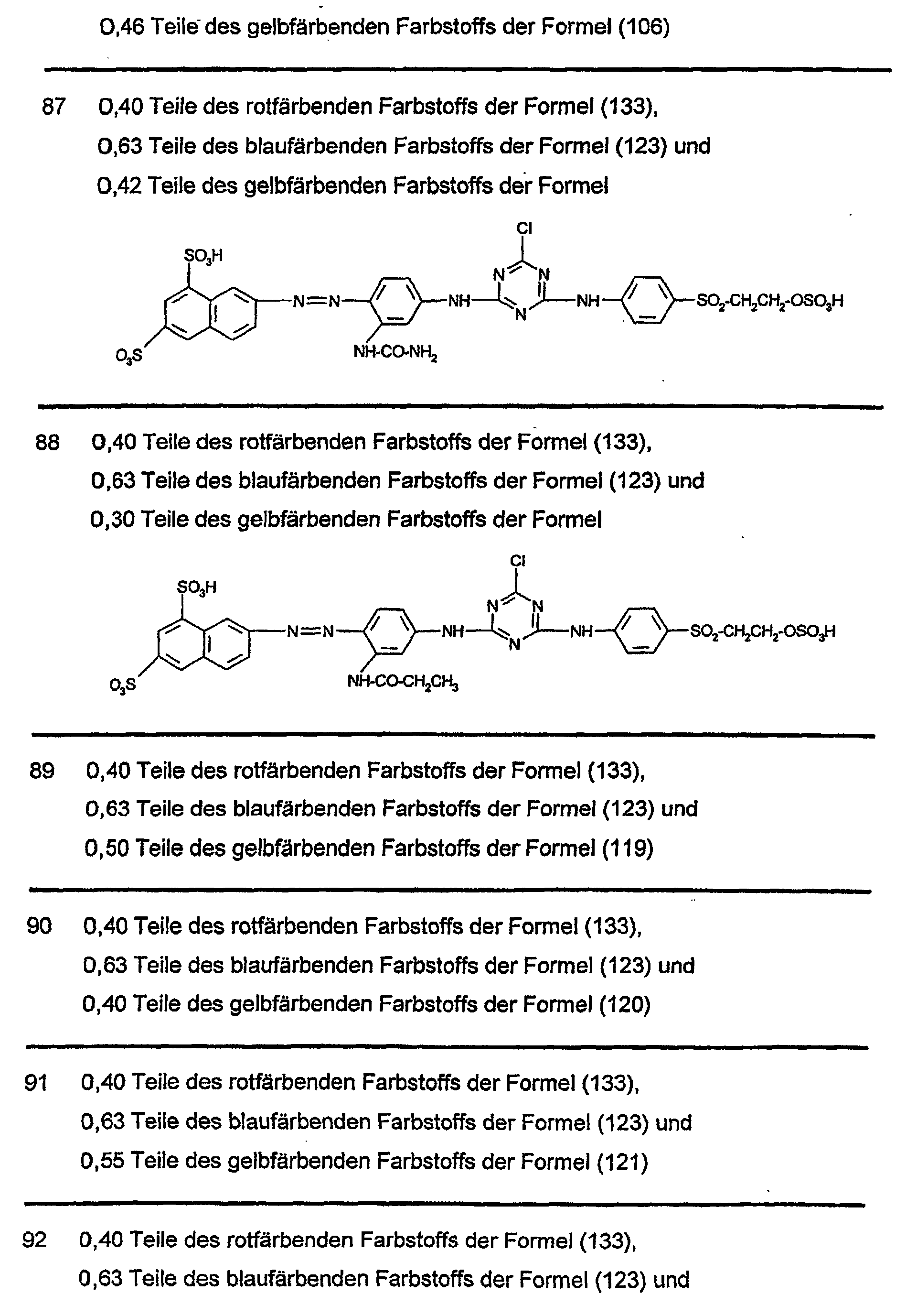

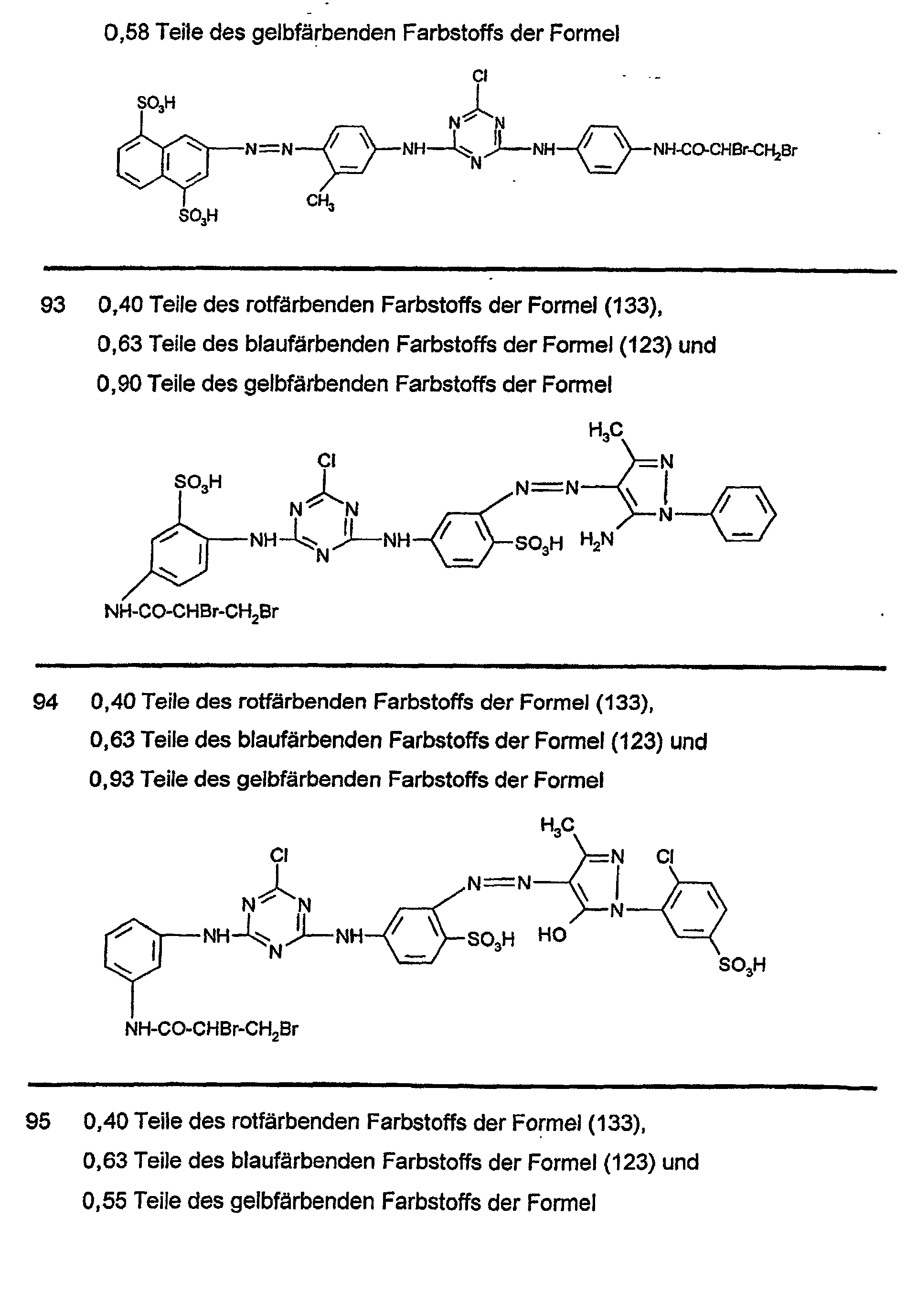

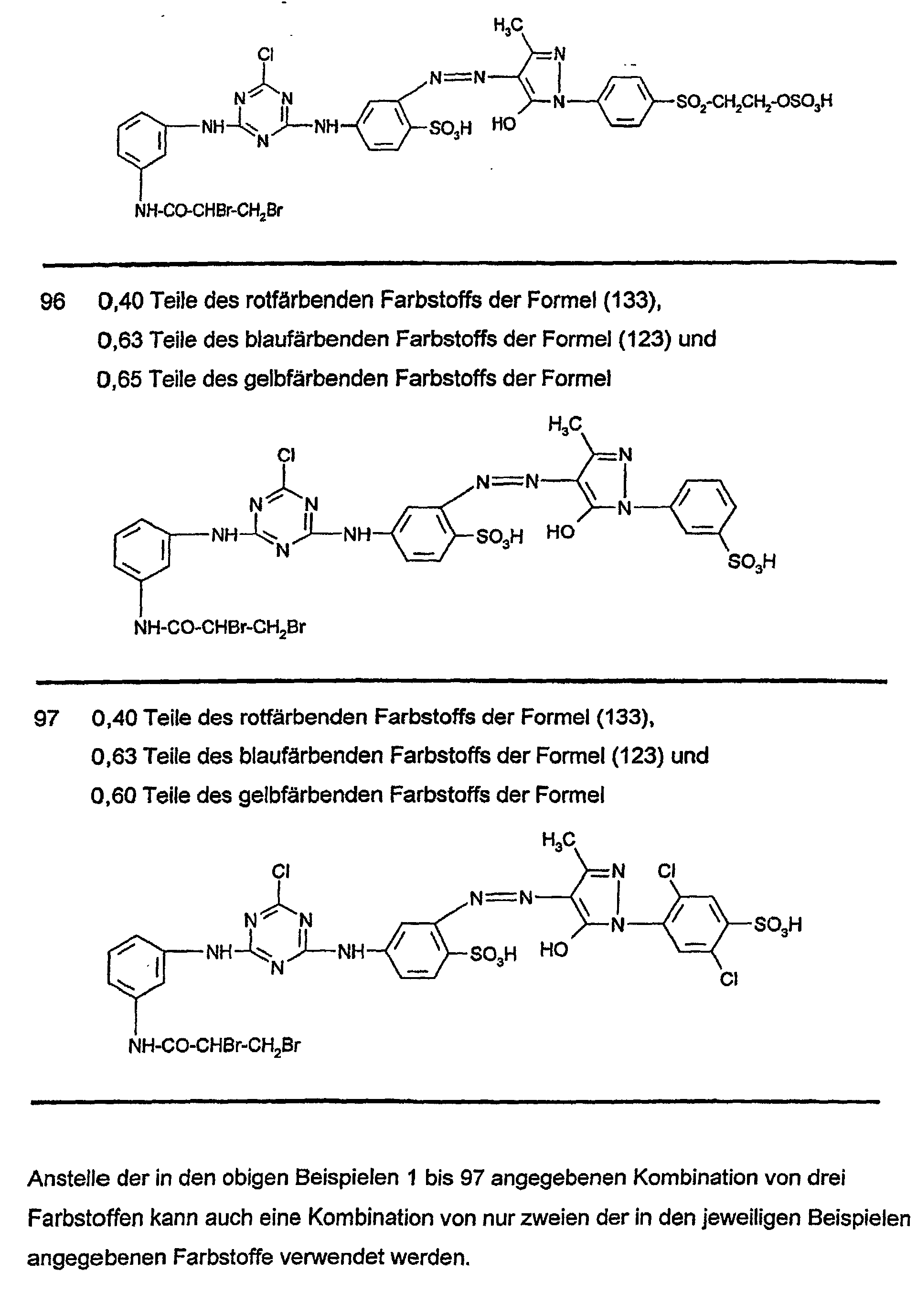

Beispiele 98 bis 100: Verfährt man wie in Beispiel 1 angegeben, verwendet jedoch anstelle von 0,57 Teilen des gelbfärbenden Farbstoffs der Formel (101), 0,53 Teilen des rotfärbenden Farbstoffs der Formel (102) und 0,65 Teilen des blaufärbenden Farbstoffs der Formel (103) die in der folgenden Tabelle 2 in Spalte 2 angegebenen Farbstoffe in den dort angegebenen Mengen, so werden grüne Färbungen erhalten.

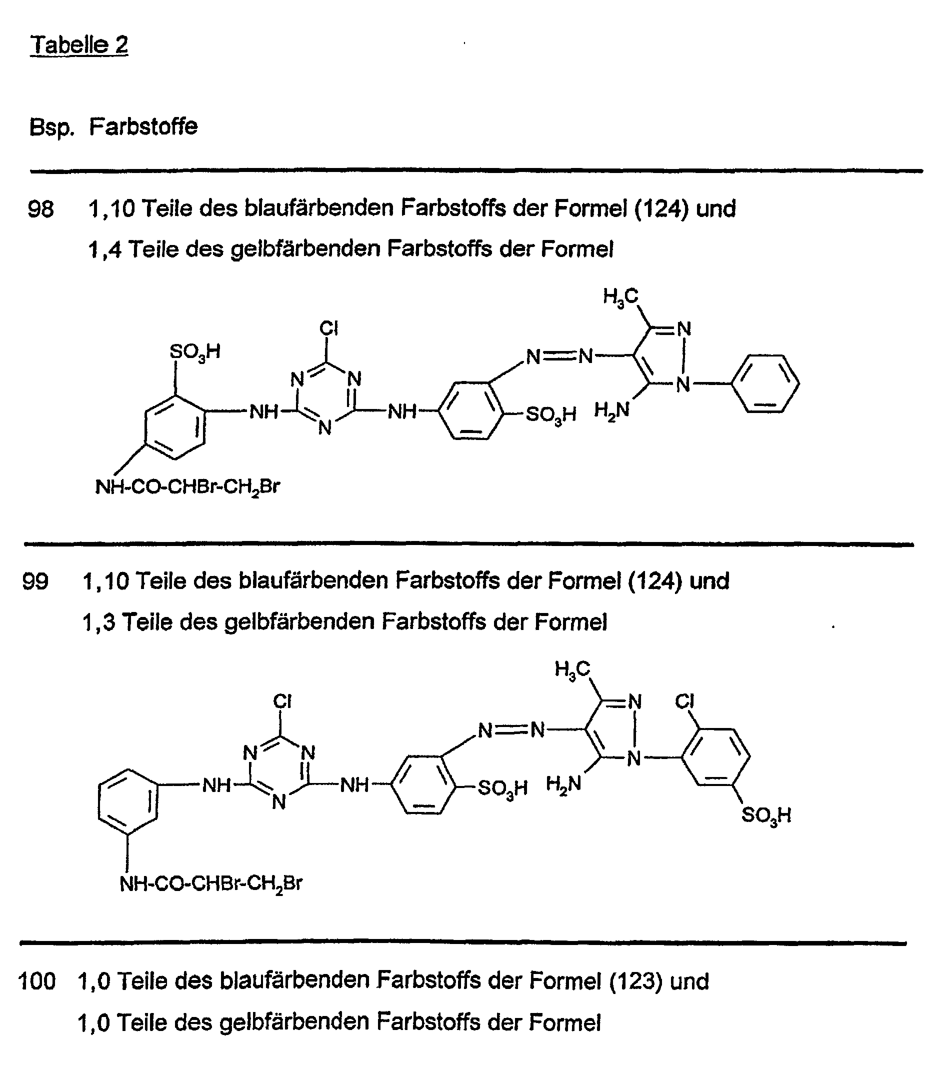

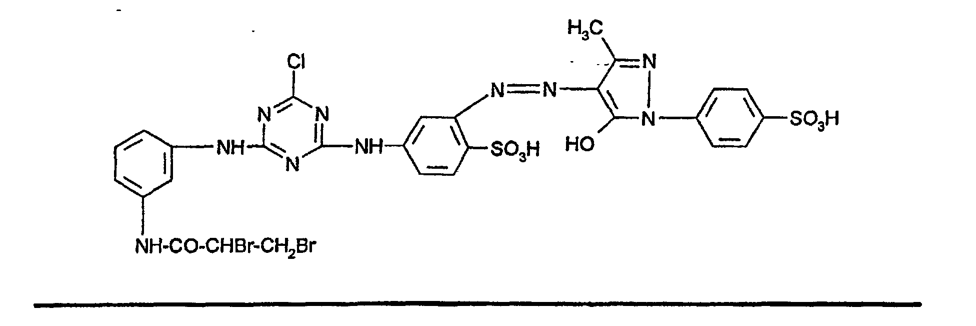

Beispiel 101: Es werden 0,107 Teile des gelbfärbenden Farbstoffes der Formel (101), 0,11 Teile des rotfärbenden Farbstoffes der Formel (133) und 0,133 Teile des blaufärbenden Farbstoffes der Formel (123) in 200 Teilen Wasser gelöst und 0,1 Teile eines Egalisiermittels (basierend auf dem Kondensationsprodukt aus einem aliphatischen Amin und Ethylenoxid ), sowie 0,2 Teile Natriumacetat zugegeben. Mit Essigsäure (80%) wird ein pH-Wert von 5 eingestellt. Das Färbebad wird auf 30°C erwärmt und 10 Teile eines Wolltrikots, das waschmaschinenfest ausgerüstet wurde (Chlor/Hercosett-Verfahren), zugegeben. Man erwärmt das Färbebad innerhalb von 30 Minuten auf 60°C, stoppt bei dieser Temperatur für 15 Minuten und erwärmt dann weiter innerhalb von 40 Minuten auf Kochtemperatur. Nach 75 Minuten Färbezeit bei Kochtemperatur wird die Färbeflotte auf 80°C abgekühlt. Das Wolltrikot wird mit warmen Wasser kurz gespült.

Gegebenenfalls erfolgt eine Nachbehandlung zur Verbesserung der Nassechtheiten mit einer neuen Flotte, die aus 200 Teilen Wasser und 0,4 Teilen Natriumbicarbonat besteht. Diese Flotte (pH ca. 8,5) wird mit dem Färbegut rasch auf 85°C erwämt und 15 Minuten bei dieser Temperatur behandelt. Anschliessend wird das Färbegut mit warmen und kalten Wasser gepült, dem letzten Spülbad zum Absäuern 0,1 Teile Ameisensäure (85%) zugegeben und die Färbung wie üblich fertiggestellt.

## Patentansprüche

1. Verfahren zum Di- oder Trichromie-Färben oder Bedrucken von natürlichem oder synthetischem Polyamidfasermaterial, **dadurch gekennzeichnet, dass** man mindestens einen blaufärbenden, faserreaktiven Anthrachinonfarbstoff der Formel 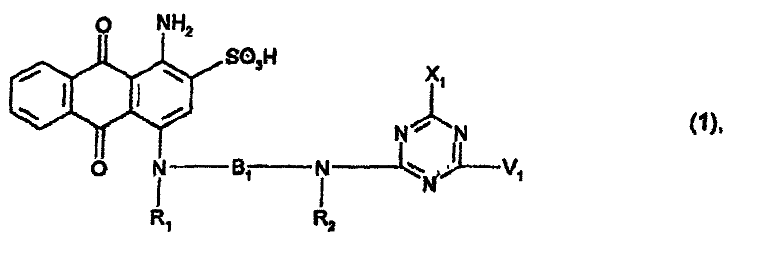 worin
R₁ und R₂ unabhängig voneinander Wasserstoff oder gegebenenfalls substituiertes C₁-C₁₂-Alkyl bedeuten,
X₁ Halogen,
B₁ ein organisches Brückenglied und
V₁ ein Rest der Formel 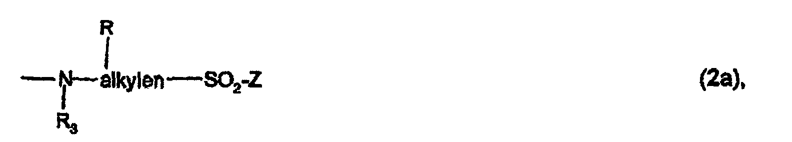 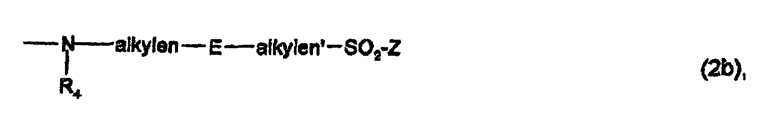 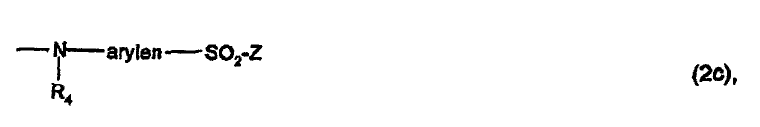 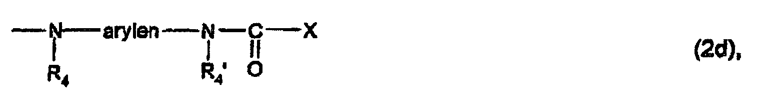 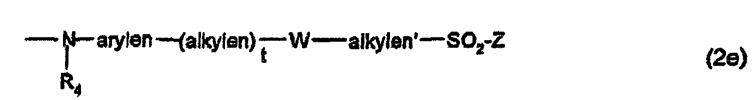 oder 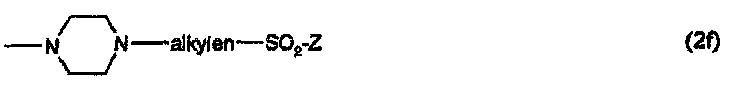 ist worin
W eine Gruppe der Formel -SO₂-NR₃-, -CONR₃- oder -NR₃CO- ist,
R₃ Wasserstoff, unsubstituiertes oder durch Hydroxy, Sulfo, Sulfato, Carboxy oder Cyano substituiertes C₁-C₄-Alkyl oder ein Rest der Formel 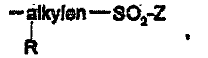 R Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Z ist,
Z der Rest -CH=CH₂ oder -CH₂-CH₂-Y und Y eine Abgangsgruppe ist,
X der Rest 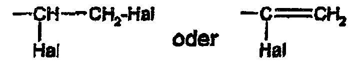 und Hal Halogen ist,
E der Rest -O- oder -NR₅- und R₅ Wasserstoff oder C₁-C₄-Alkyl ist,
alkylen und alkylen' unabhängig voneinander C₁-C₆-Alkylen bedeuten,
arylen einen unsubstituierten oder durch Sulfo, Carboxy, C₁-C₄-Alkyl, C₁-C₄-Alkoxy oder Halogen substituierten Phenylen- oder Naphthylenrest bedeutet,
R₄ und R₄' unabhängig voneinander Wasserstoff oder unsubstituiertes oder durch Carboxy, Cyano, Hydroxy, Sulfo oder Sulfato substituiertes C₁-C₄-Alkyl sind und
t die Zahl 0 oder 1 ist,
zusammen mit mindestens einem sulfogruppenhaltigem, faserreaktivem, gelb- oder orangefärbenden Farbstoff der Formeln 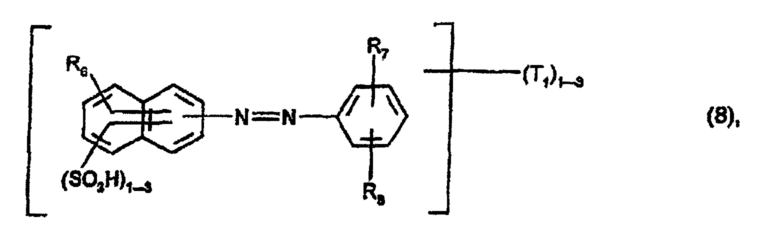 worin
R₆ Wasserstoff, C₁-C₄-Alkyl, C₁-C₄-Alkoxy, C₂-C₄-Alkanoylamino, Amino, N-Mono- oder N,N-Di-C₁-C₄-Alkylamino, Ureido, Halogen, Hydroxy oder Carboxy ist,
R₇ und R₈ unabhängig voneinander Wasserstoff, C₁-C₄-Alkyl, C₁-C₄-Alkoxy, C₂-C₄-Alkanoylamino, Ureido, Sulfamoyl, Halogen, Sulfo oder Carboxy sind und
(T₁)₁₋₃für 1 bis 3 gleiche oder voneinander verschiedene faserreaktive Gruppen steht, 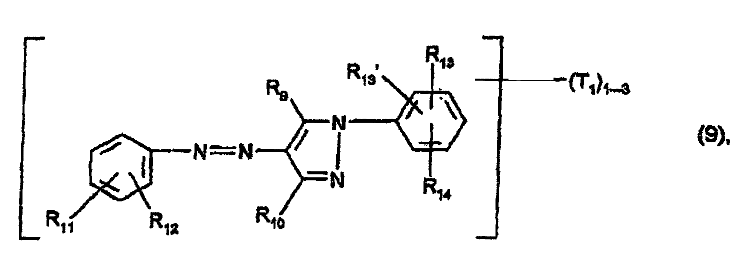 worin R₉ Hydroxy oder Amino, R₁₀ Methyl oder Carboxy ist,
R₁₁, R₁₂, R₁₃, R₁₃' und R₁₄ die oben für R₇ und R₈ angegebenen Bedeutungen haben und R₁₃' zusätzlich β-Hydroxyäthylsulfonyl oder einen Rest der Formel -SO₂Z bedeuten kann und
wobei Z der Rest -CH=CH₂ oder -CH₂-CH₂-Y und Y eine Abgangsgruppe ist,
(T₁)₁₋₃ für 1 bis 3 gleiche oder voneinander verschiedene faserreaktive Gruppen steht und
wobei der Farbstoff der Formel (9) mindestens eine Sulfogruppe enthält, 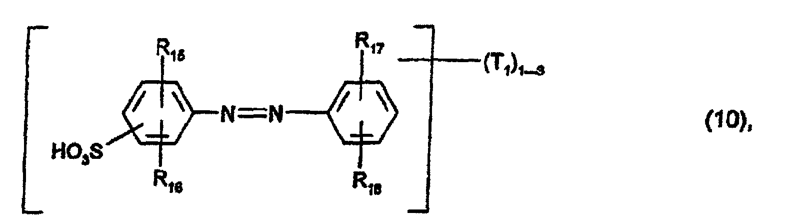 worin R₁₅, R₁₆, R₁₇ und R₁₈ die oben für R₇ und R₈ angegebenen Bedeutungen haben und
(T₁)₁₋₃ für 1 bis 3 gleiche oder voneinander verschiedene faserreaktive Gruppen steht, und 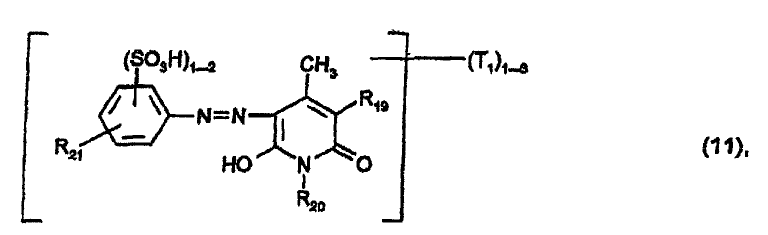 worin R₁₉ Sulfomethyl, Carbamoyl oder Cyano, R₂₀ C₁-C₄-Alkyl ist,
R₂₁ die oben für R₇ und R₈ angegebenen Bedeutungen hat und
(T₁)₁₋₃ für 1 bis 3 gleiche oder voneinander verschiedene faserreaktive Gruppen steht, verwendet, oder
zusammen mit mindestens einem sulfogruppenhaltigem, faserreaktivem, rotfärbenden Farbstoff der Formeln 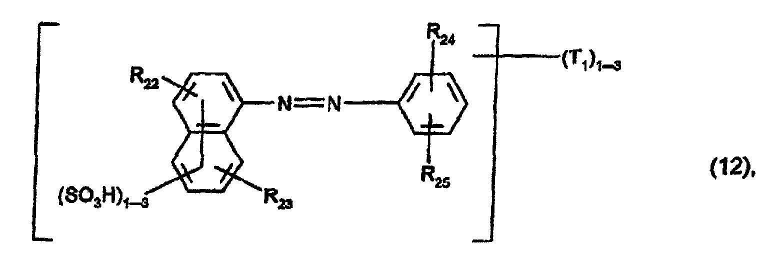 worin R₂₂ Wasserstoff, Amino oder N-Mono- oder N,N-Di-C₁-C₄-Alkylamino,
R₂₃ Wasserstoff oder Hydroxy ist,
R₂₄ und R₂₅ unabhängig voneinander die oben für R₇ und R₈ angegebenen Bedeutungen haben oder gegebenenfalls durch C₁-C₄-Alkyl, C₁-C₄-Alkoxy, C₂-C₄-Alkanoylamino, Ureido, Halogen, Carboxy oder Sulfo substituiertes Phenylsulfonyl sind, und
(T₁)₁₋₃ für 1 bis 3 gleiche oder voneinander verschiedene faserreaktive Gruppen steht, und 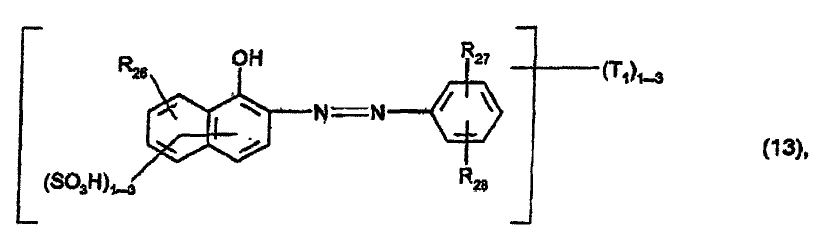 worin R₂₈ Wasserstoff, C₁-C₄Alkyl, C₁-C₄-Alkoxy, C₂-C₄-Alkanoylamino, Amino, N-Mono- oder N,N-Di-C₁-C₄-Alkylamino, Ureido, Halogen, Carboxy oder Phenylcarbonylamino ist, welches gegebenenfalls im Phenylring durch C₁-C₄-Alkyl, C₁-C₄-Alkoxy, C₂-C₄-Alkanoylamino, Ureido, Halogen, Carboxy oder Sulfo weitersubstituiert ist,
R₂₇ und R₂₈ die oben für R₇ und R₈ angegebenen Bedeutungen haben und
(T₁)₁₋₃ für 1 bis 3 gleiche oder voneinander verschiedene faserreaktive Gruppen steht, verwendet.

2. Verfahren gemäss Anspruch 1 zum Trichromie-Färben oder Bedrucken von natürlichem oder synthetischem Polyamidfasermaterial, **dadurch gekennzeichnet, dass** man mindestens einen blaufärbenden, faserreaktiven Anthrachinonfarbstoff der Formel (1) zusammen mit mindestens einem sulfogruppenhaltigem, faserreaktivem, gelb- oder orangefärbenden Farbstoff der Formeln (8), (9), (10) und (11) gemäss Anspruch 1, und zusammen mit mindestens einem sulfogruppenhaltigem, faserreaktivem, rotfärbenden Farbstoff der Formeln (12) und (13) gemäss Anspruch 1 verwendet.

3. Verfahren gemäss einem der Ansprüche 1 und 2, **dadurch gekennzeichnet, dass**
R₁ und R₂ unabhängig voneinander Wasserstoff oder gegebenenfalls durch Hydroxy, Sulfo oder Sulfato substituiertes C₁-C₄-Alkyl bedeuten.

4. Verfahren gemäss einem der Ansprüche 1 bis 3, **dadurch gekennzeichnet, dass**
B₁ ein C₂-C₁₂-Alkylenrest, welcher durch 1, 2 oder 3 Glieder aus der Gruppe -NH-, -N(CH₃)-oder -O- unterbrochen sein kann und unsubstituiert oder durch Hydroxy, Sulfo, Sulfato, Cyano oder Carboxy substituiert ist, oder
ein C₅-C₉-Cycloalkylenrest, C₁-C₄-Alkylen-C₅-C₉-cycloalkylenrest oder C₁-C₄-Alkylen-C₅-C₉-cycloalkylen-C₁-C₄-alkylenrest, welche gegebenenfalls durch C₁-C₄-Alkyl, C₁-C₄-Alkoxy, Sulfo, Halogen oder Carboxy substituiert sind, oder
ein Phenylenrest, C₁-C₄-Alkylen-phenylenrest oder C₁-C₄-Alkylen-phenylen-C₁-C₄-alkylenrest, welche gegebenenfalls durch C₁-C₄-Alkyl, C₁-C₄-Alkoxy, C₂-C₄-Alkanoylamino, Sulfo, Halogen oder Carboxy substituiert sind, ist.

5. Verfahren gemäss einem der Ansprüche 1 bis 4, **dadurch gekennzeichnet, dass**
B₁ ein C₂-C₆-Alkylenrest, welcher durch 1, 2 oder 3 Glieder -O- unterbrochen sein kann und unsubstituiert oder durch Hydroxy oder Sufato substituiert ist, oder
ein gegebenenfalls durch C₁-C₄-Alkyl substituierter Cyclohexylenrest oder Methylen-cyclohexylenrest, oder
ein gegebenenfalls durch C₁-C₄-Alkyl, C₁-C₄-Alkoxy, Halogen oder Sulfo substituierter Phenylen oder Methylen-phenylen-methylenrest ist.

6. Verfahren gemäss Anspruch 1, **dadurch gekennzeichnet, dass**
W eine Gruppe der Formel -CONH- ist,
R₁ R₃, R₄ und R₄' Wasserstoff bedeuten,
Y -Cl, -OSO₃H oder -OCO-CH₃,
Hal Chlor oder Brom,
E der Rest -O-,
arylen ein unsubstituierter oder durch Sulfo, Carboxy, C₁-C₄-Alkyl, C₁-C₄-Alkoxy oder Halogen substituierter Phenylenrest, und
t die Zahl 0 ist.

7. Verfahren gemäss einem der Ansprüche 1 und 6, **dadurch gekennzeichnet, dass**
V₁ ein Rest der Formel (2b) oder (2d) ist.

8. Verfahren gemäss einem der Ansprüche 1 bis 7, **dadurch gekennzeichnet, dass**
X₁ Fluor oder Chlor, insbesondere Chlor, ist.

9. Verfahren gemäss einem der Ansprüche 1 bis 8, **dadurch gekennzeichnet, dass** man als blaufärbenden, faserreaktiven Anthrachlnonfarbstoff der Formel (1) einen Anthrachinonfarbstoff der Formel 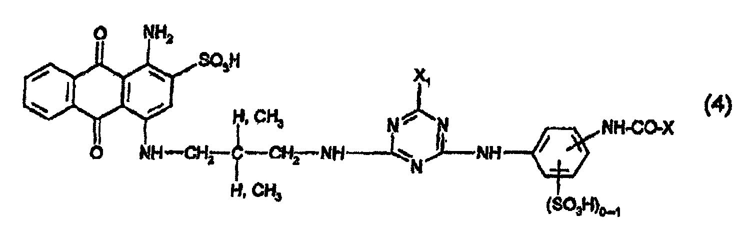 oder 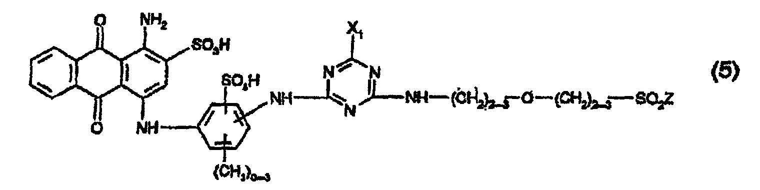 verwendet, worin
X₁ Fluor oder Chlor ist,
X der Rest 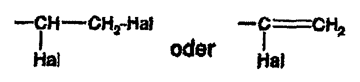 und Hal Brom oder Chlor ist und
Z der Rest -CH=CH₂ oder -CH₂-CH₂-Y und Y -Cl, -OSO₃H oder -OCO-CH₃ ist.

10. Verfahren gemäss Anspruch 1, **dadurch gekennzeichnet, dass**
T₁ ein Rest der Formel
-SO₂Z (6a), 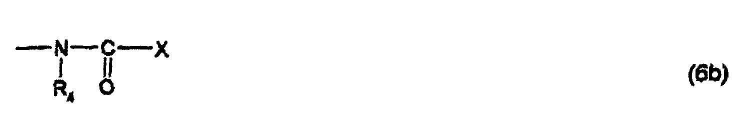
oder 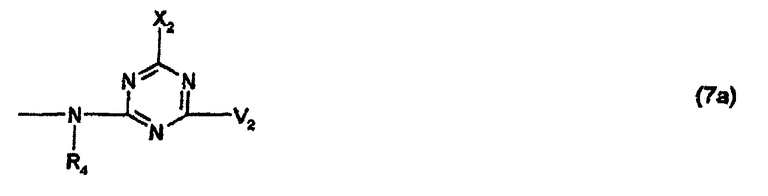 ist, worin
Z der Rest -CH=CH₂ oder -CH₂-CH₂-Y und Y eine Abgangsgruppe ist,
X der Rest 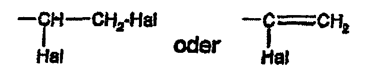 und Hal Halogen ist,
X₂ Fluor oder insbesondere Chlor,
R₄ Wasserstoff oder unsubstituiertes oder durch Carboxy, Cyano, Hydroxy, Sulfo oder Sulfato substituiertes C₁-C₄-Alkyl ist, und
V₂ ein Rest der Formel 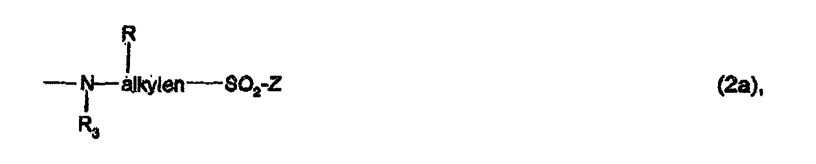 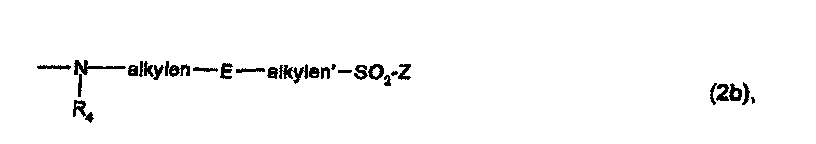 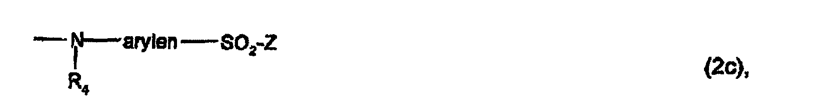 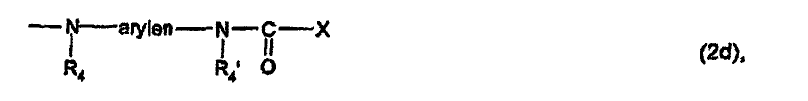 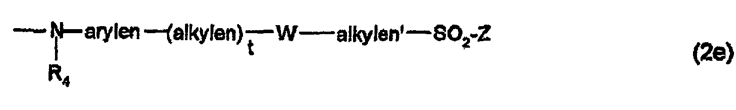 oder 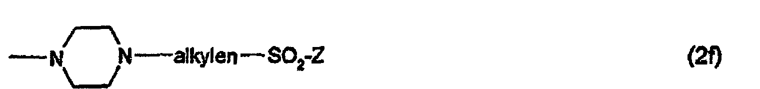 ist, wobei
W eine Gruppe der Formel -SO₂-NR₃-, -CONR₃- oder -NR₃CO- ist,
R₃ Wasserstoff, unsubstituiertes oder durch Hydroxy, Sulfo, Sulfato, Carboxy oder Cyano substituiertes C₁-C₄-Alkyl oder ein Rest der Formel 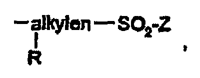 R Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Z ist,
E der Rest -O- oder -NR₅ und R₅ Wasserstoff oder C₁-C₄-Alkyl ist,
alkylen und alkylen' unabhängig voneinander C₁-C₆-Alkylen bedeuten,
arylen einen unsubstituierten oder durch Sulfo, Carboxy, C₁-C₄-Alkyl, C₁-C₄-Alkoxy oder Halogen substituierten Phenylen- oder Naphthylenrest bedeutet,
R₄' die oben für R₄ angegebenen Bedeutungen hat,
Z und X die oben angegebenen Bedeutungen haben, und
t die Zahl 0 oder 1 ist.

11. Verfahren gemäss Anspruch 10, **dadurch gekennzeichnet, dass** man
als sulfogruppenhaltigen, faserreaktiven, gelb- oder orangefärbenden Farbstoff mindestens einen der Farbstoffe der Formeln 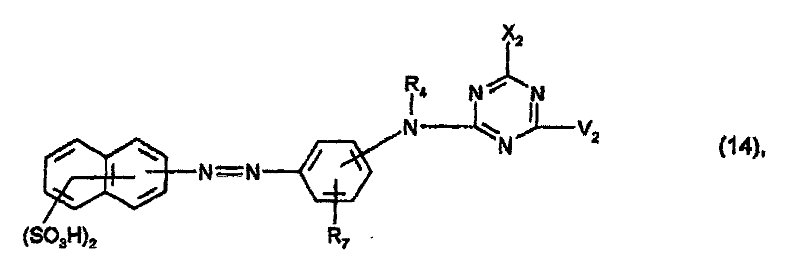 worin R₇ Wasserstoff, C₁-C₄-Alkyl, C₁-C₄-Alkoxy, C₂-C₄-Alkanoylamino, Ureido, Sulfamoyl, Halogen, Sulfo oder Carboxy ist, und
R₄, X₂ und V₂ die in Anspruch 10 angegebenen Bedeutungen haben, und 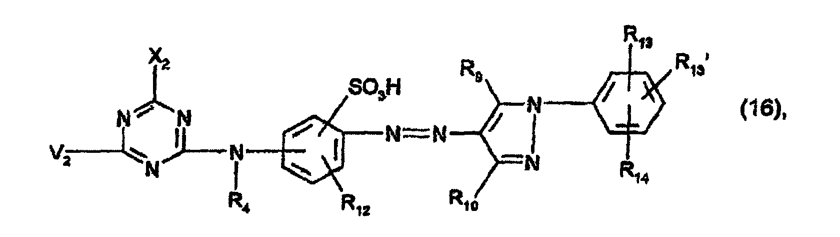 worin R₉ Hydroxy oder Amino, R₁₀ Methyl oder Carboxy ist,
R₁₂, R₁₃, R₁₃' und R₁₄ die oben für R₇ angegebenen Bedeutungen haben, und
R₄, X₂ und V₂ die in Anspruch 10 angegebenen Bedeutungen haben, verwendet,
und als sulfogruppenhaltigen, faserreaktiven, rotfärbenden Farbstoff mindestens einen Farbstoff der Formel 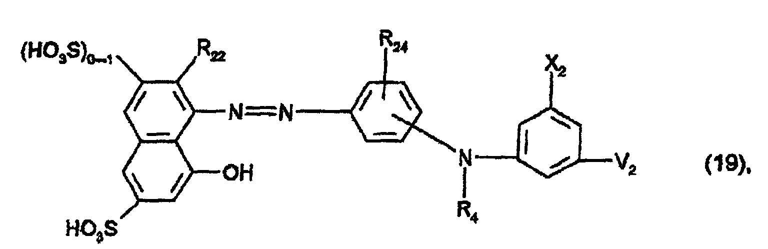 worin R₂₂ Amino oder N-Mono- oder N,N-Di-C₁-C₄-Alkylamino ist,
R₂₄ die oben für R₇ angegebenen Bedeutungen hat und
R₄, X₂ und V₂ die in Anspruch 10 angegebenen Bedeutungen haben, verwendet.

12. Verfahren gemäss einem der Ansprüche 10 und 11, **dadurch gekennzeichnet, dass**
R₄ Wasserstoff oder C₁-C₄-Alkyl und
V₂ ein Rest der Formel
-NH-(CH₂)₂₋₃-SO₂Z (3a),
-NH-(CH₂)₂₋₃-O-(CH₂)₂₋₃-SO₂Z (3b), 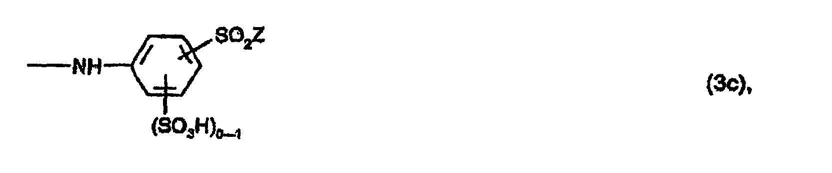 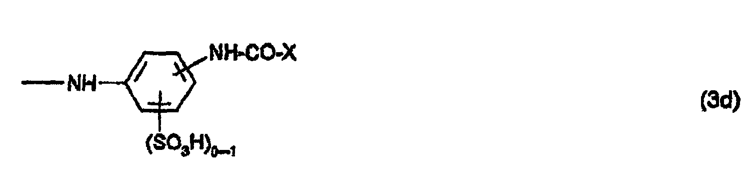
oder 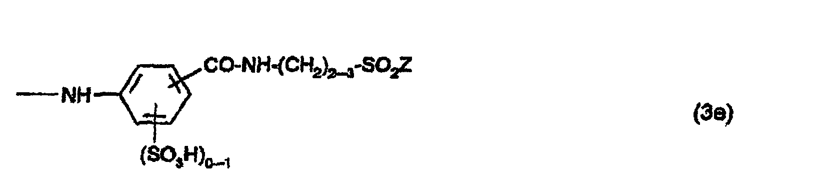 ist, worin
X der Rest 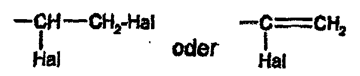 und Hal Brom oder Chlor ist und
Z der Rest-CH=CH₂ oder -CH₂-CH₂-Y und Y-Cl,-OSO₃H oder -OCO-CH₃ ist.

## Claims

1. A process for dichromatic or trichromatic dyeing or printing of natural or synthetic polyamide fibre material, which comprises using at least one blue-dyeing fibre-reactive anthraquinone dye of the formula 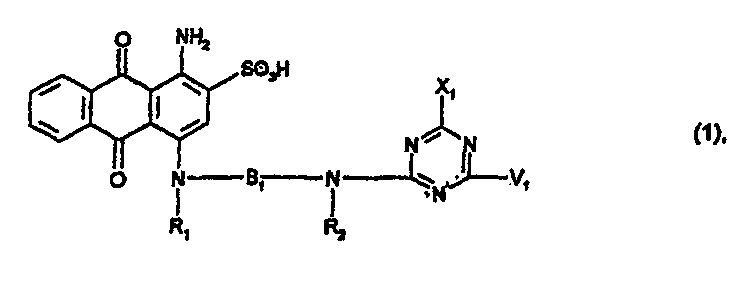 in which
R₁ and R₂ independently of one another are hydrogen or substituted or unsubstituted C₁-C₁₂alkyl,
X₁ is halogen,
B₁ is an organic bridge member and
V₁ is a radical of the formula 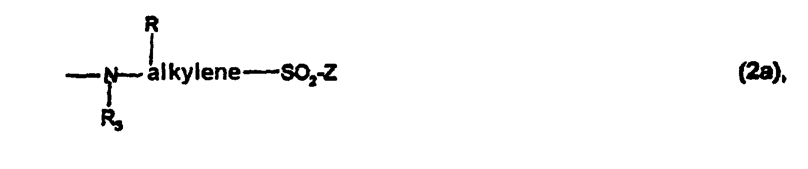 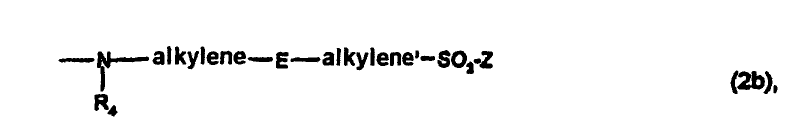 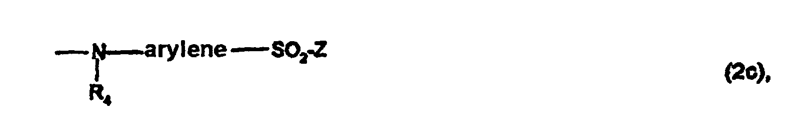 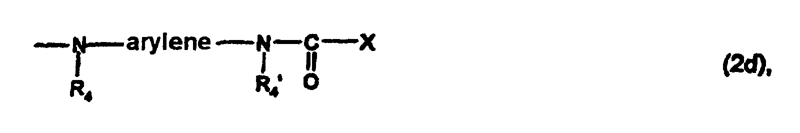 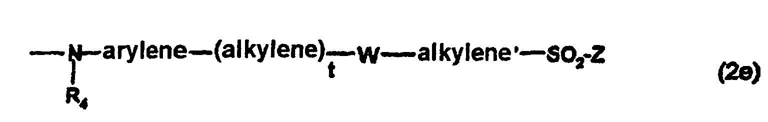 or 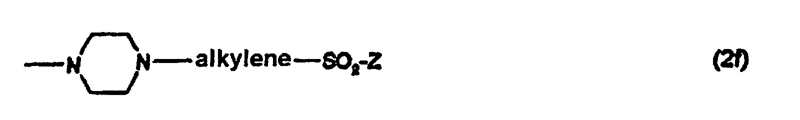 in which
W is a group of the formula -SO₂-NR₃-, -CONR₃- or -NR₃CO-,
R₃ is hydrogen, C₁-C₄alkyl which is unsubstituted or substituted by hydroxyl, sulfo, sulfato, carboxyl or cyano, or a radical of the formula 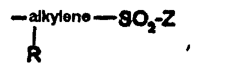 R is hydrogen, hydroxyl, sulfo, sulfato, carboxyl, cyano, halogen, C₁-C₄alkoxycarbonyl,
C₁-C₄alkanoyloxy, carbamoyl or the group -SO₂-Z,
Z is the radical -CH=CH₂ or -CH₂-CH₂-Y and Y is a leaving group,
X is the radical 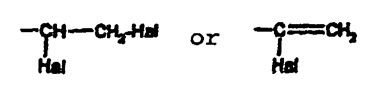 and Hal is halogen,
E is the radical -O- or -NR₅- and R₅ is hydrogen or C₁-C₄alkyl,
alkylene and alkylene' independently of one another are C₁-C₆alkylene,
arylene is a phenylene or naphthylene radical which is unsubstituted or substituted by sulfo, carboxyl, C₁-C₄alkyl, C₁-C₄alkoxy or halogen,
R₄ and R₄' independently of one another are hydrogen or C₁-C₄alkyl which is unsubstituted or substituted by carboxyl, cyano, hydroxyl, sulfo or sulfato and
t is the number 0 or 1,
together with at least one sulfo-containing fibre-reactive yellow- or orange-dyeing dye of the formulae 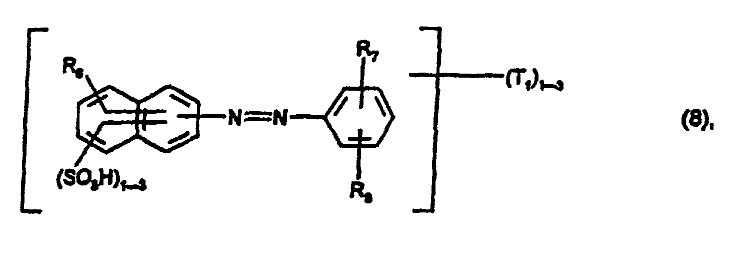 in which
R₆ is hydrogen, C₁-C₄alkyl, C₁-C₄alkoxy, C₂-C₄alkanoylamino. amino, N-mono- or N,N-di-C₁-C₄alkylamino, ureido, halogen, hydroxyl or carboxyl,-R₇ and R₈ independently of one another are hydrogen, C₁-C₄alkyl, C₁-C₄alkoxy, C₂-C₄-alkanoylamino, ureido, sulfamoyl, halogen, sulfo or carboxyl and (T₁)₁₋₃ is 1 to 3 identical or different fibre-reactive groups, 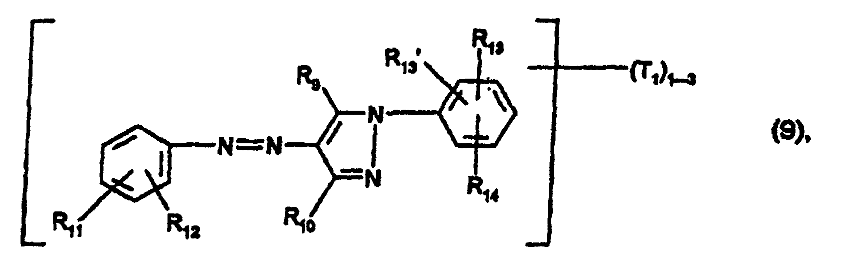 in which R₉ is hydroxyl or amino,
R₁₀ is methyl or carbonyl,
R₁₁, R₁₂ R₁₃, R₁₃' and R₁₄ are as defined above for R₇ and R₈ and
R₁₃' can additionally be β-hydroxyethylsulfonyl or a radical of the formula -SO₂Z,
and where Z is the radical -CH=CH₂ or -CH₂CH₂-Y
and Y is a leaving group,
(T₁)₁₋₃ is 1 to 3 identical or different fibre-reactive groups and
where the dye of the formula (9) contains at least one sulfo group, 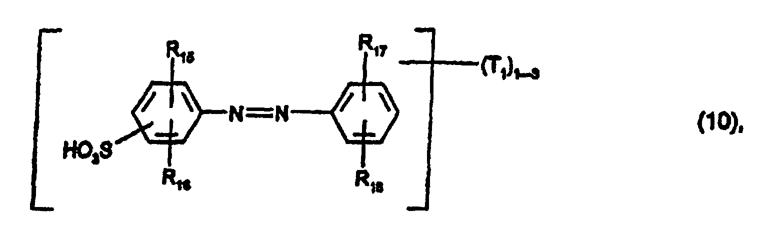 in which R₁₅, R₁₆, R₁₇ and R₁₈ are as defined above for R₇ and R₈ and (T₁)₁₋₃ is 1 to 3 identical or different fibre-reactive groups, and 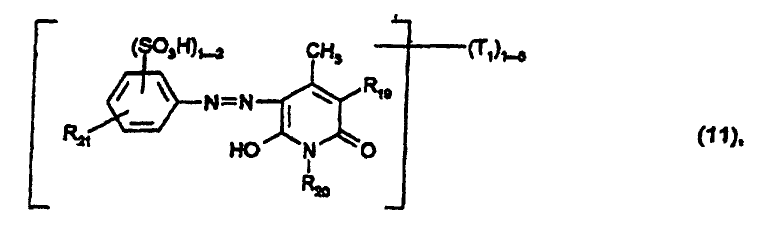 in which R₁₉ is sulfomethyl, carbamoyl or cyano,
R₂₀ is C₁-C₄alkyl,
R₂₁ is as defined above for R₇ and R₈ and
(T₁)₁₋₃ is 1 to 3 identical or different fibre-reactive groups, or
together with at least one sulfo-containing, fibre-reactive red-dyeing dye of the formulae 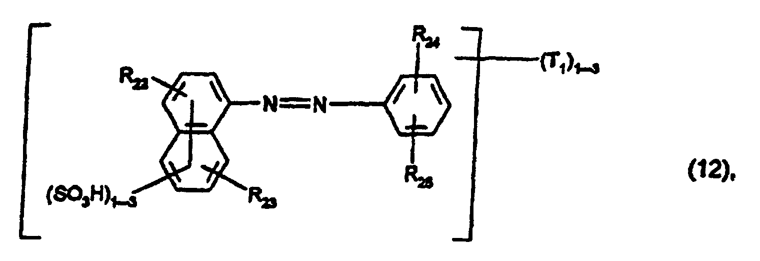 in which R₂₂ is hydrogen, amino or N-mono- or N-N-di-C₁-C₄alkylamino,
R₂₃ is hydrogen or hydroxyl,
R₂₄ and R₂₅ independently of one another are as defined above for R₇ and R₈ or are phenylsulfonyl which is unsubstituted or substituted by C₁-C₄alkyl, C₁-C₄alkoxy, C₂-C₄alkanoylamino, ureido, halogen, carboxyl or sulfo and
(T₁)₁₋₃ is 1 to 3 identical or different fibre-reactive groups and 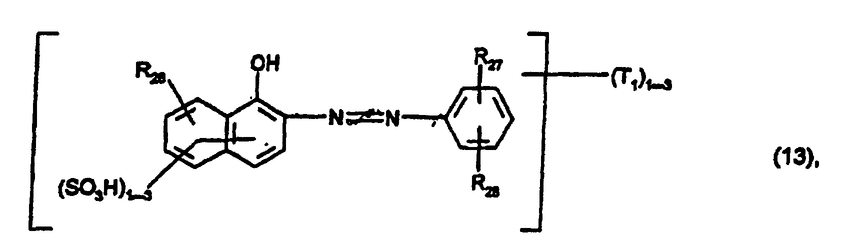 in which R₂₆ is hydrogen, C₁-C₄alkyl, C₁-C₄alkoxy, C₂-C₄alkanoylamino, amino, N-mono- or N,N-di-C₁-C₄alkylamino, ureido, halogen, carboxyl or phenylcarbonylamino, which is unsubstituted or further substituted in the phenyl ring by C₁-C₄alkyl, C₁-C₄alkoxy, C₂-C₄-alkanoylamino, ureido, halogen, carboxyl or sulfo,
R₂₇ and R₂₈ are as defined above for R₇ and R₈ and
(T₁)₁₋₃ is 1 to 3 identical or different fibre-reactive groups.

2. A process according to claim 1 for trichromatic dyeing or printing of natural or synthetic polyamide fibre material, wherein at least one blue-dyeing fibre-reactive anthraquinone dye of the formula (1) is used together with at least one sulfo-containing, fibre-reactive yellow- or orange-dyeing dye of formulae (8), (9), (10) and (11) according to claim 1, and
together with at least one sulfo-containing, fibre-reactive red-dyeing dye of formula (12) and (13) according to claim 1.

3. A process according to either of claims 1 and 2, wherein
R₁ and R₂ independently of one another are hydrogen or C₁-C₄alkyl which is unsubstituted or substituted by hydroxyl; sulfo or sulfato.

4. A process according to any one of claims 1 to 3, wherein
B₁ is a C₂-C₁₂alkylene radical which can be interrupted by 1, 2 or 3 members from the group consisting of -NH-, -N(CH₃)- or -O- and is unsubstituted or substituted by hydroxyl, sulfo, sulfato, cyano or carboxyl, or is a C₅-C₉cycloalkylene radical, C₁-C₄alkylene-C₅-C₉cycloalkylene radical or C₁-C₄alkylene-C₅-C₉cyclolkylene-C₁-₄alkylene radical, which are unsubstituted or substituted by C₁-C₄alklyl, C₁-C₄alkoxy, sulfo, halogen or carboxyl,
or is a phenylene radical, C₁-C₄alkylene-phenylene radical or C₁-C₄alkylene-phenylene-C₁-C₄alkylene radical, which are unsubstituted or substituted by C₁-C₄alkyl, C₁-C₄alkoxy, C₂-C₄alkanoylamino, sulfo, halogen or carboxyl.

5. A process according to any one of claims 1 to 4, wherein
B₁ is a C₂-C₆alkylene radical which can be interrupted by 1, 2 or 3 members -O- and is unsubstituted or substituted by hydroxyl or sulfato, or is a cyclohexylene radical or methylenecyclohexylene radical which is unsubstituted or substituted by C₁-C₄alkyl, or is a phenylene or methylene-phenylene-methylene radical which is unsubstituted or substituted by C₁-C₄alkyl, C₁-C₄alkoxy, halogen or sulfo.

6. A process according to claim 1, wherein
W is a group of the formula -CONH-,
R, R₃, R₄ and R₄' are hydrogen,
Y is -Cl, -OSO₃H or -OCO-CH₃,
Hal is chlorine or bromine,
E is the radical -O-,'
arylene is a phenylene radical which is unsubstituted or substituted by sulfo, carboxyl, C₁-C₄alkyl, C₁-C₄alkoxy or halogen, and
t is the number 0.

7. A process according to either of claims 1 and 6, wherein
V₁ is a radical of the formula (2b) or (2d) .

8. A process according to any one of claims 1 to 7, wherein
X₁ is fluorine or chlorine, in particular chlorine.

9. A process according to any one of claims 1 to 8, wherein the blue-dyeing fibre-reactive anthraquinone dye of the formula (1) used is an anthraquinone dye of the formula 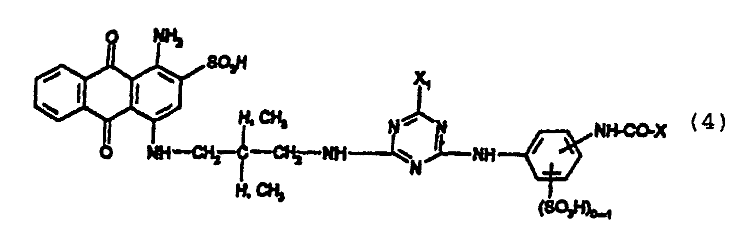 or 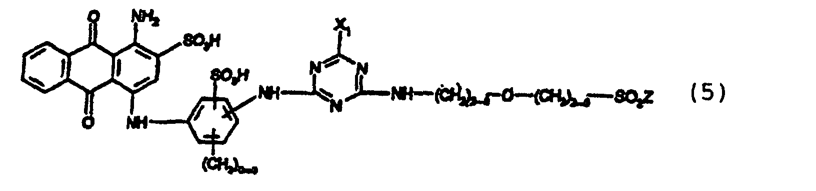 in which
X₁ is fluorine or chlorine,
X is the radical 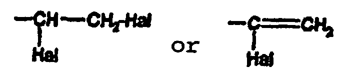 and
Hal is bromine or chlorine and
Z is the radical -CH=CH₂ or -CH₂-CH₂-Y and Y is -Cl, -OSO₃H or -OCO-CH₃.

10. A process according to claim 1, wherein
T₁ is a radical of the formula
-SO₂Z (6a), 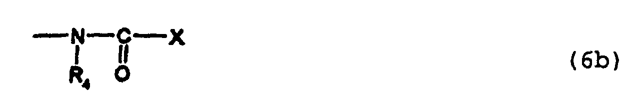
or 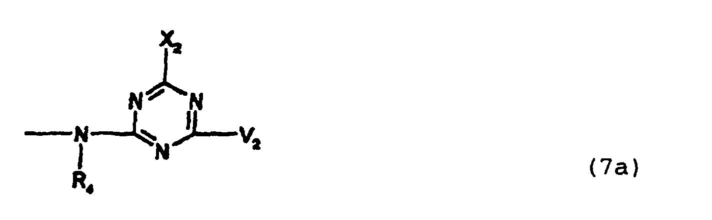 in which
Z is the radical -CH=CH₂ or -CH₂-CH₂-Y and
Y is a leaving group,
X is the radical 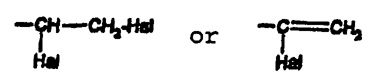 and Hal is halogen,
X₂ is fluorine or in particular chlorine,
R₄ is hydrogen or C₁-C₄alkyl which is unsubstituted or substituted by carboxyl, cyano, hydroxyl, sulfo or sulfato and
V₂ is a radical of the formula 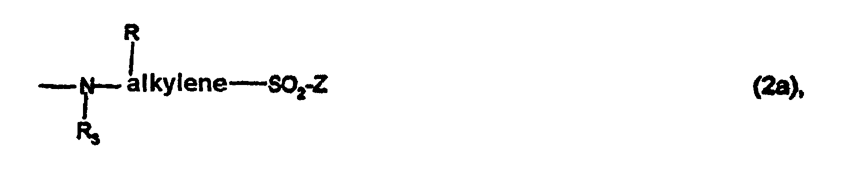 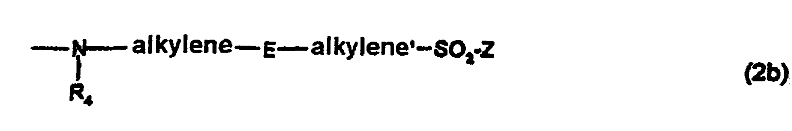 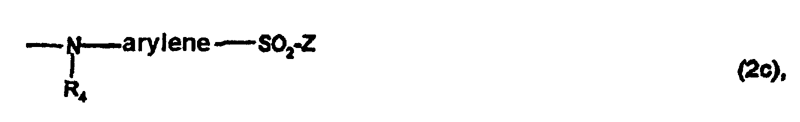 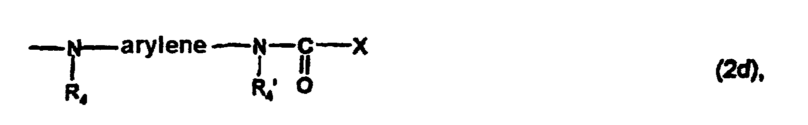 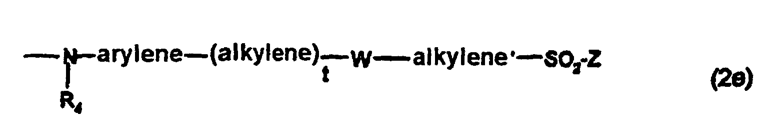 or 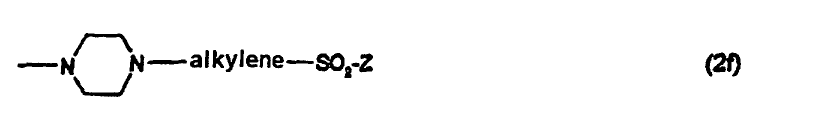 in which
W is a group of the formula -SO₂-NR₃-, -CONR₃- or -NR₃CO-,
R₃ is hydrogen, C₁-C₄alkyl which is unsubstituted or substituted by hydroxyl, sulfo, sulfato, carboxyl or cyano, or a radical of the formula 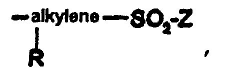 R is hydrogen, hydroxyl, sulfo, sulfato, carboxyl, cyano, halogen, C₁-C₄alkoxycarbonyl, C₁-C₄alkanoyloxy, carbamoyl or the group -SO₂-Z,
E is the radical -O- or -NR₅- and R₅ is hydrogen or C₁-C₄alkyl,
alkylene and alkylene' independently of one another are C₁-C₆alkylene,
arylene is a phenylene or naphthylene radical which is unsubstituted or substituted by sulfo, carboxyl, C₁-C₄alkyl, C₁-C₄alkoxy or halogen,
R₄' is as defined above for R₄,
Z and X are as defined above and
t is the number 0 or 1.

11. A process according to claim 10, wherein the sulfo-containing, fibre-reactive yellow- or orange-dyeing dye used is at least one of the dyes of the formulae 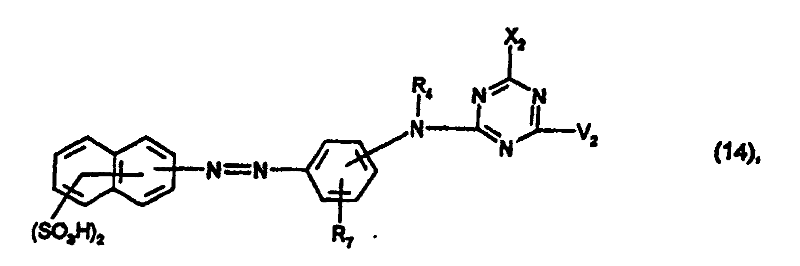 in which R₇ is hydrogen, C₁-C₄alkyl, C₁-C₄alkoxy, C₂-₄alkanoylamino, ureido, sulfamoyl, halogen, sulfo or carboxyl and
R₄, X₂ and V₂ are as defined in claim 10, and 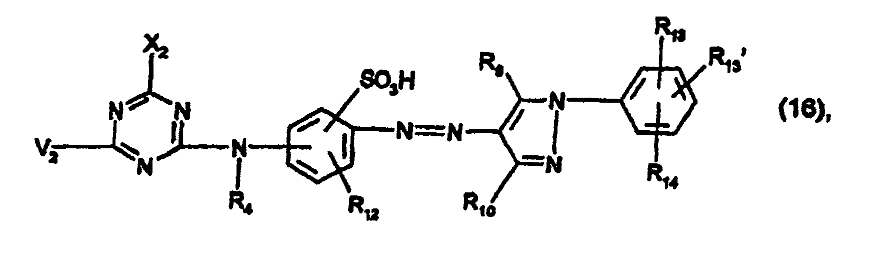 in which R₉ is hydroxyl or amino,
R₁₀ is methyl or carboxyl,
R₁₂, R₁₃, R₁₃' and R₁₄ are as defined above for R₇ and
R₄, X₂ and V₂ are as defined in claim 10,
and the sulfo-containing, fibre-reactive red-dyeing dye used is at least one dye of the formula 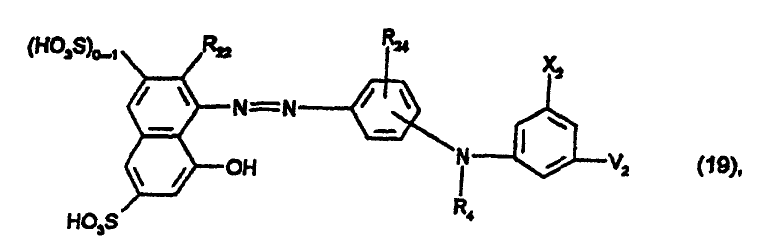 in which R₂₂ is amino or N-mono- or N,N-di-C₁-C₄alkylamino,
R₂₄ is as defined above for R₇ and
R₄, X₂ and V₂ are as defined in claim 10.

12. A process according to either of claims 10 and 11, wherein
R₄ is hydrogen or C₁-C₄alkyl and
V₂ is a radical of the formula
-NH-(CH₂)₂₋₃-SO₂Z (3a),
-NH-(CH₂)₂₋₃-O-(CH₂)₂₋₃-SO₂Z (3b), 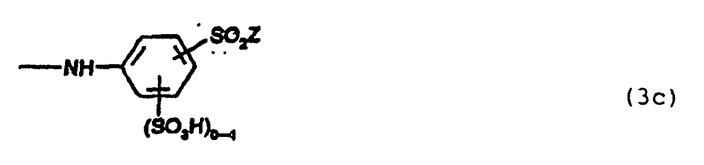 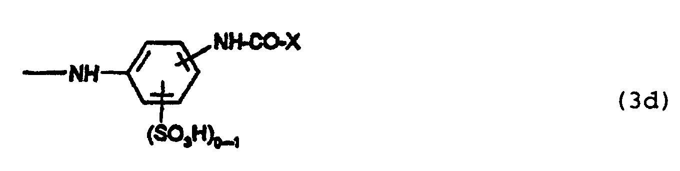
or 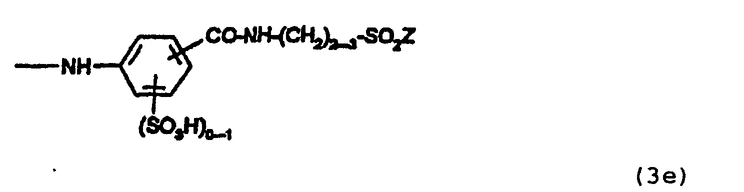 in which
X is the radical 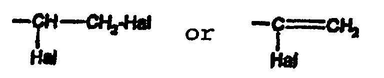 and Hal is bromine or chlorine, and
Z is the radical -CH=CH₂ or -CH₂CH₂-Y and
Y is -Cl, -OSO₃H or -OCO-CH₃.

## Revendications

1. Procédé pour la teinture ou l'impression en deux ou trois couleurs de matières fibreuses polyamides naturelles ou synthétiques, **caractérisé en ce qu'**on utilise au moins un colorant anthraquinonique réactif sur la fibre, qui teint en bleu, de formule 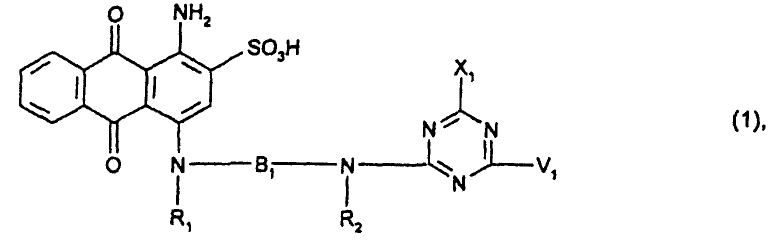 où
R₁ et R₂ représentent indépendamment l'un de l'autre un atome d'hydrogène ou un groupe alkyle en C₁-C₁₂, éventuellement substitué,
X₁ représente un atome d'halogène,
B₁ représente un élément de pontage organique et
V₁ représente un reste de formule 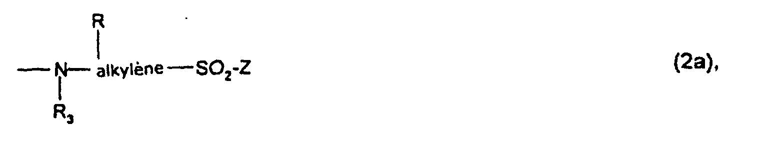 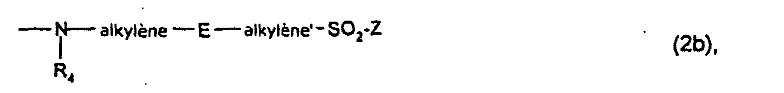 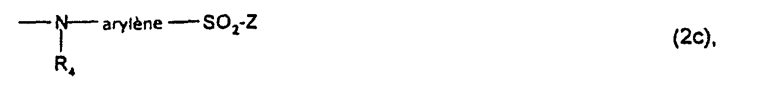 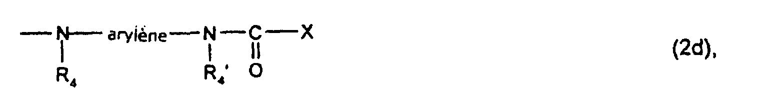 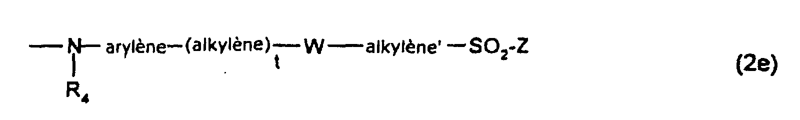 ou 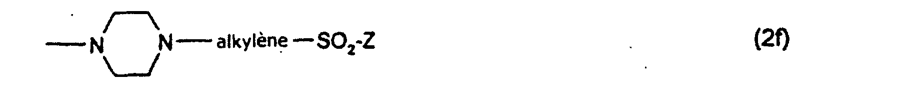
où
W représente un groupe de formule -SO₂-NR₃-, -CONR₃- ou -NR₃CO-,
R₃ représente un atome d'hydrogène, un groupe alkyle en C₁-C₄ non substitué ou substitué par des substituants hydroxy, sulfo, sulfato, carboxy ou cyano ou un reste de formule 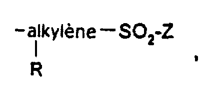
R représente un atome d'hydrogène, des groupes hydroxy, sulfo, sulfato, carboxy, cyano, halogène, (alkoxy en C₁-C₄)carbonyle, (alcanoyl en C₁-C₄)oxy, carbamoyle ou le groupe -SO₂-Z,
Z représente le reste 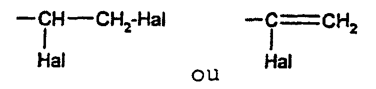 et
Hal représente un atome d'halogène,
E représente le reste -O- ou -NR₅- et R₅ représente un atome d'hydrogène ou un groupe alkyle en C₁-C₄,
alkylène et alkylène' représentent indépendamment l'un de l'autre un groupe alkylène en C₁-C₆,
arylène représente un reste phénylène ou naphtylène non substitué ou substitué par des substituants sulfo, carboxy, alkyle en C₁-C₄, alkoxy en C₁-C₄ ou halogène,
R₄ et R₄' représentent indépendamment l'un de l'autre, un atome d'hydrogène ou un groupe alkyle en C₁-C₄ non substitué ou substitué par des substituants carboxy, cyano, hydroxy, sulfo ou sulfato et
t vaut 0 ou 1,
conjointement avec au moins un colorant qui teint en jaune ou en orange, réactif sur la fibre, contenant des groupes sulfo, de formules 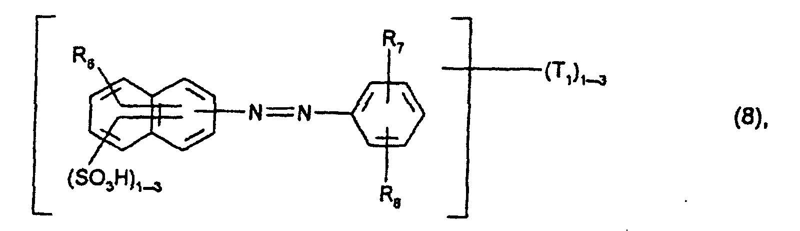 où
R₆ représente un atome d'hydrogène, des groupes alkyle en C₁-C₄, alkoxy en C₁-C₄, (alcanoyl en C₂-C₄)amino, amino, N-mono- ou N,N-di(alkyl en C₁-C₄)amino, uréido, halogène, hydroxy ou carboxy,
R₇ et R₈ représentent indépendamment l'un de l'autre un atome d'hydrogène, des groupes alkyle en C₁-C₄, alkoxy en C₁-C₉, (alcanoyl en C₂-C₄)amino, uréido, sulfamoyle, halogène, sulfo ou carboxy et
(T₁)₁₋₃ représente 1 à 3 groupes réactifs sur la fibre identiques ou différents, 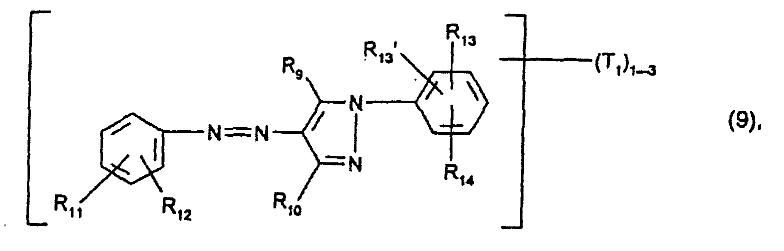
où
R₉ représente un groupe hydroxy ou amino,
R₁₀ représente un groupe méthyle ou carboxy,
R₁₁, R₁₂, R₁₃, R₁₃' et R₁₄ possèdent les significations données ci-dessus pour R₇ et R₈ et R₁₃' peut représenter de plus un groupe β-hydroxyéthylsulfonyle ou un reste de formule -SO₂Z et Z représentant le reste -CH=CH₂ ou -CH₂-CH₂-Y et Y est un groupe partant,
(T₁)₁₋₃ représente 1 à 3 groupes réactifs sur la fibre identiques ou différents et le colorant de formule (9) contenant au moins un groupe sulfo 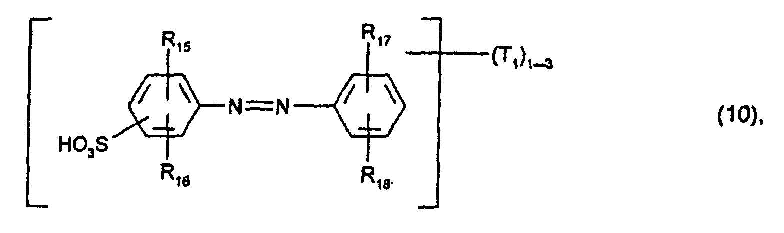
où
R₁₅, R₁₆, R₁₇ et R₁₈ possèdent les significations données ci-dessus pour R₇ et R₈ et
(T₁)₁₋₃ représente 1 à 3 groupes réactifs sur la fibre identiques ou différents et 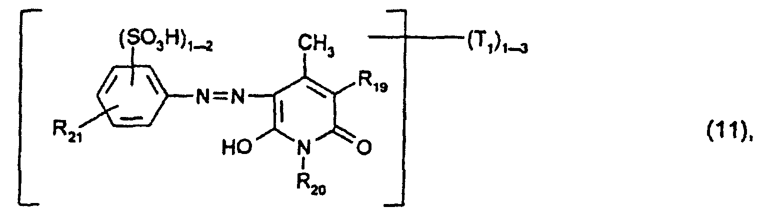
où
R₁₉ représente des groupes sulfométhyle, carbamoyle ou cyano,
R₂₀ représente un groupe alkyle en C₁-C₄,
R₂₁ possède les significations données ci-dessus pour R₇ et R₈ et
(T₁)₁₋₃ représente 1 à 3 groupes réactifs sur la fibre identiques ou différents, ou
conjointement avec au moins un colorant qui teint en rouge, réactif sur la fibre, contenant des groupes sulfo, de formules 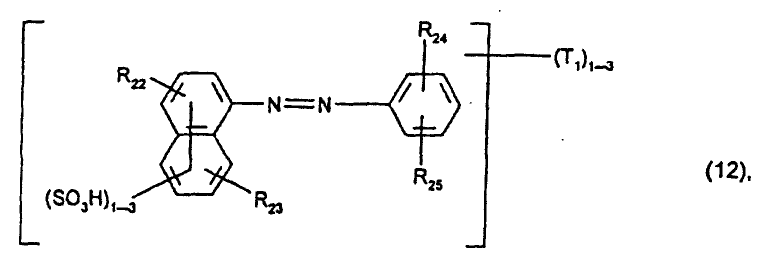 où
R₂₂ représente un atome d'hydrogène, des groupes amino ou N-mono- ou N,N-di(alkyl en C₁-C₄)amino,
R₂₃ représente un atome d'hydrogène ou un groupe hydroxy,
R₂₄ et R₂₅ indépendamment l'un de l'autre possèdent les significations données ci-dessus pour R₇ et R₈ ou représentent un groupe phénylsulfonyle éventuellement substitué par des substituants alkyle en C₁-C₄, alkoxy en C₁-C₄, (alcanoyl en C₂-C₉)amino, uréido, halogène, carboxy ou sulfo, et
(T₁)₁₋₃ représente 1 à 3 groupes réactifs sur la fibre identiques ou différents, et 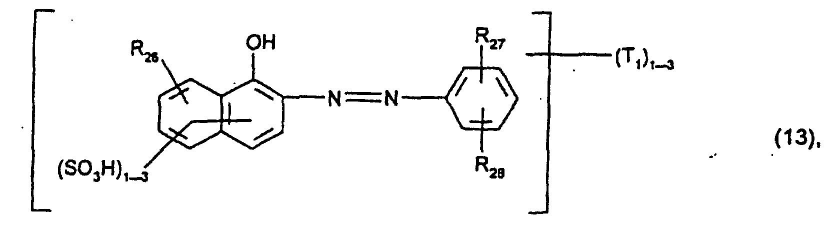
où
R₂₆ représente un atome d'hydrogène, des groupes alkyle en C₁-C₄, alkoxy en C₁-C₄, (alcanoyl en C₂-C₄)amino, amino, N-mono ou N,N-di-(alkyl en C₁-C₄)amino, uréido, halogène, carboxy ou phénylcarbonylamino, qui est éventuellement substitué davantage dans le cycle phényle par des substituants alkyle en C₁-C₄, alkoxy en C₁-C₄, (alcanoyl en C₂-C₄)amino, uréido, halogène, carboxy ou sulfo,
R₂₇ et R₂₈ possèdent les significations données ci-dessus pour R₇ et R₈ et
(T₁)₁₋₃ représente 1 à 3 groupes réactifs sur la fibre identiques ou différents.

2. Procédé selon la revendication 1 pour la teinture ou l'impression en trois couleurs de matières fibreuses polyamides naturelles ou synthétiques, **caractérisé en ce qu'**on utilise au moins un colorant anthraquinonique de formule (1) réactif sur la fibre, qui teint en bleu, conjointement avec au moins un colorant de formules (8), (9), (10) et (11) réactif sur la fibre, contenant des groupes sulfo, qui teint en jaune ou en orange selon la revendication 1 et conjointement avec au moins un colorant de formules (12) et (13) réactif sur la fibre, contenant des groupes sulfo, qui teint en rouge, selon la revendication 1.

3. Procédé selon l'une des revendications 1 et 2, **caractérisé en ce que** R₁ et R₂ représentent, indépendamment l'un de l'autre, un atome d'hydrogène ou un groupe alkyle en C₁-C₄ éventuellement substitué par des substituants hydroxy, sulfo ou sulfato.

4. Procédé selon l'une des revendications 1 à 3, **caractérisé en ce que** B₁ représente un reste alkylène en C₂-C₁₂, qui peut être interrompu par 1, 2 ou 3 chaînons pris dans le groupe comprenant -NH-, -N(CH₃)- ou -O- et qui est non substitué ou substitué par des substituants hydroxy, sulfo, sulfato, cyano ou carboxy, ou un reste cycloalkylène en C₅-C₉, un reste (alkylène en C₁-C₄)-cycloalkylène en C₅-C₉ ou un reste (alkylène en C₁-C₄)-cycloalkylène en C₅-C₉-(alkylène en C₁-C₄), qui sont éventuellement substitués par des substituants alkyle en C₁-C₄, alkoxy en C₁-C₄, hydroxy, sulfo, halogène ou carboxy, ou un reste phénylène, un reste (alkylène en C₁-C₄)phénylène ou un reste (alkylène en C₁-C₄)phénylène-alkylène en C₁-C₄, qui sont éventuellement substitués par des substituants alkyle en C₁-C₄, alkoxy en C₁-C₄, (alcanoyl en C₂-C₄)amino, sulfo, halogène ou carboxy.

5. Procédé selon l'une des revendications 1 à 4, **caractérisé en ce que** B₁ représente un reste alkylène en C₂-C₆, qui peut être interrompu par 1, 2 ou 3 chaînons -O- et qui est non substitué ou substitué par des substituants hydroxy ou sulfato, ou un reste cyclohexylène ou méthylènecyclohexylène éventuellement substitués par des substituants alkyle en C₁-C₄, ou un reste phénylène ou méthylène-phénylène-méthylène qui est éventuellement substitué par des substituants alkyle en C₁-C₄, alkoxy en C₁-C₄, halogène ou sulfo.

6. Procédé selon la revendication 1, **caractérisé en ce que**
W représente un groupe de formule -CONH-,
R, R₃, R₄ et R₄' représentent un atome d'hydrogène,
Y représente des groupes -Cl, -OSO₃H ou -OCO-CH₃,
Hal représente un atome de chlore ou de brome,
E représente le reste -O-,
arylène représente un reste phénylène non substitué ou substitué par des substituants sulfo, carboxy, alkyle en C₁-C₄, alkoxy en C₁-C₄ ou halogène, et
t vaut 0.

7. Procédé selon l'une des revendications 1 et 6, **caractérisé en ce que** V₁ représente un reste de formule (2b) ou (2d).

8. Procédé selon l'une des revendications 1 à 7, **caractérisé en ce que**
X₁ représente un atome de fluor ou de chlore, en particulier de chlore.

9. Procédé selon l'une des revendications 1 à 8, **caractérisé en ce qu'**on utilise en tant que colorant anthraquinonique de formule (1) réactif sur la fibre, qui teint en bleu, un colorant anthraquinonique de formules 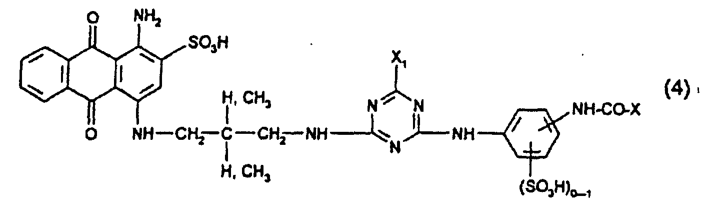 ou 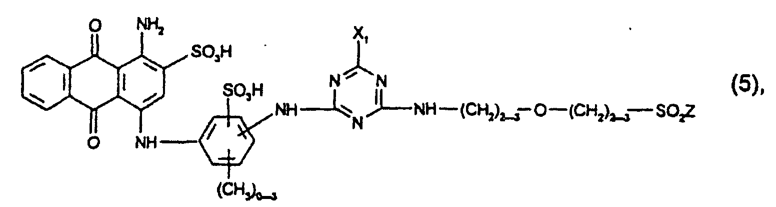 où
X₁ représente un atome de fluor ou de chlore,
X représente le reste 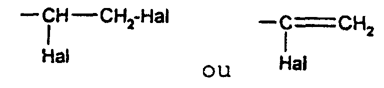 et Hal représente un atome de brome et de chlore et
Z représente le reste -CH=CH₂ ou -CH=CH₂-Y et
Y représente des groupes -Cl, -OSO₃H ou -OCO-CH₃.

10. Procédé selon la revendications 1, **caractérisé en ce que**
T₁ représente un reste de formule
-SO₂Z (6a), 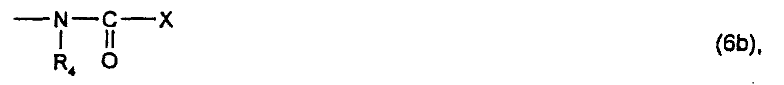
ou 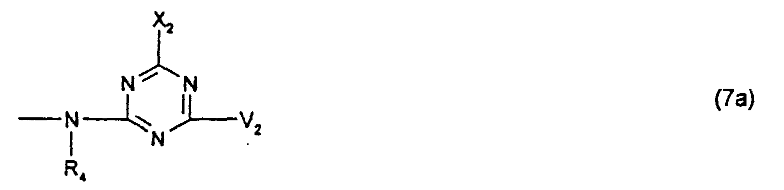 où
Z représente le reste -CH=CH₂ ou -CH=CH₂-Y et Y est un groupe partant,
X représente le reste 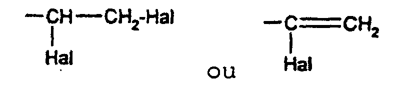 et Hal représente un atome d'halogène,
X₂ représente un atome de fluor et en particulier de chlore
R₄ représente un atome d'hydrogène ou un groupe alkyle en C₁-C₄ non substitué ou substitué par des substituants carboxy, cyano, hydroxy, sulfo ou sulfato, et
V₂ représente un reste de formule 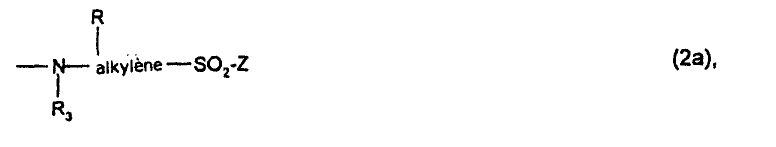 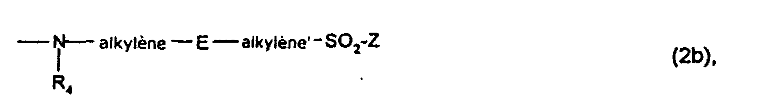 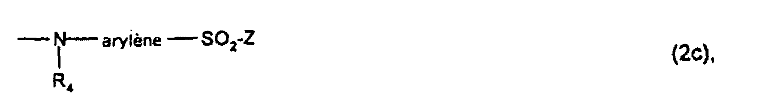 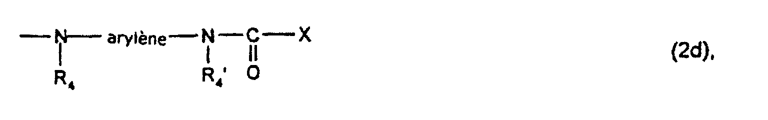 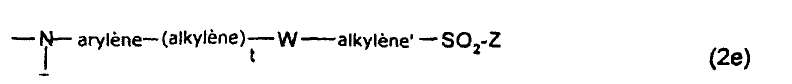
ou 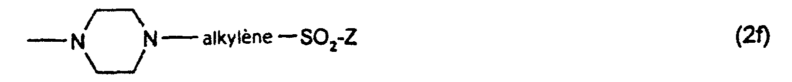 où
W représente un groupe de formule -SO₂-NR₃-, -CONR₃- ou -NR₃CO-,
R₃ représente un atome d'hydrogène, un groupe alkyle en C₁-C₄ non substitué ou substitué par des substituants hydroxy, sulfo, sulfato, carboxy ou cyano, ou un reste de formule 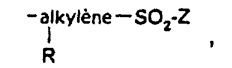
R représente un atome d'hydrogène, des groupes hydroxy, sulfo, sulfato, carboxy, cyano, halogène, (alkoxy en C₁-C₄)carbonyle, (alcanoyl en C₁-C₄)oxy, carbamoyle ou le groupe -SO₂-Z,
E représente le reste -O- ou -NR₅- et R₅ représente un atome d'hydrogène ou un groupe alkyle en C₁-C₄,
alkylène et àlkylène' représentent indépendamment l'un de l'autre un groupe alkylène en C₁-C₆,
arylène représente un reste phénylène ou naphtylène non substitué ou substitué par des substituants sulfo, carboxy, alkyle en C₁-C₄, alkoxy en C₁-C₄ ou halogène,
R₄' possède les significations données ci-dessus pour R₄,
Z et X possèdent les significations données ci-dessus, et
t vaut 0 ou 1,

11. Procédé selon la revendication 10, **caractérisé en ce qu'**on utilise, en tant que colorant réactif sur la fibre, contenant des groupes sulfo, qui teint en jaune ou en orange, au moins un des colorants de formules 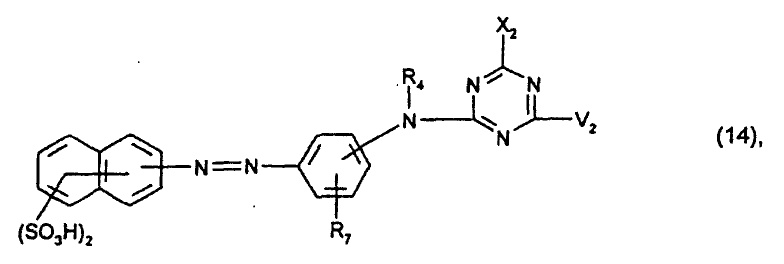 où
R₇ représente un atome d'hydrogène, des groupes alkyle en C₁-C₄, alkoxy en C₁-C₄, (alcanoyl en C₂-C₄)-amino, uréido, sulfamoyle, halogène, sulfo ou carboxy, et
R₄, X₂ et V₂ possèdent les significations données à la revendication 10, et 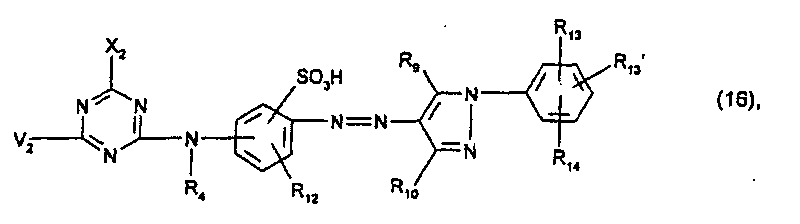
où
R₉ représente un groupe hydroxy ou amino,
R₁₀ représente un groupe méthyle ou carboxy,
R₁₂, R₁₃, R₁₃' et R₁₄ possèdent les significations données ci-dessus pour R₇ et
R₄, X₂ et V₂ possèdent les significations données à la revendication 10 et
en tant que colorant qui teint en rouge, réactif sur la fibre, contenant des groupes sulfo, au moins un colorant de formule 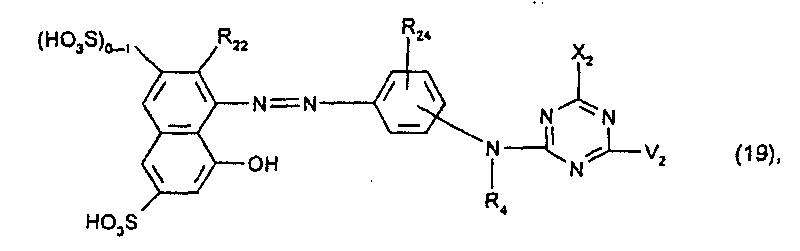 où
R₂₂ représente un groupe amino ou N-mono-ou N,N-di(alkyl en C₁-C₄)amino,
R₂₄ possède les significations données ci-dessus pour R₇ et
R₄, X₂ et V₂ possèdent les significations données à la revendication 10.

12. Procédé selon l'une des revendications 10 et 11, **caractérisé en ce que**
R₄ représente un atome d'hydrogène ou un groupe alkyle en C₁-C₄ et
V₂ représente un reste de formule
-NH-(CH₂)₂₋₃-SO₂Z (3a)
-NH-(CH₂)₂₋₃-O-(CH₂)₂₋₃-SO₂Z (3b) 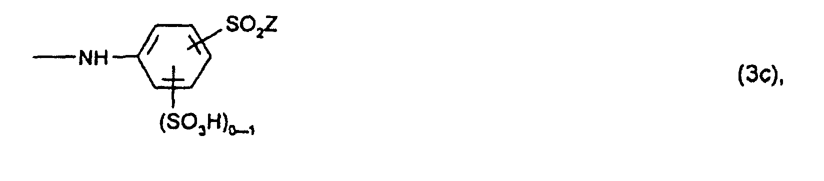 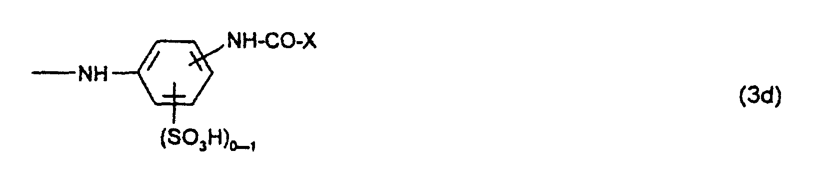
ou 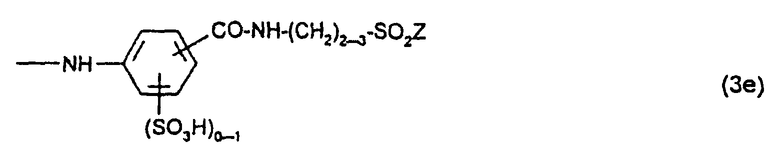 où
X représente le reste de formule 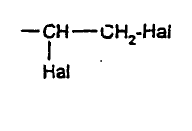 ou 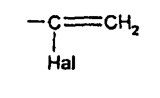 et
Hal représente un atome de brome ou de chlore et
Z représente le reste -CH=CH₂ ou -CH₂CH₂-Y et
Y représente des groupes -Cl, -OSO₃H ou -OCO-CH₃.
